(19)

**Europäisches Patentamt**
**European Patent Office**
**Office européen des brevets**

(11) **EP 4 439 391 B1**

(12) **EUROPEAN PATENT SPECIFICATION**

(45) Date of publication and mention
of the grant of the patent:
**25.03.2026  Bulletin 2026/13**

(21) Application number: **21969624.2**

(22) Date of filing: **30.12.2021**

(51) International Patent Classification (IPC):
*G06N 3/08* (2023.01)      *G06F 8/41* (2018.01)

(52) Cooperative Patent Classification (CPC):
**G06N 3/08; G06F 8/443; G06F 8/4442**

(86) International application number:
**PCT/CN2021/143304**

(87) International publication number:
**WO 2023/123266 (06.07.2023 Gazette 2023/27)**

(54) **SUBGRAPH COMPILATION METHOD, SUBGRAPH EXECUTION METHOD AND RELATED DEVICE**

SUBGRAPHENKOMPILIERUNGSVERFAHREN, SUBGRAPHENAUSFÜHRUNGSVERFAHREN UND ZUGEHÖRIGE VORRICHTUNG

PROCÉDÉ DE COMPILATION DE SOUS-GRAPHE, PROCÉDÉ D'EXÉCUTION DE SOUS-GRAPHE ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.10.2024  Bulletin 2024/40**

(73) Proprietor: Huawei Technologies Co., Ltd.
**Shenzhen, Guangdong 518129 (CN)**

(72) Inventors:
• **JIAO, Jianbing**
  **Shenzhen, Guangdong 518129 (CN)**
• **XU, Shifeng**
  **Shenzhen, Guangdong 518129 (CN)**
• **FAN, Li**
  **Shenzhen, Guangdong 518129 (CN)**
• **LIN, Jiashu**
  **Shenzhen, Guangdong 518129 (CN)**

(74) Representative: **Körber, Martin Hans**
**Mitscherlich PartmbB**
**Karlstraße 7**
**80333 München (DE)**

(56) References cited:
CN-A- 110 689 116      CN-A- 111 160 551
CN-A- 111 338 635      CN-A- 112 711 478
US-A1- 2013 291 113

• ZHANG MINJIA ET AL: "DUET: A Compiler-Runtime Subgraph Scheduling Approach for Tensor Programs on a Coupled CPUGPU Architecture", 2021 IEEE INTERNATIONAL PARALLEL AND DISTRIBUTED PROCESSING SYMPOSIUM (IPDPS), IEEE, 17 May 2021 (2021-05-17), pages 151 - 161, XP033933927, DOI: 10.1109/IPDPS49936.2021.00024
• TIANQI CHEN ET AL: "TVM: An Automated End-to-End Optimizing Compiler for Deep Learning", ARXIV.ORG, CORNELL UNIVERSITY LIBRARY, 201 OLIN LIBRARY CORNELL UNIVERSITY ITHACA, NY 14853, 12 February 2018 (2018-02-12), XP081231900
• ZHEN ZHENG ET AL: "FusionStitching: Boosting Memory Intensive Computations for Deep Learning Workloads", ARXIV.ORG, CORNELL UNIVERSITY LIBRARY, 201 OLIN LIBRARY CORNELL UNIVERSITY ITHACA, NY 14853, 23 September 2020 (2020-09-23), XP081769394

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

This application relates to the field of artificial intelligence technologies, and in particular, to a subgraph compilation method, a subgraph execution method, and a related device.

## BACKGROUND

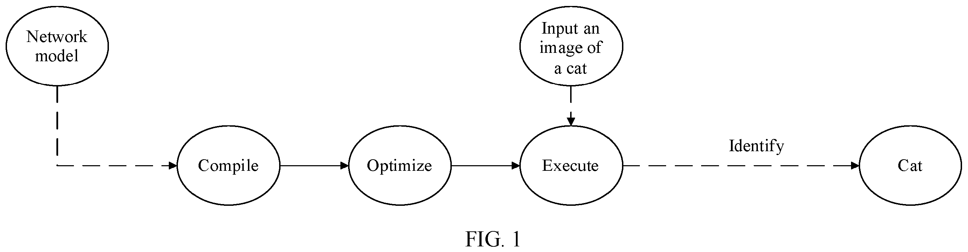

A neural network model can implement functions such as training and inference of the neural network model only after being compiled by using software and then executed on hardware. As shown in FIG. 1, a target detection network model is used as an example. The target detection network model can accurately identify an input image of a cat after steps such as model parsing, model compilation, model optimization, and model execution.

With the continuous development of neural network technologies, much hardware for processing deep neural networks (deep neural networks, DNNs) emerges, for example, accelerated linear algebra (accelerated linear algebra, XLA) and TensorRT, and the hardware supports hardware acceleration processing on various neural network models. XLA is a compiler that accelerates running of a TensorFlow-based program, and compiles a computation graph of a neural network model into binary execution code (computation kernels) of an operator dedicated to the neural network model; and XLA performs targeted optimization based on information about the current model in a process of obtaining the binary execution code of the operator through compilation. TensorRT is an inference engine (inference engine) used in a Nvidia image processor (Nvidia GPU), and an overall process includes three steps of model parsing (parser), engine optimization, and execution (execution). In addition, in some technologies, a computation graph of a neural network model is segmented into a plurality of subgraphs in a stream (stream)-based manner, and the plurality of subgraphs are correspondingly executed in a plurality of streams. Nodes (nodes) in the streams are executed in sequence, and only nodes between the streams may be concurrently executed. As a result, the computation graph has low execution concurrency. A node in the computation graph represents an operator or an execution operator of the neural network model. Further, when the computation graph is executed in the stream-based manner, a node/task (task) is used as a scheduling unit, and therefore scheduling time is long. A task is an executable file that is obtained by compiling a node and that is used to execute an operator represented by the node.

ZHANG MINJIA ET AL: "DUET: A Compiler-Runtime Subgraph Scheduling Approach for Tensor Programs on a Coupled CPUGPU Architecture", 2021 IEEE INTERNATIONAL PARALLEL AND DISTRIBUTED PROCESSING SYMPOSIUM (IPDPS), IEEE, pages 151-161, discloses a DNN inference engine that is powered by a coarse-grained graph partitioning, a compiler-aware profiling, and a profiling-based online subgraph scheduling algorithm.

TIANQI CHEN ET AL: "TVM: An Automated End-to-End Optimizing Compiler for Deep Learning", discloses an end-to-end compilation stack that exposes graph-level and operator-level optimizations.

## SUMMARY

Embodiments of this application provide a subgraph compilation method, a subgraph execution method, and a related device, to reduce scheduling time. The invention is defined in the appended claims. In the following, parts of the description and drawings referring to embodiments which are not covered by the claims are not embodiments of the invention, but are examples useful for understanding the invention.

According to a first aspect, an embodiment of this application provides a subgraph compilation method, including: obtaining a first subgraph, where the first subgraph is any one of a plurality of subgraphs obtained by segmenting a computation graph, and the first subgraph includes a plurality of first nodes and directed edges between the plurality of first nodes; reconstructing the first subgraph to obtain a first reconstructed subgraph, where the first reconstructed subgraph includes at least one first reconstructed node and directed edges between the at least one first reconstructed node; and compiling a first target reconstructed node, to obtain compiled data of the first target reconstructed node, where the first target reconstructed node is any one of the at least one first reconstructed node, the first target reconstructed node includes M first nodes in the plurality of first nodes and directed edges between the M first nodes, and M is a positive integer. The compiled data of the first target reconstructed node includes compiled data of the M first nodes. It should be understood that a directed edge in a computation graph includes a data edge and a control edge. The directed edge described in this application also includes a data edge and a control edge. For example, the directed edges between the plurality of first nodes include data edges between the plurality of first nodes and control edges between the plurality of first nodes.

In this embodiment of this application, the computation graph is segmented into the plurality of subgraphs, any subgraph in the plurality of subgraphs is reconstructed to obtain a reconstructed subgraph, and then any reconstructed node in the reconstructed subgraph is compiled by using a reconstructed node in the reconstructed subgraph as a scheduling unit. It should be noted that the reconstructed subgraph obtained in this application includes at least one reconstructed node and directed edges between the at least one reconstructed node. Therefore, the reconstructed subgraph obtained in this application is essentially a subgraph. In addition, because any reconstructed node in the reconstructed subgraph includes one or more nodes in the any subgraph and directed edges between the one or more nodes, the reconstructed node is essentially a subgraph whose size is smaller than that of the any subgraph. During subgraph compilation, using a reconstructed node as a scheduling unit essentially indicates a graph scheduling mechanism, and scheduling one reconstructed node for compilation at a time is equivalent to scheduling one or more nodes in the any subgraph for compilation at a time. Compared with a manner of using a node (for example, a computing node) in the any subgraph as a scheduling unit and scheduling one node in the any subgraph at a time, a manner of using the reconstructed node as the scheduling unit during subgraph compilation can reduce scheduling time. Further, compiled data, of the any reconstructed node, obtained by compiling the any reconstructed node is used to execute the one or more nodes in the any subgraph. In this application, a reconstructed node is used as a scheduling unit when the subgraph is executed. Because the reconstructed node includes a plurality of nodes, it is equivalent to that a plurality of nodes are scheduled at a time. Compared with the manner of using the node (for example, the computing node) in the any subgraph as the scheduling unit, this application can significantly reduce the scheduling time.

In a possible implementation, the compiling a first target reconstructed node, to obtain compiled data of the first target reconstructed node includes: dividing each of the M first nodes into at least one first child node, to obtain a first thread-level subgraph, where the first thread-level subgraph includes N first child nodes and directed edges between the N first child nodes, and N is a positive integer greater than or equal to M; and compiling the first thread-level subgraph, to obtain the compiled data of the first target reconstructed node. The compiled data of the first target reconstructed node includes compiled data of the N first child nodes. It should be noted that the child node described in this application is obtained by performing thread division on a node. One node is divided into at least one child node, each of the at least one child node is one thread, and the at least one child node may be concurrently executed.

In this implementation, when the any reconstructed node is compiled, an operator operation represented by each of the M first nodes is divided into at least one thread, and each of the at least one thread is represented by one child node. The N first child nodes are obtained after thread division is performed on the M first nodes. Executing the N first child nodes is equal to executing the M first nodes, and at least one first child node obtained by dividing a same first node may be concurrently executed. In this way, when the compiled data of the N first child nodes is scheduled to execute the N first child nodes, first child nodes obtained by dividing a same first node in the N first child nodes can be concurrently executed. This reduces execution time of each of the M first nodes, that is, reduces total execution time of the M first nodes, and improves performance.

In a possible implementation, the compiled data of the first target reconstructed node includes compiled data of a first object, the first object is one of the M first nodes or one of the N first child nodes, and the compiled data of the first object includes at least one of the following: a storage location, a life cycle, and cache management operation (cache management operation, CMO) indication information of input data of the first object, a storage location, a life cycle, and cache management operation indication information of output data of the first object, a dependency relationship of the first object, and a type of a computation apparatus for executing the first object.

In this implementation, one or more pieces of information such as a data storage location, a life cycle and cache management operation indication information of input data of any node or child node or output data of any node or child node, a dependency relationship of the any node or child node, and a type of a computation apparatus for executing the any node or child node can be compiled into compiled data of the any node or child node. This facilitates execution of the any node or child node, and improves performance.

In a possible implementation, the first object is one of the N first child nodes, the compiled data of the first object further includes a second object that is concurrently executed with the first object, the second object is one of the N first child nodes, and the second object and the first object are obtained by dividing a same first node.

In this implementation, information about another child node that is concurrently executed with any child node can be compiled into compiled data of the any child node. In this way, the any child node and the another child node are concurrently executed.

In a possible implementation, the cache management operation indication information of the input data of the first object indicates at least one of the following: before the first object is executed, writing target input data from a memory to a cache, where the input data of the first object includes the target input data, the target input data is not output data of a first node in the first target reconstructed node, or the target input data is not output data of a first child node in the first thread-level subgraph; and after the target input data is input into a first node in the first target reconstructed node for a first preset quantity of times, or after the target input data is input into a first child node in the first thread-level subgraph for the first preset quantity of times, deleting the target input data in the cache.

In this implementation, if input data of any node in a reconstructed node includes target input data coming from outside of the reconstructed node, cache management operation indication information of the input data of the node needs to indicate, before the node is executed, to write the target input data into a cache from a memory, so that the node can be executed. Optionally, the cache management operation indication information of the input data of the node may further indicate, after the target input data does not need to be used as input data of another node in the reconstructed node, to delete the target input data in the cache, so as to appropriately release cache space. Similarly, if input data of any child node in a thread-level subgraph includes target input data coming from outside of the thread-level subgraph, cache management operation indication information of the input data of the child node needs to indicate, before the child node is executed, to write the target input data into the cache from a memory, so that the child node can be executed. Optionally, the cache management operation indication information of the input data of the child node may further indicate, after the target input data does not need to be used as input data of another child node in the thread-level subgraph, to delete the target input data in the cache, so as to appropriately release cache space.

In a possible implementation, the cache management operation indication information of the output data of the first object indicates at least one of the following: writing the output data of the first object into a memory; after the output data of the first object is written into the memory, deleting the output data of the first object in a cache; and after the output data of the first object is input into the first node in the first target reconstructed node for a second preset quantity of times, or after the output data of the first object is input into the first child node in the first thread-level subgraph for the second preset quantity of times, deleting the output data of the first object in the cache.

In this implementation, cache management operation indication information of output data of any node in a reconstructed node optionally indicates: to write the output data of the node into a memory, so that the output data of the node is used for other purposes; and after the output data of the node is written into the memory or after the output data of the node does not need to be used as input data of another node in the reconstructed node, to delete the output data of the node from a cache, so as to appropriately release cache space. Similarly, cache management operation indication information of output data of any child node in a thread-level subgraph optionally indicates: to write the output data of the child node into a memory, so that the output data of the child node is used for other purposes; and after the output data of the child node is written into the memory or after the output data of the child node does not need to be used as input data of another child node in the thread-level subgraph, to delete the output data of the child node in the cache, so as to appropriately release cache space.

In a possible implementation, the dependency relationship of the first object includes a quantity of nodes on which the first object depends and a node that depends on the first object, or a quantity of child nodes on which the first object depends and a child node that depends on the first object.

In this implementation, a dependency relationship of any node in a reconstructed node includes a quantity of nodes on which the node depends. When the node is executed, when the quantity of nodes on which the node depends is decreased to 0, the node may be executed. In addition, the dependency relationship of the node further includes another node that depends on the node. In this way, an execution sequence of nodes in the reconstructed node can be controlled. Similarly, a dependency relationship of any child node in a thread-level subgraph includes a quantity of child nodes on which the child node depends. When the child node is executed, when the quantity of child nodes on which the child node depends is decreased to 0, the child node may be executed. In addition, the dependency relationship of the child node further includes another child node that depends on the child node. In this way, an execution sequence of child nodes in the thread-level subgraph can be controlled.

In a possible implementation, the dependency relationship of the first object includes a first dependency relationship of the first object, and the first dependency relationship of the first object represents a directed edge between the first object and a third object; and if the first object is one of the M first nodes, the third object is one of the M first nodes; or if the first object is one of the N first child nodes, the third object is one of the N first child nodes, and the third object and the first object are obtained by dividing different first nodes.

In this implementation, directed edges between nodes in a reconstructed node may be represented as a dependency relationship between the nodes during compilation, for example, represented as a first dependency relationship between the nodes. This implements representation of the directed edges between the nodes in the reconstructed node. Similarly, directed edges between child nodes in a thread-level subgraph may be represented as dependency relationships between the child nodes during compilation, for example, represented as first dependency relationships between the child nodes. This implements representation of the directed edges between the child nodes in the thread-level subgraph. The directed edges between the child nodes in the thread-level subgraph mainly indicate directed edges between child nodes obtained by dividing different nodes.

In a possible implementation, the output data of the first object is input data of a fourth object, the first object is executed by a first computation apparatus, the fourth object is executed by a second computation apparatus, the dependency relationship of the first object further includes a second dependency relationship of the first object, the second dependency relationship of the first object represents a directed edge between the first object and a first communication operator node, and the output data of the first object is transmitted by the first communication operator node from the first computation apparatus to the second computation apparatus. If the first object is one of the M first nodes, the fourth object is a first target node in a second target reconstructed node, where the second target reconstructed node is a first reconstructed node other than the first target reconstructed node in the at least one first reconstructed node, and the first target node is a first node other than the M first nodes in the plurality of first nodes; or the second target reconstructed node is any second reconstructed node in a second reconstructed subgraph, the second reconstructed subgraph is obtained by performing reconstruction on a second subgraph, the second subgraph is a subgraph other than the first subgraph in the plurality of subgraphs, and the first target node is a second node in the second subgraph. Alternatively, if the first object is one of the N first child nodes, the fourth object is a second child node in a second thread-level subgraph, where the second thread-level subgraph is obtained by dividing each first target node in the second target reconstructed node into at least one second child node, the second thread-level subgraph includes P second child nodes and directed edges between the P second child nodes, and P is a positive integer. It should be noted that in this application, some communication operators, for example, set communication operators, are used to implement data communication between a plurality of computation apparatuses (for example, a plurality of chips or a plurality of processors) and a plurality of servers (servers). In this application, data can be transmitted from the first computation apparatus to the second computation apparatus via a first set communication operator, that is, the first communication operator node is a node representing the first set communication operator. A set communication operator may be represented as a set communication operator node, and therefore the first communication operator node is a first set communication operator node. In addition, the set communication operator node may be divided into threads like a node in a computation graph, a subgraph, or a reconstructed node. It should be further noted that a manner of obtaining the second reconstructed subgraph is the same as a manner of obtaining the first reconstructed subgraph in this application.

In this implementation, distributed execution can be performed on a plurality of reconstructed nodes. Two reconstructed nodes and two computation apparatuses are used as an example. One reconstructed node is executed by one computation apparatus, and the other reconstructed node is executed by the other computation apparatus. The two reconstructed nodes may be reconstructed nodes in a same reconstructed subgraph, or may be reconstructed nodes in different reconstructed subgraphs. If output data of a node in one reconstructed node is input data of a node in the other reconstructed node, the output data of the node in the one reconstructed node needs to be transmitted from one computation apparatus to the other computation apparatus. In this application, the set communication operator node can be used to transmit the output data of the node in the reconstructed node from the computation apparatus to the other computation apparatus. Because the set communication operator node can transmit the output data of the node in the reconstructed node from the computation apparatus to the other computation apparatus as the input data of the node in the other reconstructed node, there is a directed edge between the node in the reconstructed node and the set communication operator node, and there is a directed edge between the set communication operator node and the node in the other reconstructed node. The directed edge between the node in the reconstructed node and the set communication operator node may be represented as a dependency relationship of the node in the reconstructed node, and the directed edge between the set communication operator node and the node in the other reconstructed node may be represented as a dependency relationship of the node in the other reconstructed node, for example, represented as a second dependency relationship of the node in the reconstructed node and a second dependency relationship of the node in the other reconstructed node. In this way, representation of a directed edge between a node in a reconstructed node and the set communication operator node can be used to implement representation of distributed execution of the plurality of reconstructed nodes. Similarly, distributed execution can be performed on a plurality of thread-level subgraphs. Two thread-level subgraphs and two computation apparatuses are used as an example. One thread-level subgraph is executed by one computation apparatus, and the other thread-level subgraph is executed by the other computation apparatus. The two thread-level subgraphs may be obtained by performing thread division on different reconstructed nodes in a same reconstructed subgraph, or may be obtained by performing sub-thread division on reconstructed nodes in different reconstructed subgraphs. If output data of a child node in one thread-level subgraph is input data of a child node in the other thread-level subgraph, the output data of the child node in the thread-level subgraph needs to be transmitted from one computation apparatus to the other computation apparatus. In this application, the set communication operator node can be used to transmit the output data of the child node in the thread-level subgraph from the computation apparatus to the other computation apparatus. Because the set communication operator node can transmit the output data of the child node in the thread-level subgraph from the computation apparatus to the other computation apparatus as the input data of the child node in the other thread-level subgraph, there is a directed edge between the child node in the thread-level subgraph and the set communication operator node, and there is a directed edge between the set communication operator node and the child node in the other thread-level subgraph. The directed edge between the child node in the thread-level subgraph and the set communication operator node may be represented as a dependency relationship of the child node in the thread-level subgraph, and the directed edge between the set communication operator node and the child node in the other thread-level subgraph may be represented as a dependency relationship of the child node in the other thread-level subgraph, for example, represented as a second dependency relationship of the child node in the thread-level subgraph and a second dependency relationship of the child node in the other thread-level subgraph. In this way, representation of a directed edge between a child node in a thread-level subgraph and the set communication operator node can be used to implement representation of distributed execution of the plurality of thread-level subgraphs.

In a possible implementation, the input data of the first object includes output data of a fifth object, the first object is executed by a first computation apparatus, the fifth object is executed by a third computation apparatus, the dependency relationship of the first object further includes a third dependency relationship of the first object, the third dependency relationship of the first object represents a directed edge between the first object and a second communication operator node, and the output data of the fifth object is transmitted by the second communication operator node from the third computation apparatus to the first computation apparatus. If the first object is one of the M first nodes, the fifth object is a second target node in a third target reconstructed node, where the third target reconstructed node is a first reconstructed node other than the first target reconstructed node in the at least one first reconstructed node, and the second target node is a first node other than the M first nodes in the plurality of first nodes; or the third target reconstructed node is any third reconstructed node in a third reconstructed subgraph, the third reconstructed subgraph is obtained by performing reconstruction on a third subgraph, the third subgraph is a subgraph other than the first subgraph in the plurality of subgraphs, and the second target node is a third node in the third subgraph. Alternatively, if the first object is one of the N first child nodes, the fifth object is a third child node in a third thread-level subgraph, where the third thread-level subgraph is obtained by dividing each second target node in the third target reconstructed node into at least one third child node, the third thread-level subgraph includes Q third child nodes and directed edges between the Q third child nodes, and Q is a positive integer. It should be noted that, in this application, data is transmitted from the third computation apparatus to the second computation apparatus via a second set communication operator. Therefore, the second communication operator node is a node representing the second set communication operator, that is, the second communication operator node is a second set communication operator node. It should be further noted that a manner of obtaining the third reconstructed subgraph is the same as a manner of obtaining the first reconstructed subgraph in this application.

In this implementation, distributed execution can be performed on a plurality of reconstructed nodes. Two reconstructed nodes and two computation apparatuses are used as an example. One reconstructed node is executed by one computation apparatus, and the other reconstructed node is executed by the other computation apparatus. The two reconstructed nodes may be reconstructed nodes in a same reconstructed subgraph, or may be reconstructed nodes in different reconstructed subgraphs. If output data of a node in one reconstructed node is input data of a node in the other reconstructed node, the output data of the node in the one reconstructed node needs to be transmitted from one computation apparatus to the other computation apparatus. In this application, the set communication operator node can be used to transmit the output data of the node in the reconstructed node from the computation apparatus to the other computation apparatus. Because the set communication operator node can transmit the output data of the node in the reconstructed node from the computation apparatus to the other computation apparatus as the input data of the node in the other reconstructed node, there is a directed edge between the node in the reconstructed node and the set communication operator node, and there is a directed edge between the set communication operator node and the node in the other reconstructed node. The directed edge between the node in the reconstructed node and the set communication operator node may be represented as a dependency relationship of the node in the reconstructed node, and the directed edge between the set communication operator node and the node in the other reconstructed node may be represented as a dependency relationship of the node in the other reconstructed node, for example, represented as a second dependency relationship of the node in the reconstructed node and a second dependency relationship of the node in the other reconstructed node. In this way, representation of a directed edge between a node in a reconstructed node and the set communication operator node can be used to implement representation of distributed execution of the plurality of reconstructed nodes. Similarly, distributed execution can be performed on a plurality of thread-level subgraphs. Two thread-level subgraphs and two computation apparatuses are used as an example. One thread-level subgraph is executed by one computation apparatus, and the other thread-level subgraph is executed by the other computation apparatus. The two thread-level subgraphs may be obtained by performing thread division on different reconstructed nodes in a same reconstructed subgraph, or may be obtained by performing sub-thread division on reconstructed nodes in different reconstructed subgraphs. If output data of a child node in one thread-level subgraph is input data of a child node in the other thread-level subgraph, the output data of the child node in the thread-level subgraph needs to be transmitted from one computation apparatus to the other computation apparatus. In this application, the set communication operator node can be used to transmit the output data of the child node in the thread-level subgraph from the computation apparatus to the other computation apparatus. Because the set communication operator node can transmit the output data of the child node in the thread-level subgraph from the computation apparatus to the other computation apparatus as the input data of the child node in the other thread-level subgraph, there is a directed edge between the child node in the thread-level subgraph and the set communication operator node, and there is a directed edge between the set communication operator node and the child node in the other thread-level subgraph. The directed edge between the child node in the thread-level subgraph and the set communication operator node may be represented as a dependency relationship of the child node in the thread-level subgraph, and the directed edge between the set communication operator node and the child node in the other thread-level subgraph may be represented as a dependency relationship of the child node in the other thread-level subgraph, for example, represented as a second dependency relationship of the child node in the thread-level subgraph and a second dependency relationship of the child node in the other thread-level subgraph. In this way, representation of a directed edge between a child node in a thread-level subgraph and the set communication operator node can be used to implement representation of distributed execution of the plurality of thread-level subgraphs.

In a possible implementation, there is a directed edge between the first node in the first target reconstructed node and a third target node in a fourth target reconstructed node, where the fourth target reconstructed node is a first reconstructed node in the at least one first reconstructed node other than the first target reconstructed node, and the third target node is a first node in the plurality of first nodes other than the M first nodes; or the fourth target reconstructed node is any fourth reconstructed node in a fourth reconstructed subgraph, the fourth reconstructed subgraph is obtained by reconstructing a fourth subgraph, the fourth subgraph is a subgraph other than the first subgraph in the plurality of subgraphs, and the third target node is a fourth node in the fourth subgraph. The first target reconstructed node and the fourth target reconstructed node are in a same stream (stream), the compiled data of the first target reconstructed node further includes a dependency relationship of the first target reconstructed node, and the dependency relationship of the first target reconstructed node represents a directed edge between the first target reconstructed node and the fourth target reconstructed node. It should be noted that a manner of obtaining the fourth reconstructed subgraph is the same as a manner of obtaining the first reconstructed subgraph in this application.

In this implementation, for two reconstructed nodes in a same stream, the two reconstructed nodes may be reconstructed nodes in a same reconstructed subgraph, or may be reconstructed nodes in different reconstructed subgraphs. If there is a directed edge between a node in one reconstructed node and a node in the other reconstructed node, the directed edge between the node in the reconstructed node and the node in the other reconstructed node may be converted into a directed edge between the reconstructed node and the other reconstructed node for representation, and the directed edge between the reconstructed node and the other reconstructed node may be represented as a dependency relationship of the reconstructed node. Therefore, a sequence of the two reconstructed nodes in the same stream can be controlled. For example, the first target reconstructed node and the fourth target reconstructed node are in the same stream, and there is the directed edge between the first node in the first target reconstructed node and the third target node in the fourth target reconstructed node. The directed edge between the first node in the first target reconstructed node and the third target node in the fourth target reconstructed node may be converted into the directed edge between the first target reconstructed node and the fourth target reconstructed node, and then the directed edge between the first target reconstructed node and the fourth target reconstructed node is represented as the dependency relationship of the first target reconstructed node, and is compiled into the compiled data of the first target reconstructed node. Therefore, a sequence of the first target reconstructed node and the fourth target reconstructed node is controlled. It should be understood that the first target reconstructed node and the fourth target reconstructed node may be reconstructed nodes in a same reconstructed subgraph, or may be reconstructed nodes in different reconstructed subgraphs.

In a possible implementation, there is a directed edge between the first node in the first target reconstructed node and a fourth target node in a fifth target reconstructed node, where the fifth target reconstructed node is a first reconstructed node in the at least one first reconstructed node other than the first target reconstructed node, and the fourth target node is a first node in the plurality of first nodes other than the M first nodes; or the fifth target reconstructed node is any fifth reconstructed node in a fifth reconstructed subgraph, the fifth reconstructed subgraph is obtained by reconstructing a fifth subgraph, the fifth subgraph is a subgraph other than the first subgraph in the plurality of subgraphs, and the fourth target node is a fifth node in the fifth subgraph. The first target reconstructed node and the fifth target reconstructed node are in different streams, the compiled data of the first target reconstructed node further includes a first dependency relationship and a second dependency relationship of a first sending operator node, the first dependency relationship of the first sending operator node represents a directed edge between the first sending operator node and the first target reconstructed node, the second dependency relationship of the first sending operator node represents a directed edge between the first sending operator node and a first receiving operator node, and there is a directed edge between the first receiving operator node and the fifth target reconstructed node. It should be noted that a manner of obtaining the fifth reconstructed subgraph is the same as a manner of obtaining the first reconstructed subgraph in this application.

In this implementation, for two reconstructed nodes in different streams, the two reconstructed nodes may be reconstructed nodes in a same reconstructed subgraph, or may be reconstructed nodes in different reconstructed subgraphs. If there is a directed edge between a node in one reconstructed node and a node in the other reconstructed node, the directed edge between the node in the reconstructed node and the node in the other reconstructed node may be converted into a directed edge between the reconstructed node and a sending operator node, a directed edge between the sending operator node and a receiving operator node, and a directed edge between the receiving operator node and the other reconstructed node for representation. The directed edge between the reconstructed node and the sending operator node and the directed edge between the sending operator node and the receiving operator node may be represented as a dependency relationship of the sending operator node, and the directed edge between the sending operator node and the receiving operator node, and the directed edge between the receiving operator node and the other reconstructed node may be represented as a dependency relationship of the receiving operator node. Therefore, a sequence of the two reconstructed nodes in the different streams is controlled. For example, the first target reconstructed node and the fifth target reconstructed node are in the different streams, and there is the directed edge between the first node in the first target reconstructed node and the fourth target node in the fifth target reconstructed node. The directed edge between the first node in the first target reconstructed node and the fourth target node in the fifth target reconstructed node may be converted into the directed edge between the first sending operator node and the first target reconstructed node, the directed edge between the first sending operator node and the first receiving operator node, and the directed edge between the first receiving operator node and the fifth target reconstructed node. Then, the directed edge between the first sending operator node and the first target reconstructed node is represented as the first dependency relationship of the first sending operator node; the directed edge between the first sending operator node and the first receiving operator node is represented as the second dependency relationship of the first sending operator node; and the first dependency relationship and the second dependency relationship of the first sending operator node are compiled into the compiled data of the first target reconstructed node. In addition, the directed edge between the first receiving operator node and the fifth target reconstructed node may be represented as a first dependency relationship of the first receiving operator node; the directed edge between the first sending operator node and the first receiving operator node is represented as a second dependency relationship of the first receiving operator node; and the first dependency relationship and the second dependency relationship of the first receiving operator node are compiled into compiled data of the fifth target reconstructed node. Therefore, a sequence of the first target reconstructed node and the fifth target reconstructed node is controlled. It should be understood that the first target reconstructed node and the fifth target reconstructed node may be reconstructed nodes in a same reconstructed subgraph, or may be reconstructed nodes in different reconstructed subgraphs.

In a possible implementation, there is a directed edge between the first node in the first target reconstructed node and a fifth target node in a sixth target reconstructed node, where the sixth target reconstructed node is a first reconstructed node in the at least one first reconstructed node other than the first target reconstructed node, and the fifth target node is a first node in the plurality of first nodes other than the M first nodes; or the sixth target reconstructed node is any sixth reconstructed node in a sixth reconstructed subgraph, the sixth reconstructed subgraph is obtained by reconstructing a sixth subgraph, the sixth subgraph is a subgraph other than the first subgraph in the plurality of subgraphs, and the fifth target node is a sixth node in the sixth subgraph. The first target reconstructed node and the sixth target reconstructed node are in different streams, the compiled data of the first target reconstructed node further includes a first dependency relationship and a second dependency relationship of a second receiving operator node, the first dependency relationship of the second receiving operator node represents a directed edge between the second receiving operator node and the first target reconstructed node, the second dependency relationship of the second receiving operator node represents a directed edge between the second receiving operator node and a second sending operator node, and there is a directed edge between the second sending operator node and the sixth target reconstructed node. It should be noted that a manner of obtaining the sixth reconstructed subgraph is the same as a manner of obtaining the first reconstructed subgraph in this application.

In this implementation, for two reconstructed nodes in different streams, the two reconstructed nodes may be reconstructed nodes in a same reconstructed subgraph, or may be reconstructed nodes in different reconstructed subgraphs. If there is a directed edge between a node in one reconstructed node and a node in the other reconstructed node, the directed edge between the node in the reconstructed node and the node in the other reconstructed node may be converted into a directed edge between the reconstructed node and a sending operator node, a directed edge between the sending operator node and a receiving operator node, and a directed edge between the receiving operator node and the other reconstructed node for representation. The directed edge between the reconstructed node and the sending operator node and the directed edge between the sending operator node and the receiving operator node may be represented as a dependency relationship of the sending operator node, and the directed edge between the sending operator node and the receiving operator node, and the directed edge between the receiving operator node and the other reconstructed node may be represented as a dependency relationship of the receiving operator node. Therefore, a sequence of the two reconstructed nodes in the different streams is controlled. For example, the first target reconstructed node and the sixth target reconstructed node are in the different streams, and there is the directed edge between the first node in the first target reconstructed node and the fifth target node in the sixth target reconstructed node. The directed edge between the first node in the first target reconstructed node and the fifth target node in the sixth target reconstructed node may be converted into the directed edge between the sixth target reconstructed node and the second sending operator node, the directed edge between the second sending operator node and the second receiving operator node, and the directed edge between the second receiving operator node and the first target reconstructed node. Then, the directed edge between the sixth target reconstructed node and the second sending operator node is represented as a first dependency relationship of the second sending operator node; the directed edge between the second sending operator node and the second receiving operator node is represented as a second dependency relationship of the second sending operator node; and the first dependency relationship and the second dependency relationship of the second sending operator node are compiled into compiled data of the sixth target reconstructed node. In addition, the directed edge between the second receiving operator node and the first target reconstructed node may be represented as the first dependency relationship of the second receiving operator node; the directed edge between the second sending operator node and the second receiving operator node is represented as the second dependency relationship of the second receiving operator node; and the first dependency relationship and the second dependency relationship of the second receiving operator node are compiled into the compiled data of the first target reconstructed node. Therefore, a sequence of the first target reconstructed node and the sixth target reconstructed node is controlled. It should be understood that the first target reconstructed node and the sixth target reconstructed node may be reconstructed nodes in a same reconstructed subgraph, or may be reconstructed nodes in different reconstructed subgraphs.

According to a second aspect, an embodiment of this application provides a subgraph execution method, including: obtaining compiled data of a first target reconstructed node in a first reconstructed subgraph, where the first reconstructed subgraph is obtained by reconstructing a first subgraph, the first subgraph includes a plurality of first nodes and directed edges between the plurality of first nodes, and the first subgraph is any one of a plurality of subgraphs obtained by segmenting a computation graph; and the first reconstructed subgraph includes at least one first reconstructed node and directed edges between the at least one first reconstructed node, the first target reconstructed node is any one of the at least one first reconstructed node, the first target reconstructed node includes M first nodes in the plurality of first nodes and directed edges between the M first nodes, and M is a positive integer; and executing the compiled data of the first target reconstructed node.

In this embodiment of this application, the computation graph is segmented into the plurality of subgraphs, any subgraph in the plurality of subgraphs is reconstructed to obtain a reconstructed subgraph, and then any reconstructed node in the reconstructed subgraph is compiled by using a reconstructed node in the reconstructed subgraph as a scheduling unit. It should be noted that the reconstructed subgraph obtained in this application includes at least one reconstructed node and directed edges between the at least one reconstructed node. Therefore, the reconstructed subgraph obtained in this application is essentially a subgraph. In addition, because any reconstructed node in the reconstructed subgraph includes one or more nodes in the any subgraph and directed edges between the one or more nodes, the reconstructed node is essentially a subgraph whose size is smaller than that of the any subgraph. During subgraph compilation, using a reconstructed node as a scheduling unit essentially indicates a graph scheduling mechanism, and scheduling one reconstructed node for compilation at a time is equivalent to scheduling one or more nodes in the any subgraph for compilation at a time. Compared with a manner of using a node (for example, a computing node) in the any subgraph as a scheduling unit and scheduling one node in the any subgraph at a time, a manner of using the reconstructed node as the scheduling unit during subgraph compilation can reduce scheduling time. Further, compiled data of the any reconstructed node obtained by compiling the any reconstructed node is used to execute the one or more nodes in the any subgraph. When the subgraph is executed, scheduling the compiled data of the reconstructed node at a time for execution is equivalent to scheduling the compiled data of the one or more nodes in the any subgraph at a time for execution, that is, in this application, a reconstructed node is a scheduling unit. Scheduling one reconstructed node at a time to execute the reconstructed node is equivalent to scheduling one or more nodes in the any subgraph at a time to execute the one or more nodes. Compared with a manner of using a node (for example, a computing node) in the any subgraph as a scheduling unit and scheduling one node in the any subgraph at a time for executing the node, a manner of using the reconstructed node as the scheduling unit during subgraph execution can reduce scheduling time. For example, for the first subgraph in the plurality of subgraphs obtained by segmenting the computation graph, the first subgraph includes the plurality of first nodes and the directed edges between the plurality of first nodes. The first reconstructed subgraph obtained by reconstructing the first subgraph includes the at least one first reconstructed node and the directed edges between the at least one first reconstructed node. The first target reconstructed node includes the M first nodes in the first subgraph and the directed edges between the M first nodes, and M is a positive integer. Compiling the first target reconstructed node is equal to compiling the M first nodes, and the compiled data of the first target reconstructed node is used to execute the M first nodes, that is, executing the first target reconstructed node is equal to executing the M first nodes. In conclusion, this embodiment of this application provides a graph scheduling mechanism, where a reconstructed node in a graph structure is used as a scheduling unit, to reduce scheduling time.

In a possible implementation, the compiled data of the first target reconstructed node is obtained by compiling a first thread-level subgraph, the first thread-level subgraph is obtained by dividing each of the M first nodes into at least one first child node, the first thread-level subgraph includes N first child nodes and directed edges between the N first child nodes, and N is a positive integer greater than or equal to M.

In this implementation, any reconstructed node includes M first nodes and directed edges between the M first nodes. When the any reconstructed node is compiled, each of the M first nodes is divided into at least one first child node, that is, an operator operation represented by each of the M first nodes is divided into at least one thread, and each of the at least one thread is represented by one child node. After thread division is performed on the M first nodes, N first child nodes are obtained, where N is a positive integer greater than or equal to M, and the N first child nodes and directed edges between the N first child nodes form a first thread-level subgraph. The first thread-level subgraph can be compiled to obtain compiled data of a first target reconstructed node, where the compiled data of the first target reconstructed node includes compiled data of the N first child nodes. Executing the N first child nodes is equal to executing the M first nodes, and at least one first child node obtained by dividing a same first node may be concurrently executed. In this way, when the compiled data of the N first child nodes is scheduled to execute the N first child nodes, first child nodes obtained by dividing a same first node in the N first child nodes can be concurrently executed. This reduces execution time of each of the M first nodes, that is, reduces total execution time of the M first nodes, and improves performance.

In a possible implementation, the compiled data of the first target reconstructed node includes compiled data of the M first nodes or compiled data of the N first child nodes; and the executing the compiled data of the first target reconstructed node includes: writing compiled data of R sixth objects into a cache; and performing the following operations for each of the R sixth objects, to execute the compiled data of the first target reconstructed node: when a quantity of eighth objects on which a seventh object depends is 0, reading compiled data of the seventh object from the cache, and executing the seventh object based on the compiled data of the seventh object, where the seventh object is any one of the R sixth objects; and if the R sixth objects are the M first nodes, the eighth object is a node; or if the R sixth objects are the N first child nodes, the eighth object is a child node.

In this implementation, for any node in a reconstructed node, when a quantity of nodes on which the any node depends is 0, the any node is executed; or for any child node in a thread-level subgraph, when a quantity of child nodes on which the any child node depends is 0, the any child node is executed. This sets an occasion for executing the any node or any child node, and helps improve execution efficiency.

In a possible implementation, the compiled data of the seventh object includes an initial quantity of eighth objects on which the seventh object depends; and if the initial quantity of eighth objects on which the seventh object depends is not 0, after each time a ninth object is executed, a quantity of eighth objects on which the seventh object depends is decreased by 1, and the ninth object is the eighth object on which the seventh object depends.

In this implementation, for any node in a reconstructed node, an occasion for pushing the node to a computing resource for execution is after a quantity of nodes on which the node depends is 0. In this application, an initial quantity of nodes on which the any node depends can be compiled into compiled data of the any node. During execution, this can determine, based on the quantity of nodes on which the any node depends, the occasion for pushing the node to the computing resource for execution. If the initial quantity of nodes on which the any node depends is 0, when the compiled data of the any node is written into a cache, the node may be pushed to the computing resource for execution. Alternatively, if the initial quantity of nodes on which the any node depends is not 0, only after all the nodes on which the any node depends are executed, the any node can be pushed to the computing resource for execution. In this case, each time a node on which the any node depends is executed, the quantity of nodes on which the any node depends is decreased by 1, until the quantity of nodes on which the any node depends is decreased to 0 and there is the occasion for pushing the any node to the computing resource for execution, so that the any node is pushed to the computing resource for execution. Similarly, for any child node in a thread-level subgraph, an occasion for pushing the child node to a computing resource for execution is after a quantity of child nodes on which the child node depends is 0. In this application, an initial quantity of child nodes on which the any child node depends can be compiled into compiled data of the any child node. During execution, this can determine, based on the quantity of child nodes on which the any child node depends, the occasion for pushing the child node to the computing resource for execution. If the initial quantity of child nodes on which the any child node depends is 0, when the compiled data of the any child node is written into a cache, the child node may be pushed to the computing resource for execution. Alternatively, if the initial quantity of child nodes on which the any child node depends is not 0, only after all the child nodes on which the any child node depends are executed, the any child node can be pushed to the computing resource for execution. In this case, each time a child node on which the any child node depends is executed, the quantity of child nodes on which the any child node depends is decreased by 1, until the quantity of child nodes on which the any child node depends is decreased to 0 and there is the occasion for pushing the any child node to the computing resource for execution, so that the any child node is pushed to the computing resource for execution.

In a possible implementation, when the initial quantity of eighth objects on which the seventh object depends is 0, the compiled data of the seventh object is written into the cache before the seventh object is executed; or when the initial quantity of eighth objects on which the seventh object depends is not 0, the compiled data of the seventh object is written into the cache during execution of the ninth object.

In this implementation, if an initial quantity of nodes on which any node in a reconstructed node depends is 0, the any node can be executed without waiting for execution of all other nodes. In this case, compiled data of the any node may be written into a cache before the any node is executed, to ensure smooth execution of the reconstructed node. Alternatively, if an initial quantity of nodes on which any node depends is not 0, the any node can be executed only after all the nodes on which the any node depends are executed. In this case, during execution of a node on which the any node depends, compiled data of the any node may be written into a cache, so that the any node can be executed immediately after all the nodes on which the any node depends are executed, thereby ensuring smooth execution of a reconstructed node. In addition, because the compiled data of the any node is not written into the cache very early, the compiled data of the any node does not occupy the cache for a long time, thereby implementing appropriate use of the cache. Similarly, if an initial quantity of child nodes on which any child node in a thread-level subgraph depends is 0, the any child node can be executed without waiting for execution of all other child nodes. In this case, compiled data of the any child node may be written into a cache before the any child node is executed, to ensure smooth execution of the thread-level subgraph. Alternatively, if an initial quantity of child nodes on which any child node depends is not 0, the any child node can be executed only after all the child nodes on which the any child node depends are executed. In this case, during execution of a child node on which the any child node depends, compiled data of the any child node may be written into a cache, so that the any child node can be executed immediately after all the child node on which the any child node depends are executed, thereby ensuring smooth execution of a thread-level subgraph. In addition, because the compiled data of the any child node is not written into the cache very early, the compiled data of the any child node does not occupy the cache for a long time, thereby implementing appropriate use of the cache.

In a possible implementation, the compiled data of the first target reconstructed node includes compiled data of a first object, the first object is one of the M first nodes or one of the N first child nodes, and the compiled data of the first object includes at least one of the following: a storage location, a life cycle, and cache management operation indication information of input data of the first object, a storage location, a life cycle, and cache management operation indication information of output data of the first object, a dependency relationship of the first object, and a type of a computation apparatus for executing the first object.

In a possible implementation, the first object is one of the N first child nodes, the compiled data of the first object further includes a second object that is concurrently executed with the first object, the second object is one of the N first child nodes, and the second object and the first object are obtained by dividing a same first node.

In a possible implementation, the cache management operation indication information of the input data of the first object indicates at least one of the following: before the first object is executed, writing target input data from a memory to a cache, where the input data of the first object includes the target input data, the target input data is not output data of a first node in the first target reconstructed node, or the target input data is not output data of a first child node in the first thread-level subgraph; and after the target input data is input into a first node in the first target reconstructed node for a first preset quantity of times, or after the target input data is input into a first child node in the first thread-level subgraph for the first preset quantity of times, deleting the target input data in the cache.

In a possible implementation, the cache management operation indication information of the output data of the first object indicates at least one of the following: writing the output data of the first object into a memory; after the output data of the first object is written into the memory, deleting the output data of the first object in a cache; and after the output data of the first object is input into the first node in the first target reconstructed node for a second preset quantity of times, or after the output data of the first object is input into the first child node in the first thread-level subgraph for the second preset quantity of times, deleting the output data of the first object in the cache.

In a possible implementation, the dependency relationship of the first object includes a first dependency relationship of the first object, and the first dependency relationship of the first object represents a directed edge between the first object and a third object; and if the first object is one of the M first nodes, the third object is one of the M first nodes; or if the first object is one of the N first child nodes, the third object is one of the N first child nodes, and the third object and the first object are obtained by dividing different first nodes.

In a possible implementation, the output data of the first object is input data of a fourth object, the first object is executed by a first computation apparatus, the fourth object is executed by a second computation apparatus, the dependency relationship of the first object further includes a second dependency relationship of the first object, the second dependency relationship of the first object represents a directed edge between the first object and a first communication operator node, and the output data of the first object is transmitted by the first communication operator node from the first computation apparatus to the second computation apparatus. If the first object is one of the M first nodes, the fourth object is a first target node in a second target reconstructed node, where the second target reconstructed node is a first reconstructed node other than the first target reconstructed node in the at least one first reconstructed node, and the first target node is a first node other than the M first nodes in the plurality of first nodes; or the second target reconstructed node is any second reconstructed node in a second reconstructed subgraph, the second reconstructed subgraph is obtained by performing reconstruction on a second subgraph, the second subgraph is a subgraph other than the first subgraph in the plurality of subgraphs, and the first target node is a second node in the second subgraph. Alternatively, if the first object is one of the N first child nodes, the fourth object is a second child node in a second thread-level subgraph, where the second thread-level subgraph is obtained by dividing each first target node in the second target reconstructed node into at least one second child node, the second thread-level subgraph includes P second child nodes and directed edges between the P second child nodes, and P is a positive integer.

In a possible implementation, the input data of the first object includes output data of a fifth object, the first object is executed by a first computation apparatus, the fifth object is executed by a third computation apparatus, the dependency relationship of the first object further includes a third dependency relationship of the first object, the third dependency relationship of the first object represents a directed edge between the first object and a second communication operator node, and the output data of the fifth object is transmitted by the second communication operator node from the third computation apparatus to the first computation apparatus. If the first object is one of the M first nodes, the fifth object is a second target node in a third target reconstructed node, where the third target reconstructed node is a first reconstructed node other than the first target reconstructed node in the at least one first reconstructed node, and the second target node is a first node other than the M first nodes in the plurality of first nodes; or the third target reconstructed node is any third reconstructed node in a third reconstructed subgraph, the third reconstructed subgraph is obtained by performing reconstruction on a third subgraph, the third subgraph is a subgraph other than the first subgraph in the plurality of subgraphs, and the second target node is a third node in the third subgraph. Alternatively, if the first object is one of the N first child nodes, the fifth object is a third child node in a third thread-level subgraph, where the third thread-level subgraph is obtained by dividing each second target node in the third target reconstructed node into at least one third child node, the third thread-level subgraph includes Q third child nodes and directed edges between the Q third child nodes, and Q is a positive integer.

In a possible implementation, there is a directed edge between the first node in the first target reconstructed node and a third target node in a fourth target reconstructed node, where the fourth target reconstructed node is a first reconstructed node in the at least one first reconstructed node other than the first target reconstructed node, and the third target node is a first node in the plurality of first nodes other than the M first nodes; or the fourth target reconstructed node is any fourth reconstructed node in a fourth reconstructed subgraph, the fourth reconstructed subgraph is obtained by reconstructing a fourth subgraph, the fourth subgraph is a subgraph other than the first subgraph in the plurality of subgraphs, and the third target node is a fourth node in the fourth subgraph. The first target reconstructed node and the fourth target reconstructed node are in a same stream (stream), the compiled data of the first target reconstructed node further includes a dependency relationship of the first target reconstructed node, and the dependency relationship of the first target reconstructed node represents a directed edge between the first target reconstructed node and the fourth target reconstructed node.

In a possible implementation, there is a directed edge between the first node in the first target reconstructed node and a fourth target node in a fifth target reconstructed node, where the fifth target reconstructed node is a first reconstructed node in the at least one first reconstructed node other than the first target reconstructed node, and the fourth target node is a first node in the plurality of first nodes other than the M first nodes; or the fifth target reconstructed node is any fifth reconstructed node in a fifth reconstructed subgraph, the fifth reconstructed subgraph is obtained by reconstructing a fifth subgraph, the fifth subgraph is a subgraph other than the first subgraph in the plurality of subgraphs, and the fourth target node is a fifth node in the fifth subgraph. The first target reconstructed node and the fifth target reconstructed node are in different streams, the compiled data of the first target reconstructed node further includes a first dependency relationship and a second dependency relationship of a first sending operator node, the first dependency relationship of the first sending operator node represents a directed edge between the first sending operator node and the first target reconstructed node, the second dependency relationship of the first sending operator node represents a directed edge between the first sending operator node and a first receiving operator node, and there is a directed edge between the first receiving operator node and the fifth target reconstructed node.

In a possible implementation, there is a directed edge between the first node in the first target reconstructed node and a fifth target node in a sixth target reconstructed node, where the sixth target reconstructed node is a first reconstructed node in the at least one first reconstructed node other than the first target reconstructed node, and the fifth target node is a first node in the plurality of first nodes other than the M first nodes; or the sixth target reconstructed node is any sixth reconstructed node in a sixth reconstructed subgraph, the sixth reconstructed subgraph is obtained by reconstructing a sixth subgraph, the sixth subgraph is a subgraph other than the first subgraph in the plurality of subgraphs, and the fifth target node is a sixth node in the sixth subgraph. The first target reconstructed node and the sixth target reconstructed node are in different streams, the compiled data of the first target reconstructed node further includes a first dependency relationship and a second dependency relationship of a second receiving operator node, the first dependency relationship of the second receiving operator node represents a directed edge between the second receiving operator node and the first target reconstructed node, the second dependency relationship of the second receiving operator node represents a directed edge between the second receiving operator node and a second sending operator node, and there is a directed edge between the second sending operator node and the sixth target reconstructed node.

It should be noted that, for beneficial effect of the possible implementations described in the second aspect, refer to the descriptions in the first aspect. A part of beneficial effect is not described again.

According to a third aspect, an embodiment of this application provides a subgraph compilation apparatus, including: an obtaining unit, configured to obtain a first subgraph, where the first subgraph is any one of a plurality of subgraphs obtained by segmenting a computation graph, and the first subgraph includes a plurality of first nodes and directed edges between the plurality of first nodes; a reconstruction unit, configured to reconstruct the first subgraph to obtain a first reconstructed subgraph, where the first reconstructed subgraph includes at least one first reconstructed node and directed edges between the at least one first reconstructed node; and a compilation unit, configured to compile a first target reconstructed node, to obtain compiled data of the first target reconstructed node, where the first target reconstructed node is any one of the at least one first reconstructed node, the first target reconstructed node includes M first nodes in the plurality of first nodes and directed edges between the M first nodes, and M is a positive integer.

In a possible implementation, the compilation unit is specifically configured to: divide each of the M first nodes into at least one first child node, to obtain a first thread-level subgraph, where the first thread-level subgraph includes N first child nodes and directed edges between the N first child nodes, and N is a positive integer greater than or equal to M; and compile the first thread-level subgraph, to obtain the compiled data of the first target reconstructed node.

In a possible implementation, the compiled data of the first target reconstructed node includes compiled data of a first object, the first object is one of the M first nodes or one of the N first child nodes, and the compiled data of the first object includes at least one of the following: a storage location, a life cycle, and cache management operation indication information of input data of the first object, a storage location, a life cycle, and cache management operation indication information of output data of the first object, a dependency relationship of the first object, and a type of a computation apparatus for executing the first object.

In a possible implementation, the first object is one of the N first child nodes, the compiled data of the first object further includes a second object that is concurrently executed with the first object, the second object is one of the N first child nodes, and the second object and the first object are obtained by dividing a same first node.

In a possible implementation, the cache management operation indication information of the input data of the first object indicates at least one of the following: before the first object is executed, writing target input data from a memory to a cache, where the input data of the first object includes the target input data, the target input data is not output data of a first node in the first target reconstructed node, or the target input data is not output data of a first child node in the first thread-level subgraph; and after the target input data is input into a first node in the first target reconstructed node for a first preset quantity of times, or after the target input data is input into a first child node in the first thread-level subgraph for the first preset quantity of times, deleting the target input data in the cache.

In a possible implementation, the cache management operation indication information of the output data of the first object indicates at least one of the following: writing the output data of the first object into a memory; after the output data of the first object is written into the memory, deleting the output data of the first object in a cache; and after the output data of the first object is input into the first node in the first target reconstructed node for a second preset quantity of times, or after the output data of the first object is input into the first child node in the first thread-level subgraph for the second preset quantity of times, deleting the output data of the first object in the cache.

In a possible implementation, the dependency relationship of the first object includes a first dependency relationship of the first object, and the first dependency relationship of the first object represents a directed edge between the first object and a third object; and if the first object is one of the M first nodes, the third object is one of the M first nodes; or if the first object is one of the N first child nodes, the third object is one of the N first child nodes, and the third object and the first object are obtained by dividing different first nodes.

In a possible implementation, the output data of the first object is input data of a fourth object, the first object is executed by a first computation apparatus, the fourth object is executed by a second computation apparatus, the dependency relationship of the first object further includes a second dependency relationship of the first object, the second dependency relationship of the first object represents a directed edge between the first object and a first communication operator node, and the output data of the first object is transmitted by the first communication operator node from the first computation apparatus to the second computation apparatus. If the first object is one of the M first nodes, the fourth object is a first target node in a second target reconstructed node, where the second target reconstructed node is a first reconstructed node other than the first target reconstructed node in the at least one first reconstructed node, and the first target node is a first node other than the M first nodes in the plurality of first nodes; or the second target reconstructed node is any second reconstructed node in a second reconstructed subgraph, the second reconstructed subgraph is obtained by performing reconstruction on a second subgraph, the second subgraph is a subgraph other than the first subgraph in the plurality of subgraphs, and the first target node is a second node in the second subgraph. Alternatively, if the first object is one of the N first child nodes, the fourth object is a second child node in a second thread-level subgraph, where the second thread-level subgraph is obtained by dividing each first target node in the second target reconstructed node into at least one second child node, the second thread-level subgraph includes P second child nodes and directed edges between the P second child nodes, and P is a positive integer.

In a possible implementation, the input data of the first object includes output data of a fifth object, the first object is executed by a first computation apparatus, the fifth object is executed by a third computation apparatus, the dependency relationship of the first object further includes a third dependency relationship of the first object, the third dependency relationship of the first object represents a directed edge between the first object and a second communication operator node, and the output data of the fifth object is transmitted by the second communication operator node from the third computation apparatus to the first computation apparatus. If the first object is one of the M first nodes, the fifth object is a second target node in a third target reconstructed node, where the third target reconstructed node is a first reconstructed node other than the first target reconstructed node in the at least one first reconstructed node, and the second target node is a first node other than the M first nodes in the plurality of first nodes; or the third target reconstructed node is any third reconstructed node in a third reconstructed subgraph, the third reconstructed subgraph is obtained by performing reconstruction on a third subgraph, the third subgraph is a subgraph other than the first subgraph in the plurality of subgraphs, and the second target node is a third node in the third subgraph. Alternatively, if the first object is one of the N first child nodes, the fifth object is a third child node in a third thread-level subgraph, where the third thread-level subgraph is obtained by dividing each second target node in the third target reconstructed node into at least one third child node, the third thread-level subgraph includes Q third child nodes and directed edges between the Q third child nodes, and Q is a positive integer.

In a possible implementation, there is a directed edge between the first node in the first target reconstructed node and a third target node in a fourth target reconstructed node, where the fourth target reconstructed node is a first reconstructed node in the at least one first reconstructed node other than the first target reconstructed node, and the third target node is a first node in the plurality of first nodes other than the M first nodes; or the fourth target reconstructed node is any fourth reconstructed node in a fourth reconstructed subgraph, the fourth reconstructed subgraph is obtained by reconstructing a fourth subgraph, the fourth subgraph is a subgraph other than the first subgraph in the plurality of subgraphs, and the third target node is a fourth node in the fourth subgraph. The first target reconstructed node and the fourth target reconstructed node are in a same stream (stream), the compiled data of the first target reconstructed node further includes a dependency relationship of the first target reconstructed node, and the dependency relationship of the first target reconstructed node represents a directed edge between the first target reconstructed node and the fourth target reconstructed node.

In a possible implementation, there is a directed edge between the first node in the first target reconstructed node and a fourth target node in a fifth target reconstructed node, where the fifth target reconstructed node is a first reconstructed node in the at least one first reconstructed node other than the first target reconstructed node, and the fourth target node is a first node in the plurality of first nodes other than the M first nodes; or the fifth target reconstructed node is any fifth reconstructed node in a fifth reconstructed subgraph, the fifth reconstructed subgraph is obtained by reconstructing a fifth subgraph, the fifth subgraph is a subgraph other than the first subgraph in the plurality of subgraphs, and the fourth target node is a fifth node in the fifth subgraph. The first target reconstructed node and the fifth target reconstructed node are in different streams, the compiled data of the first target reconstructed node further includes a first dependency relationship and a second dependency relationship of a first sending operator node, the first dependency relationship of the first sending operator node represents a directed edge between the first sending operator node and the first target reconstructed node, the second dependency relationship of the first sending operator node represents a directed edge between the first sending operator node and a first receiving operator node, and there is a directed edge between the first receiving operator node and the fifth target reconstructed node.

In a possible implementation, there is a directed edge between the first node in the first target reconstructed node and a fifth target node in a sixth target reconstructed node, where the sixth target reconstructed node is a first reconstructed node in the at least one first reconstructed node other than the first target reconstructed node, and the fifth target node is a first node in the plurality of first nodes other than the M first nodes; or the sixth target reconstructed node is any sixth reconstructed node in a sixth reconstructed subgraph, the sixth reconstructed subgraph is obtained by reconstructing a sixth subgraph, the sixth subgraph is a subgraph other than the first subgraph in the plurality of subgraphs, and the fifth target node is a sixth node in the sixth subgraph. The first target reconstructed node and the sixth target reconstructed node are in different streams, the compiled data of the first target reconstructed node further includes a first dependency relationship and a second dependency relationship of a second receiving operator node, the first dependency relationship of the second receiving operator node represents a directed edge between the second receiving operator node and the first target reconstructed node, the second dependency relationship of the second receiving operator node represents a directed edge between the second receiving operator node and a second sending operator node, and there is a directed edge between the second sending operator node and the sixth target reconstructed node.

It should be noted that, for beneficial effect of the third aspect, refer to the description of the first aspect. Details are not described herein again.

According to a fourth aspect, an embodiment of this application provides a subgraph execution apparatus, including: an obtaining unit, configured to obtain compiled data of a first target reconstructed node in a first reconstructed subgraph, where the first reconstructed subgraph is obtained by reconstructing a first subgraph, the first subgraph includes a plurality of first nodes and directed edges between the plurality of first nodes, and the first subgraph is any one of a plurality of subgraphs obtained by segmenting a computation graph; and the first reconstructed subgraph includes at least one first reconstructed node and directed edges between the at least one first reconstructed node, the first target reconstructed node is any one of the at least one first reconstructed node, the first target reconstructed node includes M first nodes in the plurality of first nodes and directed edges between the M first nodes, and M is a positive integer; and an execution unit, configured to execute the compiled data of the first target reconstructed node.

In a possible implementation, the compiled data of the first target reconstructed node is obtained by compiling a first thread-level subgraph, the first thread-level subgraph is obtained by dividing each of the M first nodes into at least one first child node, the first thread-level subgraph includes N first child nodes and directed edges between the N first child nodes, and N is a positive integer greater than or equal to M.

In a possible implementation, the compiled data of the first target reconstructed node includes compiled data of the M first nodes or compiled data of the N first child nodes; and the execution unit is specifically configured to: write compiled data of R sixth objects into a cache; and perform the following operations for each of the R sixth objects, to execute the compiled data of the first target reconstructed node: when a quantity of eighth objects on which a seventh object depends is 0, reading compiled data of the seventh object from the cache, and executing the seventh object based on the compiled data of the seventh object, where the seventh object is any one of the R sixth objects; and if the R sixth objects are the M first nodes, the eighth object is a node; or if the R sixth objects are the N first child nodes, the eighth object is a child node.

In a possible implementation, the compiled data of the seventh object includes an initial quantity of eighth objects on which the seventh object depends; and if the initial quantity of eighth objects on which the seventh object depends is not 0, after each time a ninth object is executed, a quantity of eighth objects on which the seventh object depends is decreased by 1, and the ninth object is the eighth object on which the seventh object depends.

In a possible implementation, when the initial quantity of eighth objects on which the seventh object depends is 0, the compiled data of the seventh object is written into the cache before the seventh object is executed; or when the initial quantity of eighth objects on which the seventh object depends is not 0, the compiled data of the seventh object is written into the cache during execution of the ninth object.

In a possible implementation, the compiled data of the first target reconstructed node includes compiled data of a first object, the first object is one of the M first nodes or one of the N first child nodes, and the compiled data of the first object includes at least one of the following: a storage location, a life cycle, and cache management operation indication information of input data of the first object, a storage location, a life cycle, and cache management operation indication information of output data of the first object, a dependency relationship of the first object, and a type of a computation apparatus for executing the first object.

In a possible implementation, the first object is one of the N first child nodes, the compiled data of the first object further includes a second object that is concurrently executed with the first object, the second object is one of the N first child nodes, and the second object and the first object are obtained by dividing a same first node.

In a possible implementation, the cache management operation indication information of the input data of the first object indicates at least one of the following: before the first object is executed, writing target input data from a memory to a cache, where the input data of the first object includes the target input data, the target input data is not output data of a first node in the first target reconstructed node, or the target input data is not output data of a first child node in the first thread-level subgraph; and after the target input data is input into a first node in the first target reconstructed node for a first preset quantity of times, or after the target input data is input into a first child node in the first thread-level subgraph for the first preset quantity of times, deleting the target input data in the cache.

In a possible implementation, the cache management operation indication information of the output data of the first object indicates at least one of the following: writing the output data of the first object into a memory; after the output data of the first object is written into the memory, deleting the output data of the first object in a cache; and after the output data of the first object is input into the first node in the first target reconstructed node for a second preset quantity of times, or after the output data of the first object is input into the first child node in the first thread-level subgraph for the second preset quantity of times, deleting the output data of the first object in the cache.

In a possible implementation, the dependency relationship of the first object includes a first dependency relationship of the first object, and the first dependency relationship of the first object represents a directed edge between the first object and a third object; and if the first object is one of the M first nodes, the third object is one of the M first nodes; or if the first object is one of the N first child nodes, and the third object and the first object are obtained by dividing different first nodes.

In a possible implementation, the output data of the first object is input data of a fourth object, the first object is executed by a first computation apparatus, the fourth object is executed by a second computation apparatus, the dependency relationship of the first object further includes a second dependency relationship of the first object, the second dependency relationship of the first object represents a directed edge between the first object and a first communication operator node, and the output data of the first object is transmitted by the first communication operator node from the first computation apparatus to the second computation apparatus. If the first object is one of the M first nodes, the fourth object is a first target node in a second target reconstructed node, where the second target reconstructed node is a first reconstructed node other than the first target reconstructed node in the at least one first reconstructed node, and the first target node is a first node other than the M first nodes in the plurality of first nodes; or the second target reconstructed node is any second reconstructed node in a second reconstructed subgraph, the second reconstructed subgraph is obtained by performing reconstruction on a second subgraph, the second subgraph is a subgraph other than the first subgraph in the plurality of subgraphs, and the first target node is a second node in the second subgraph. Alternatively, if the first object is one of the N first child nodes, the fourth object is a second child node in a second thread-level subgraph, where the second thread-level subgraph is obtained by dividing each first target node in the second target reconstructed node into at least one second child node, the second thread-level subgraph includes P second child nodes and directed edges between the P second child nodes, and P is a positive integer.

In a possible implementation, the input data of the first object includes output data of a fifth object, the first object is executed by a first computation apparatus, the fifth object is executed by a third computation apparatus, the dependency relationship of the first object further includes a third dependency relationship of the first object, the third dependency relationship of the first object represents a directed edge between the first object and a second communication operator node, and the output data of the fifth object is transmitted by the second communication operator node from the third computation apparatus to the first computation apparatus. If the first object is one of the M first nodes, the fifth object is a second target node in a third target reconstructed node, where the third target reconstructed node is a first reconstructed node other than the first target reconstructed node in the at least one first reconstructed node, and the second target node is a first node other than the M first nodes in the plurality of first nodes; or the third target reconstructed node is any third reconstructed node in a third reconstructed subgraph, the third reconstructed subgraph is obtained by performing reconstruction on a third subgraph, the third subgraph is a subgraph other than the first subgraph in the plurality of subgraphs, and the second target node is a third node in the third subgraph. Alternatively, if the first object is one of the N first child nodes, the fifth object is a third child node in a third thread-level subgraph, where the third thread-level subgraph is obtained by dividing each second target node in the third target reconstructed node into at least one third child node, the third thread-level subgraph includes Q third child nodes and directed edges between the Q third child nodes, and Q is a positive integer.

In a possible implementation, there is a directed edge between the first node in the first target reconstructed node and a third target node in a fourth target reconstructed node, where the fourth target reconstructed node is a first reconstructed node in the at least one first reconstructed node other than the first target reconstructed node, and the third target node is a first node in the plurality of first nodes other than the M first nodes; or the fourth target reconstructed node is any fourth reconstructed node in a fourth reconstructed subgraph, the fourth reconstructed subgraph is obtained by reconstructing a fourth subgraph, the fourth subgraph is a subgraph other than the first subgraph in the plurality of subgraphs, and the third target node is a fourth node in the fourth subgraph. The first target reconstructed node and the fourth target reconstructed node are in a same stream (stream), the compiled data of the first target reconstructed node further includes a dependency relationship of the first target reconstructed node, and the dependency relationship of the first target reconstructed node represents a directed edge between the first target reconstructed node and the fourth target reconstructed node.

In a possible implementation, there is a directed edge between the first node in the first target reconstructed node and a fourth target node in a fifth target reconstructed node, where the fifth target reconstructed node is a first reconstructed node in the at least one first reconstructed node other than the first target reconstructed node, and the fourth target node is a first node in the plurality of first nodes other than the M first nodes; or the fifth target reconstructed node is any fifth reconstructed node in a fifth reconstructed subgraph, the fifth reconstructed subgraph is obtained by reconstructing a fifth subgraph, the fifth subgraph is a subgraph other than the first subgraph in the plurality of subgraphs, and the fourth target node is a fifth node in the fifth subgraph. The first target reconstructed node and the fifth target reconstructed node are in different streams, the compiled data of the first target reconstructed node further includes a first dependency relationship and a second dependency relationship of a first sending operator node, the first dependency relationship of the first sending operator node represents a directed edge between the first sending operator node and the first target reconstructed node, the second dependency relationship of the first sending operator node represents a directed edge between the first sending operator node and a first receiving operator node, and there is a directed edge between the first receiving operator node and the fifth target reconstructed node.

In a possible implementation, there is a directed edge between the first node in the first target reconstructed node and a fifth target node in a sixth target reconstructed node, where the sixth target reconstructed node is a first reconstructed node in the at least one first reconstructed node other than the first target reconstructed node, and the fifth target node is a first node in the plurality of first nodes other than the M first nodes; or the sixth target reconstructed node is any sixth reconstructed node in a sixth reconstructed subgraph, the sixth reconstructed subgraph is obtained by reconstructing a sixth subgraph, the sixth subgraph is a subgraph other than the first subgraph in the plurality of subgraphs, and the fifth target node is a sixth node in the sixth subgraph. The first target reconstructed node and the sixth target reconstructed node are in different streams, the compiled data of the first target reconstructed node further includes a first dependency relationship and a second dependency relationship of a second receiving operator node, the first dependency relationship of the second receiving operator node represents a directed edge between the second receiving operator node and the first target reconstructed node, the second dependency relationship of the second receiving operator node represents a directed edge between the second receiving operator node and a second sending operator node, and there is a directed edge between the second sending operator node and the sixth target reconstructed node.

It should be noted that, for beneficial effect of the fourth aspect, refer to the description of the first aspect or the second aspect. Details are not described herein again.

According to a fifth aspect, an embodiment of this application provides a graph compilation apparatus, including a processor, a memory, a communication interface, and one or more programs. The one or more programs are stored in the memory and are configured to be performed by the processor; and the programs include instructions for performing steps in the method according to any one of the first aspect and the possible implementations of the first aspect.

According to a sixth aspect, an embodiment of this application provides a graph execution apparatus, including a processor, a memory, a communication interface, and one or more programs. The one or more programs are stored in the memory and are configured to be performed by the processor; and the programs include instructions for performing steps in the method according to any one of the second aspect and the possible implementations of the second aspect.

According to a seventh aspect, an embodiment of this application provides a computer-readable storage medium. The computer-readable storage medium includes a computer program, and when the computer program is run on a computer or a processor, the computer or the processor is enabled to perform the method according to any one of the first aspect, or the second aspect, and the possible implementations of the first aspect or the second aspect.

According to an eighth aspect, an embodiment of this application provides a computer program product. The computer program product includes a computer program; and when the computer program is run on a computer or a processor, the computer or the processor is enabled to perform the method according to any one of the first aspect, or the second aspect, and the possible implementations of the first aspect or the second aspect.

According to a ninth aspect, an embodiment of this application provides a chip, including a processor, configured to invoke a computer program from a memory and run the computer program, so that a device on which the chip is installed performs the method according to any one of the first aspect or the second aspect and the possible implementations of the first aspect or the second aspect.

## BRIEF DESCRIPTION OF DRAWINGS

FIG. 1 is a diagram of an application of a neural network model according to an embodiment of this application;

FIG. 2 is a diagram of a system architecture for subgraph compilation and subgraph execution according to an embodiment of this application;

FIG. 3 is a diagram of a principle of subgraph reconstruction according to an embodiment of this application;

FIG. 4A and FIG. 4B are a diagram of thread division according to an embodiment of this application;

FIG. 5 is a diagram of other thread division according to an embodiment of this application;

FIG. 6 is a diagram of dividing nodes into reconstructed nodes according to an embodiment of this application;

FIG. 7 is a diagram of generating a subgraph segmentation strategy according to an embodiment of this application;

FIG. 8 is a diagram of generating another subgraph segmentation strategy according to an embodiment of this application;

FIG. 9 is a diagram of resource allocation according to an embodiment of this application;

FIG. 10 is a diagram of a data prefetch operation according to an embodiment of this application;

FIG. 11 is a diagram of a data invalid operation according to an embodiment of this application;

FIG. 12 is a diagram of a data writeback operation according to an embodiment of this application;

FIG. 13 is a diagram of compiling a reconstructed node shown in FIG. 5;

FIG. 14 is a diagram of compiling a thread-level subgraph shown in FIG. 5;

FIG. 15 is a diagram of representing a dependency relationship between some child nodes in the thread-level subgraph shown in FIG. 5;

FIG. 16 is a diagram of directed edges according to an embodiment of this application;

FIG. 17 is a diagram of representation of a control edge according to an embodiment of this application;

FIG. 18 is a diagram of representation of another control edge according to an embodiment of this application;

FIG. 19 is a diagram of representation of distributed execution according to an embodiment of this application;

FIG. 20 is a diagram of representation of other distributed execution according to an embodiment of this application;

FIG. 21 is a diagram of a structure of a graph execution apparatus according to an embodiment of this application;

FIG. 22 is a diagram of asynchronous pipelines on a host side and a device side according to an embodiment of this application;

FIG. 23 is a diagram of other asynchronous pipelines on a host side and a device side according to an embodiment of this application;

FIG. 24 is a diagram of a dependency relationship between nodes in a reconstructed node or a dependency relationship between child nodes in a thread-level subgraph according to an embodiment of this application;

FIG. 25 is a diagram of a cache management operation on input data and output data of a node or child node according to an embodiment of this application;

FIG. 26 is a schematic flowchart of a subgraph compilation method according to an embodiment of this application;

FIG. 27 is a schematic flowchart of a subgraph execution method according to an embodiment of this application;

FIG. 28 is a diagram of a structure of a subgraph compilation apparatus according to an embodiment of this application;

FIG. 29 is a diagram of a structure of a subgraph execution apparatus according to an embodiment of this application; and

FIG. 30 is a diagram of a structure of a computer device according to an embodiment of this application.

## DESCRIPTION OF EMBODIMENTS

To make persons skilled in the art understand technical solutions in this application better, the following clearly and completely describes the technical solutions in embodiments of this application with reference to the accompanying drawings in embodiments of this application. It is clear that, the described embodiments are merely some rather than all of embodiments of this application. All other embodiments obtained by persons of ordinary skill in the art based on embodiments of this application without creative efforts shall fall within the protection scope of this application.

Terms "include" and "have" and any transformation thereof in the specification, claims, and accompanying drawings of this application are intended to cover non-exclusive including. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one (piece) of a, b, or c may indicate a, b, c, a and b, a and c, b and c, or a, b, and c, where a, b, and c may be singular or plural.

"Embodiment" mentioned in the specification means that particular features, structures, or characteristics described with reference to embodiments may be included in at least one embodiment of this application. The phrase shown in various locations in the specification may not necessarily refer to a same embodiment, and is not an independent or optional embodiment exclusive from another embodiment. Persons skilled in the art explicitly or implicitly understands that an embodiment described in the specification may be combined with another embodiment.

It is considered that a stream scheduling mechanism using a node/task as a scheduling unit has problems of long scheduling time and low execution concurrency. This application provides a graph scheduling mechanism using a graph as a scheduling unit, including graph compilation and graph execution using the graph as the scheduling unit, to reduce scheduling time and improve execution concurrency.

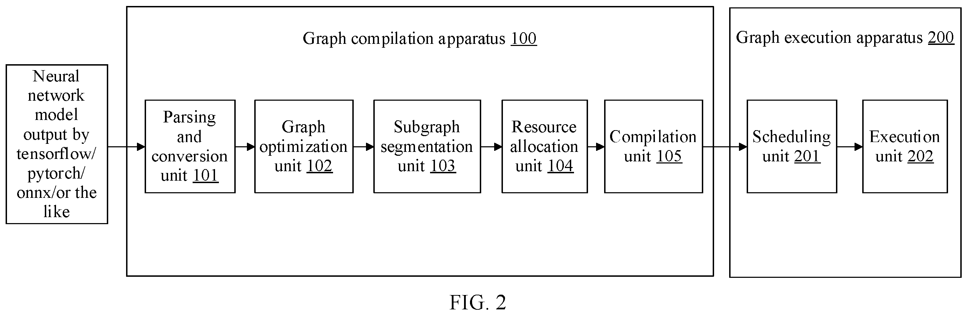

FIG. 2 is a diagram of a system architecture for subgraph compilation and subgraph execution according to an embodiment of this application. The system architecture includes a graph compilation apparatus 100 and a graph execution apparatus 200. Optionally, the graph compilation apparatus 100 may be disposed on a host (host) side or is a host, and the graph execution apparatus 200 may be disposed on a device (device) side or is a device. An input of the graph compilation apparatus 100 is a neural network model generated by using a front-end script such as tensorflow/pytorch/onnx. The graph compilation apparatus 100 is responsible for compiling the neural network model to generate a data structure that is recognized by a system and used as an input of the graph execution apparatus 200 in the system. The graph execution apparatus 200 executes, based on compiled data output by the graph compilation apparatus 100, a reconstructed node or thread-level subgraph by using the reconstructed node or thread-level subgraph as a scheduling unit, to obtain an inference result or a trained model parameter of the neural network model. The following specifically describes the graph compilation apparatus 100 and the graph execution apparatus 200.

1. Graph compilation apparatus 100

The graph compilation apparatus 100 includes a parsing (parser) and conversion unit 101, a graph optimization unit 102, a subgraph segmentation unit 103, a resource allocation unit 104, and a compilation unit 105, which are specifically described below.

The parsing and conversion unit 101 is configured to convert a computation graph of intermediate representation (intermediate representation, IR) in a front end such as tensorflow/pytorch/onnx into a computation graph of intermediate representation in the system.

The computation graph includes nodes (nodes) and lines (edges). The node in the computation graph represents an execution operator (Operator), or is referred to as an operator. The line in the computation graph is also referred to as an edge, and indicates dependency between operators. The edge in the computation graph is a directed edge, and defines a relationship between operations. There are two types of edges: One is used to transmit data, is referred to as a data edge, and is represented by a solid line; and the other is used to define a dependency relationship (namely, an execution sequence), is referred to as a control edge, and is represented by a dashed line. All nodes in the computation graph are connected through a data edge or a control edge. A node whose indegree (namely, a quantity of nodes on which the node depends) is 0 does not have forward dependency and can be executed immediately. A node whose indegree is greater than 0 can be executed only after all nodes on which the node depends are executed.

The graph optimization unit 102 is configured to optimize the computation graph of the intermediate representation in the system, for example, optimize the computation graph output by the parsing and conversion unit 101, where optimization specifically includes performing operator fusion, constant folding, precision and format (format) optimization, and the like on an operator represented by a node in the computation graph, and the operator represented by the node includes but is not limited to a computing operator, a communication operator (like a set communication operator), a control operator (like a sending operator or a receiving operator), a heterogeneous computing operator (like a CPU operator, a GPU operator, a matrix operator, or a vector operator), or the like. It should be understood that the graph optimization unit 102 is optional, that is, an input of the subgraph segmentation unit 103 may alternatively be an unoptimized computation graph.

The subgraph segmentation unit 103 is configured to: segment the computation graph into a plurality of subgraphs, and then reconstruct each subgraph to obtain a plurality of reconstructed subgraphs; and optionally, perform thread (thread) division on each reconstructed node in a reconstructed subgraph to obtain a thread-level subgraph corresponding to the reconstructed node, that is, divide a node inside each reconstructed node in a reconstructed subgraph into at least one thread-level child node to obtain a thread-level subgraph corresponding to the reconstructed node. It should be understood that the input of the subgraph segmentation unit 103 may be an output of the graph optimization unit 102, or may be an output of the parsing and conversion unit 101; and an output of the subgraph segmentation unit 103 may be a reconstructed subgraph or a reconstructed node, or may be a thread-level subgraph.

A principle of subgraph reconstruction is to use at least one node and directed edges between the at least one node in a subgraph as a reconstructed node, which is equivalent to obtaining a plurality of smaller-scale subgraphs after the subgraph is further segmented. The smaller-scale subgraphs are reconstructed nodes, and directed edges between the smaller-scale subgraphs are directed edges between the reconstructed nodes. It should be understood that the reconstructed subgraph in this application includes at least one reconstructed node and directed edges between the at least one reconstructed node. Therefore, the reconstructed subgraph in this application is essentially one subgraph. In addition, because any reconstructed node in the reconstructed subgraph includes one or more nodes and directed edges between the one or more nodes in the subgraph before reconstruction, the reconstructed node in this application is essentially a subgraph whose size is smaller than that of the subgraph, that is, the reconstructed node is of a graph structure.

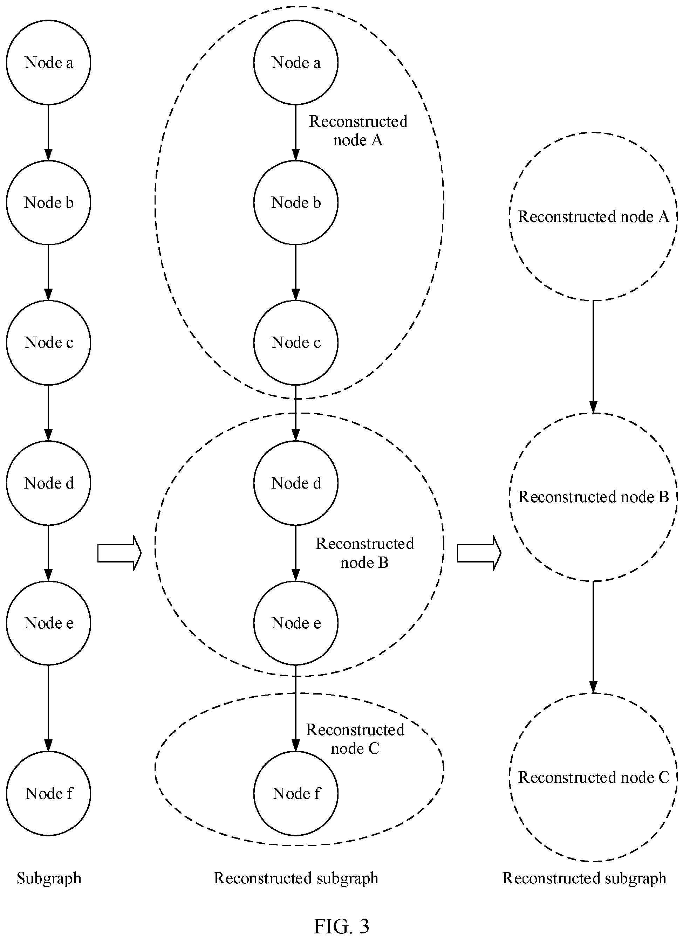

For example, FIG. 3 is a diagram of a principle of subgraph reconstruction according to an embodiment of this application. As shown in FIG. 3, a subgraph includes: a node a, a node b, a node c, a node d, a node e, a node f, a directed edge between the node a and the node b, a directed edge between the node b and the node c, a directed edge between the node c and the node d, a directed edge between the node d and the node e, and a directed edge between the node e and the node f. The node a, the node b, the node c, the directed edge between the node a and the node b, and the directed edge between the node b and the node c are used as a reconstructed node A. The node d, the node e, and the directed edge between the node d and the node e are used as a reconstructed node B. The node f is used as a reconstructed node C. The directed edge between the node c and the node d is a directed edge between the reconstructed node A and the reconstructed node B, and the directed edge between the node e and the node f is a directed edge between the reconstructed node B and the reconstructed node C. In this way, a reconstructed subgraph is obtained through reconstruction, where the reconstructed subgraph includes the reconstructed node A, the reconstructed node B, the reconstructed node C, the directed edge between the reconstructed node A and the reconstructed node B, and the directed edge between the reconstructed node B and the reconstructed node C. It can be found that the reconstructed node A, the reconstructed node B, and the reconstructed node C each are essentially a subgraph whose size is smaller than that of the subgraph, that is, the reconstructed node A, the reconstructed node B, and the reconstructed node C are of a graph structure.

Performing thread division on a reconstructed node is dividing each node included in the reconstructed node into at least one child node, to obtain a thread-level subgraph formed by a plurality of child nodes and directed edges between the plurality of child nodes. Directed edges between any two child nodes in the thread-level subgraph are determined based on directed edges between nodes that can be divided to obtain the any two child nodes, and at least one child node obtained by dividing a same node may be concurrently executed. It should be understood that during thread division, because one node is divided into at least one child node, input data of the node and output data of the node are also divided into an equal quantity of threads. For example, the input data of the node is also divided into at least one piece of input sub-data, and the at least one piece of input sub-data is input data of the at least one child node, that is, the at least one piece of input sub-data one-to-one corresponds to the at least one child node, and output data of the at least one child node forms the output data of the node. Whether the node can be divided into a plurality of child nodes is determined based on whether the input data of the node can be divided. If the input data of the node can be divided into a plurality of pieces of input sub-data, the node can be divided into the plurality of child nodes; otherwise, the node cannot be divided into the plurality of child nodes. For example, a node 1 is represented as a plus sign, and input data of the node 1 is data A and data B. The data A may be divided into sub-data A1 and sub-data A2, and the data B may be divided into sub-data B1 and sub-data B2. In this case, the node 1 is divided into a child node 10 and a child node 11. Both the child node 10 and the child node 11 are represented as a plus sign, an input of the child node 10 is the sub-data A1 and the sub-data B1, and an input of the child node 11 is the sub-data A2 and the sub-data B2.

It should be understood that in this application, a directed edge in the computation graph, the subgraph, the reconstructed subgraph, and the thread-level subgraph may include a data edge and a control edge.

Further, in this application, cache (cache) occupation of the computation graph may be analyzed, and dependency may be added between threads in the thread-level subgraph, to control a concurrency degree of the threads, and improve computing resource utilization and storage efficiency.

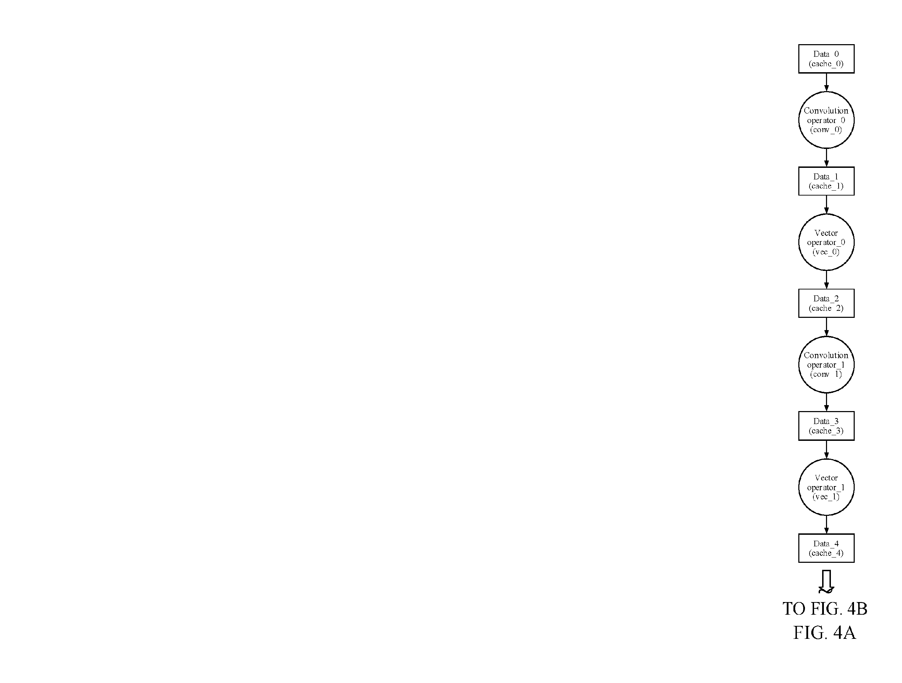

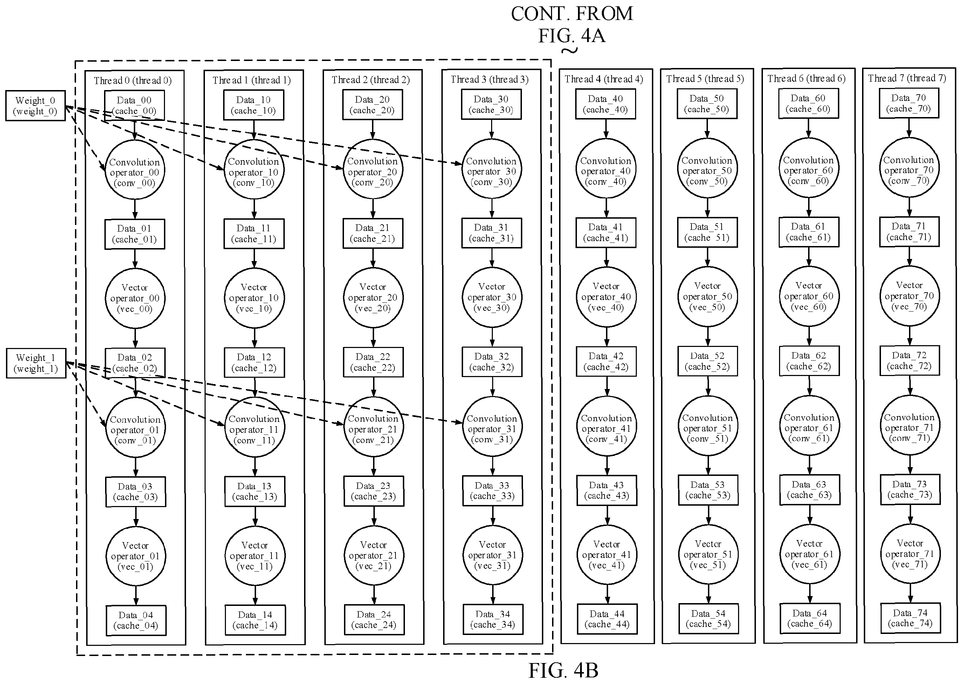

For example, FIG. 4A and FIG. 4B are a diagram of thread division according to an embodiment of this application. As shown in FIG. 4A and FIG. 4B, a reconstructed node includes a convolution operator_0 node, a vector operator_0 node, a convolution operator_1 node, a vector operator_1 node, a directed edge between the convolution operator_0 node and the vector operator_0 node, a directed edge between the vector operator_0 node and the convolution operator_1 node, and a directed edge between the convolution operator_1 node and the vector operator_1 node. The convolution operator_0 node, the vector operator_0 node, the convolution operator_1 node, and the vector operator_1 node are all divided into eight threads, that is, each of the convolution operator_0 node, the vector operator_0 node, the convolution operator_1 node, and the vector operator_1 node is divided into eight child nodes, so that child nodes in the eight threads and directed edges between the child nodes in the eight threads form a thread-level subgraph. FIG. 4A and FIG. 4B show only directed edges between child nodes in each of the eight threads. It should be understood that there may also be a directed edge (not shown in FIG. 4A and FIG. 4B) between child nodes between threads in the eight threads, and a synchronization point (not shown in FIG. 4A and FIG. 4B) may alternatively be inserted between the threads in the eight threads. Similarly, input data and output data of the convolution operator_0 node, the vector operator_0 node, the convolution operator_1 node, and the vector operator_1 node all further need to be divided into eight threads, that is, each of data_0, data_1, data_2, data_3, and data_4 is divided into eight sub-data. A concurrency degree of the eight threads in the thread-level subgraph shown in FIG. 4A and FIG. 4B is 4, that is, four of the eight threads may be concurrently executed, and the other four threads may be concurrently executed.

It should be noted that, because thread division is performed on nodes in the reconstructed node, there is definitely synchronization between the threads in the thread-level subgraph. This application can implement synchronization between the threads based on synchronization points that are inserted between the threads in the thread-level subgraph and on which data between the nodes in the reconstructed node (or computation graph or subgraph) depends. In other words, a quantity of threads segmented by each node in the reconstructed node may be the same or may be different. Between nodes with different quantities of threads, there is an aggregation child node and a split child node in a thread-level subgraph obtained through division.

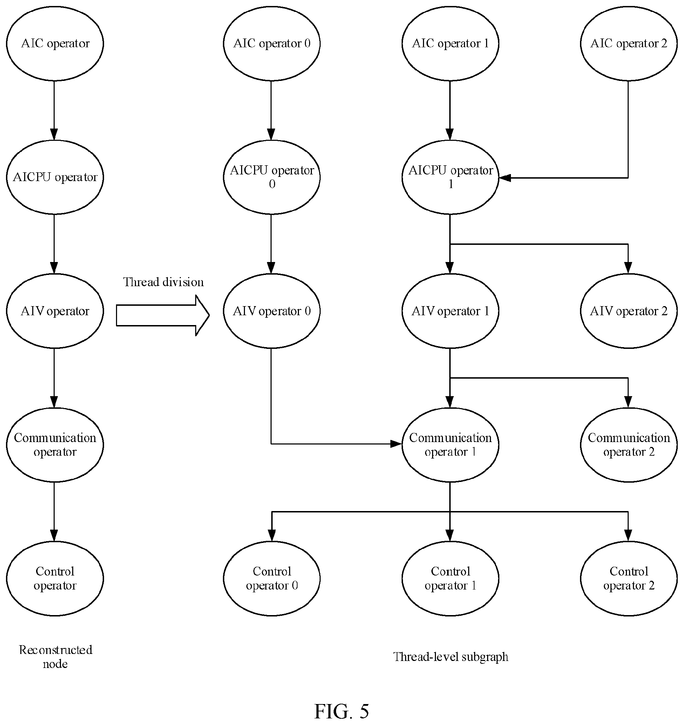

For example, FIG. 5 is a diagram of other thread division according to an embodiment of this application. As shown in FIG. 5, a reconstructed node includes an artificial intelligence matrix (artificial intelligence cube, AIC) operator node, an artificial intelligence matrix central processing unit (artificial intelligence CPU, AICPU) operator node, an artificial intelligence vector (artificial intelligence vector, AIV) operator node, a communication operator node, and a control operator node, a directed edge between the AIC operator node and the AICPU operator node, a directed edge between the AICPU operator node and the AIV operator node, a directed edge between the AIV operator node and the communication operator node, and a directed edge between the communication operator node and the control operator node. During thread division, the AIC operator node, the AIV operator node, and the control operator node are all divided into three threads; and the AICPU operator node and the communication operator node are all divided into two threads. An AIV operator 1 child node obtained through division is a split child node, and a communication operator 1 child node and an AICPU operator 1 child node are aggregation child nodes and are also split child nodes.

During subgraph reconstruction, the subgraph segmentation unit 103 determines, according to a subgraph segmentation strategy, a reconstructed node in the reconstructed subgraph into which any node in the subgraph is to be segmented. In addition, during thread segmentation, the subgraph segmentation unit 103 determines, according to the subgraph segmentation strategy, a quantity of threads (threading num) into which the any node is divided or a quantity of child nodes obtained by dividing the any node and a concurrency degree (window size) of any child node. In this application, the subgraph segmentation strategy is generated in the following three manners.

Subgraph segmentation strategy generation manner 1

During subgraph segmentation, intervals are divided based on differential information of tensor arrangement shapes (tensor shapes) on the subgraph, and then a quantity of prior threads and a prior concurrency degree are calculated for each interval. The differential information identifies a difference between tensors. An optional calculation manner includes calculating an absolute value of a difference between bytes occupied by tensors, and the like. Specifically, tensor (tensor) occupation of input data and output data of each node in the subgraph is counted, and clustering is performed based on a size of the differential information of the tensor arrangement shapes, so that nodes whose tensor arrangement shape does not change greatly are grouped into a reconstructed node.

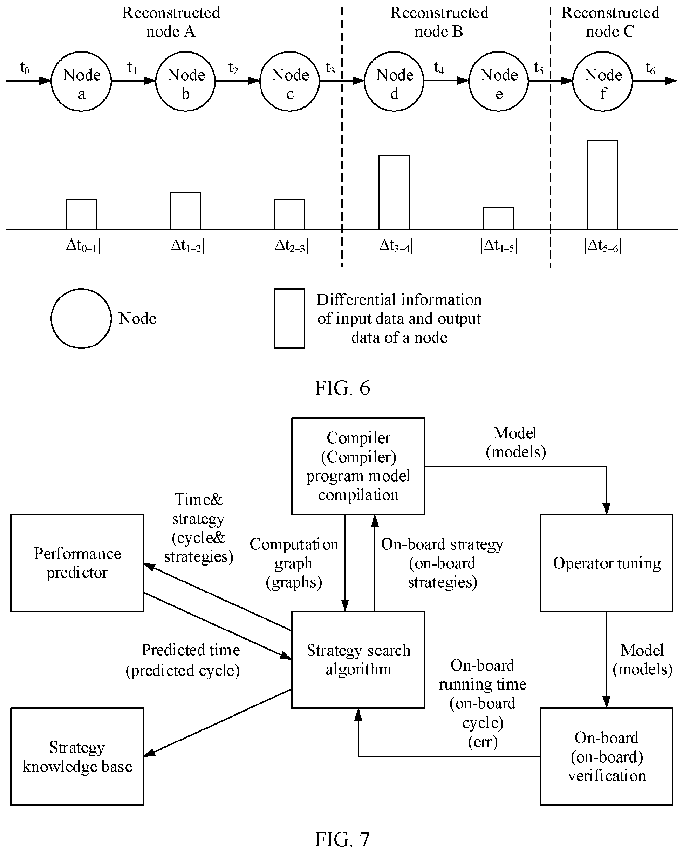

For example, FIG. 6 is a diagram of dividing nodes into reconstructed nodes according to an embodiment of this application. As shown in FIG. 6, a subgraph includes a node a, a node b, a node c, a node d, a node e, a node f, and a directed edge between the node a and the node b, a directed edge between the node b and the node c, a directed edge between the node c and the node d, a directed edge between the node d and the node e, and a directed edge between the node e and the node f. A quantity of bytes occupied by an input tensor and a quantity of bytes occupied by an output tensor of the node a are $t_0$ and $t_1$. A quantity of bytes occupied by an input tensor and a quantity of bytes occupied by an output tensor of the node b are $t_1$ and $t_2$. A quantity of bytes occupied by an input tensor and a quantity of bytes occupied by an output tensor of the node c are $t_2$ and $t_3$. A quantity of bytes occupied by an input tensor and a quantity of bytes occupied by an output tensor of the node

d are $t_3$ and $t_4$. A quantity of bytes occupied by an input tensor and a quantity of bytes occupied by an output tensor of the node e are $t_4$ and $t_5$. A quantity of bytes occupied by an input tensor and a quantity of bytes occupied by an output tensor of the node f are $t_5$ and $t_6$. Therefore, differential information of the input tensor and the output tensor of the node a is $|\Delta t_{0-1}|$; differential information of the input tensor and the output tensor of the node b is $|\Delta t_{1-2}|$; differential information of the input tensor and the output tensor of the node c is $|\Delta t_{2-3}|$; differential information of the input tensor and the output tensor of the node d is $|\Delta t_{3-4}|$; differential information of the input tensor and the output tensor of the node e is $|\Delta t_{4-5}|$; and differential information of the input tensor and the output tensor of the node f is $|\Delta t_{5-6}|$. Because a sum of $|\Delta t_{0-1}|$, $|\Delta t_{1-2}|$, and $|\Delta t_{2-3}|$, and a sum of $|\Delta t_{3-4}|$ and $|\Delta t_{4-5}|$ are close to $|\Delta t_{5-6}|$, the node a, the node b, the node c, the directed edge between the node a and the node b, and the directed edge between the node b and the node c may be used as a reconstructed node A; the node d, the node e, and the directed edge between the node d and the node e are used as a reconstructed node B; and the node f is used as a reconstructed node C.

A principle for selecting the quantity of threads and the concurrency degree is as follows: A sum (S) of all tensor data amounts in concurrent threads is less than a capacity (size) of a level-2 cache (L2 cache). For example, when the concurrency degree window size=2, a minimum quantity n of segmented threads may be calculated. If $\lceil S/C_{cache} \rceil = 1$, where $C_{cache}$ represents the capacity of the level-2 cache, it indicates that no thread needs to be segmented, and all data can be stored in the level-2 cache. To consider concurrency, n=2; otherwise,

$$n = \lceil S/C_{cache} \rceil$$. Further, if a quantity of concurrent threads is expected to be increased, for example, when the concurrency degree window size=4, a minimum quantity of segmented threads may be changed to 2n on a basis that a capacity requirement for the level-2 cache remains unchanged.

Subgraph segmentation strategy generation manner 2

An optimal subgraph segmentation strategy is found via an automatic tuning (Autotune) tool automatic search algorithm and is stored in a knowledge base. The strategy stored in the knowledge base is directly read during compilation.

For example, FIG. 7 is a diagram of generating a subgraph segmentation strategy according to an embodiment of this application. As shown in FIG. 7, the subgraph segmentation strategy is generated for a computation graph of a neural network model via a strategy search algorithm. After the subgraph segmentation strategy is applied, the neural network model is compiled, autotune tuning may be performed on a newly generated operator shape during compilation, and on-board verification is performed to obtain execution performance of the computation graph of the neural network model, for example, obtain on-board running time (on-board cycles) and fed back the on-board running time to the strategy search algorithm. After a plurality of iterations, an optimal subgraph segmentation strategy during tuning is stored in a strategy knowledge base for practical application. To shorten time of model compilation/operator tuning/on-board verification, a performance predictor may directly evaluate the execution performance of the computation graph in the subgraph segmentation strategy, and feed back an evaluation result to the strategy search algorithm. Finally, the strategy search algorithm is used to adjust the subgraph segmentation strategy based on the result fed back by the performance predictor, to obtain the optimal subgraph segmentation strategy and store the optimal subgraph segmentation strategy in the strategy knowledge base for the actual application.

Subgraph segmentation strategy generation manner 3

A strategy generation neural network model is trained offline and is integrated into the graph compilation apparatus 100. During compilation, the strategy generation neural network model is directly invoked to generate a subgraph segmentation strategy through inference.

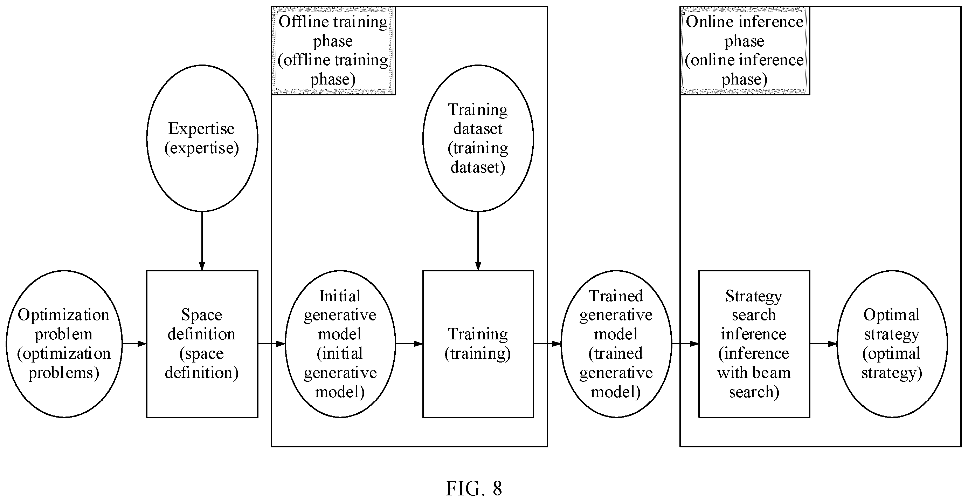

For example, FIG. 8 is a diagram of generating another subgraph segmentation strategy according to an embodiment of this application. As shown in FIG. 8, a dataset is prepared offline, and the dataset includes a large quantity of computation graphs with to-be-output subgraph segmentation strategies. A strategy generation neural network model generates the subgraph segmentation strategy for the computation graph in the dataset, and the strategy generation neural network model is updated and improved according to algorithms such as reinforcement learning (RL) and supervised training. Finally, a trained strategy generation neural network model is used as a strategy generator in an online inference phase, and is directly invoked during compilation to generate the subgraph segmentation strategy.

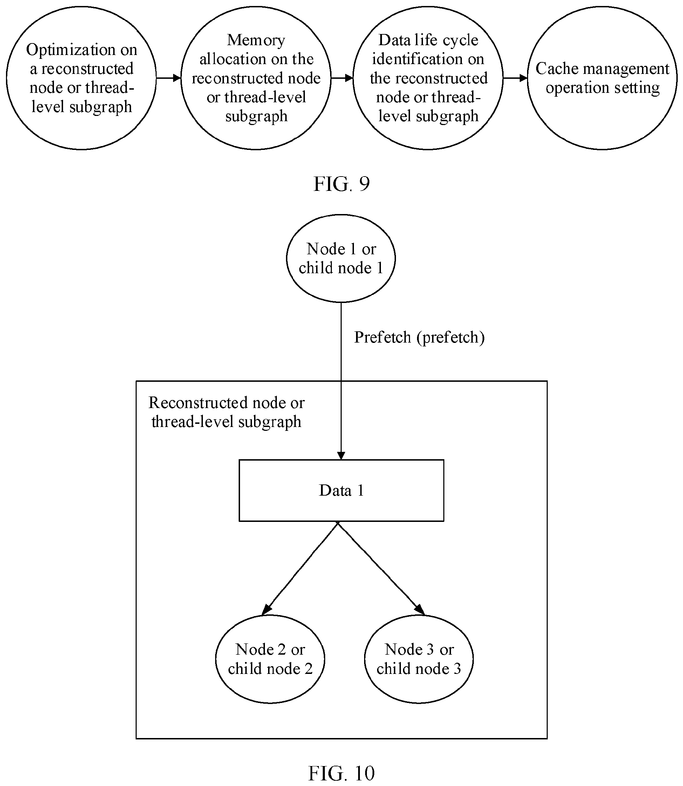

The resource allocation unit 104 performs resource allocation, data life cycle identification, and cache management operation setting by using a reconstructed node or thread-level subgraph as a scheduling unit. Optionally, the resource allocation unit 104 may further optimize the reconstructed node or thread-level subgraph, as shown in FIG. 9. Performing resource allocation, data life cycle identification, and cache management operation setting by using a reconstructed node or thread-level subgraph as a scheduling unit includes performing resource allocation (for example, memory allocation), life cycle identification of input data and output data, and cache management operation setting on each node in the reconstructed node, or performing resource allocation, life cycle identification of input data and output data, and cache management operation setting on each child node in the thread-level subgraph.

It should be understood that the subgraph segmentation unit 103 obtains the reconstructed node or thread-level subgraph according to the subgraph segmentation strategy. In this application, scheduling is performed by using the reconstructed node or thread-level subgraph as a scheduling unit. A scope of the reconstructed node or thread-level subgraph may be represented via a same scope (scope) attribute value, or may be represented via a function operator (functionOp). In this way, one reconstructed node or one thread-level subgraph can be presented as a whole to a software stack through such representation, thereby facilitating compilation and execution.

Optimizing the reconstructed node or thread-level subgraph includes optimizing, by using a reconstructed node or thread-level subgraph as a scheduling unit, an operator represented by a node in the reconstructed node or a child node in the thread-level subgraph, where optimization includes operator fusion optimization, single-operator optimization, constant folding optimization, data type (dtype) optimization, format (format) optimization, and the like. It should be understood that optimization of an operator in the reconstructed node or thread-level subgraph includes but is not limited to the foregoing optimization.

Performing resource allocation on the reconstructed node or thread-level subgraph includes performing memory allocation on an input, an output, and a temporary memory area (workspace) of the node in the reconstructed node or the child node in the thread-level subgraph. It should be understood that when memory allocation is performed on the reconstructed node or thread-level subgraph, a memory reuse scope may be between reconstructed nodes or between thread-level subgraphs, or may be within the reconstructed node or thread-level subgraph.

It should be noted that memory allocation includes allocation of a memory for storage in the graph compilation apparatus 100 and allocation of a memory for storage in the graph execution apparatus 200.

Performing data life cycle identification on the reconstructed node or thread-level subgraph includes performing life cycle identification on the input data and output data of each node in the reconstructed node or each child node in the thread-level subgraph, for example, identifying data life cycles such as data generation (produce), data consumption (consume), first data read, last data read, first data write, and last data write. It should be noted that data generation indicates that input data of a node is generated by previous several nodes or input data of a child node is generated by previous several child nodes, and data consumption indicates that output data of the node is used as input data of subsequent several nodes or output data of the child node is used as input data of subsequent several child nodes.

Cache management operation setting is setting a cache management operation for input data and output data of each node in the reconstructed node or each child node in the thread-level subgraph. The set cache management operation includes operations such as a prefetch (prefetch) operation, an invalid (invalid) operation, a writeback (writeback) operation, and a flush (flush) operation. This maximizes cache use performance during execution. The following provides detailed descriptions.

(1) The prefetch operation indicates prefetching data that comes from the outside of the reconstructed node or thread-level subgraph, namely, output data of a node in a non-reconstructed node or a child node in a non-thread-level subgraph, and prewriting the data into a cache. This reduces performance consumption, during computing, caused by reading the data from a memory.

For example, FIG. 10 is a diagram of a data prefetch operation according to an embodiment of this application. As shown in FIG. 10, if output data of a node 1 outside a reconstructed node is data 1, and the data 1 is input data of a node 2 and a node 3 in the reconstructed node, the prefetch operation is performed on the data 1; or if output data of a child node 1 outside a thread-level subgraph is data 1, and the data 1 is input data of a child node 2 and a child node 3 in the thread-level subgraph, the prefetch operation is performed on the data 1. Before the node 2, the node 3, or the child node 2, or the child node 3 is executed, the data 1 is stored in a memory, and prefetching the data 1 is also writing the data 1 from the memory to a cache.

(2) The invalid operation indicates that, after data consumed in the reconstructed node or thread-level subgraph is used for the last time, the data in a cache is invalid. This reduces performance consumption caused by flushing back to the memory.

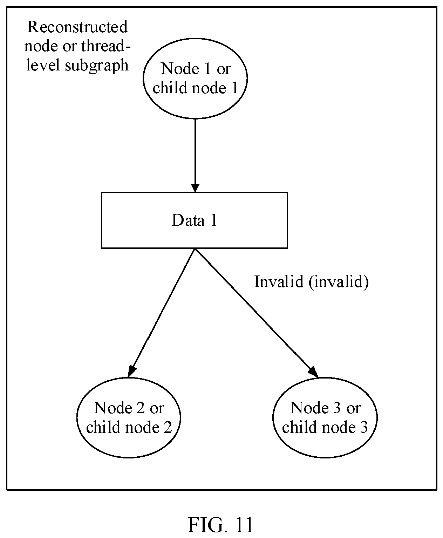

For example, FIG. 11 is a diagram of a data invalid operation according to an embodiment of this application. As shown in FIG. 11, output data of a node 1 in a reconstructed node is data 1, and the data 1 is input data of a node 2 and node 3 in the reconstructed node; and after being used as the input data of the node 2 and node 3 in the reconstructed node, the data 1 is no longer used as input data of another node in the reconstructed node, and the invalid operation is performed on the data 1, that is, the data 1 in a cache is deleted. Alternatively, output data of a child node 1 in a thread-level subgraph is data 1, the data 1 is input data of a child node 2 and child node 3 in the thread-level subgraph; and after being used as the input data of the child node 2 and the child node 3 in the thread-level subgraph, the data 1 is no longer used as input data of another child node in the thread-level subgraph, and the invalid operation is performed on the data 1, that is, the data 1 in a cache is deleted.

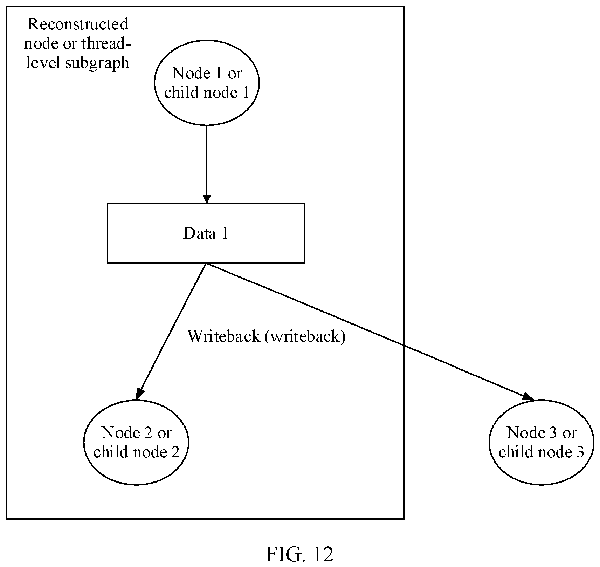

(3) The writeback operation indicates that, for data used in the reconstructed node or thread-level subgraph, if the data is also used outside the reconstructed node or the thread-level subgraph, the data is written back to a memory when being generated. For example, FIG. 12 is a diagram of a data writeback operation according to an embodiment of this application. As shown in FIG. 12, output data of a node 1 in a reconstructed node is data 1, and if the data 1 is also input data of a node 3 outside the reconstructed node in addition to being input data of a node 2 in the reconstructed node, the writeback operation is performed on the data 1, that is, the data 1 in a cache is written into a memory. Alternatively, output data of a child node 1 in a thread-level subgraph is data 1, and if the data 1 is also input data of a child node 3 outside the thread-level subgraph in addition to being input data of a child node 2 in the thread-level subgraph, the writeback operation is performed on the data 1, that is, the data 1 in a cache is written into a memory. (4) The flush operation indicates that, after a piece of data is written back to a memory, an invalid operation is added to delete the data from a cache.

The compilation unit 105 is configured to perform compilation by using a reconstructed node or a thread-level subgraph as a scheduling unit, and compile each reconstructed node or each thread-level subgraph into a scheduling unit.

Specifically, the compilation unit 105 compiles each reconstructed node, and represents computing, a cache management operation, and a dependency relationship of each node in the reconstructed node, that is, generates binary execution code, representation of the dependency relationship, and representation of the cache management operation of each node. Alternatively, the compilation unit 105 compiles each thread-level subgraph, and represents computing, a cache management operation task, and a dependency relationship of each child node in the thread-level subgraph, that is, generates binary execution code, representation of the dependency relationship, and representation of a cache management operation of each child node. A dependency relationship indicates a directed edge, for example, a directed edge between nodes, a directed edge between reconstructed nodes, or a directed edge between child nodes. It should be understood that the cache management operation of each node or child node is set by the resource allocation unit 104.

The compilation unit 105 compiles each reconstructed node to obtain compiled data of the reconstructed node. Compiling each reconstructed node includes compiling each node in the reconstructed node to obtain compiled data of the node in the reconstructed node. Therefore, the compiled data of each reconstructed node includes the compiled data of each node in the reconstructed node, and the compiled data of the node includes information such as a hardware-aware task generated for the node and a descriptor of the node. In this application, the hardware-aware task includes binary execution code of a computing operator that is executable by hardware during running, arguments (args) of the binary execution code, and the like; and therefore, a task corresponding to the node includes the binary execution code of the computing operator represented by the node and the arguments of the binary execution code. The descriptor includes a dependency relationship, cache management operation indication information, and the like; and therefore, the descriptor of the node includes the dependency relationship of the node and the cache management operation indication information of the node, and the cache management operation indication information of the node indicates to perform a corresponding cache management operation (such as prefetch, invalid, writeback, and flush) on input data and output data of the node during execution.

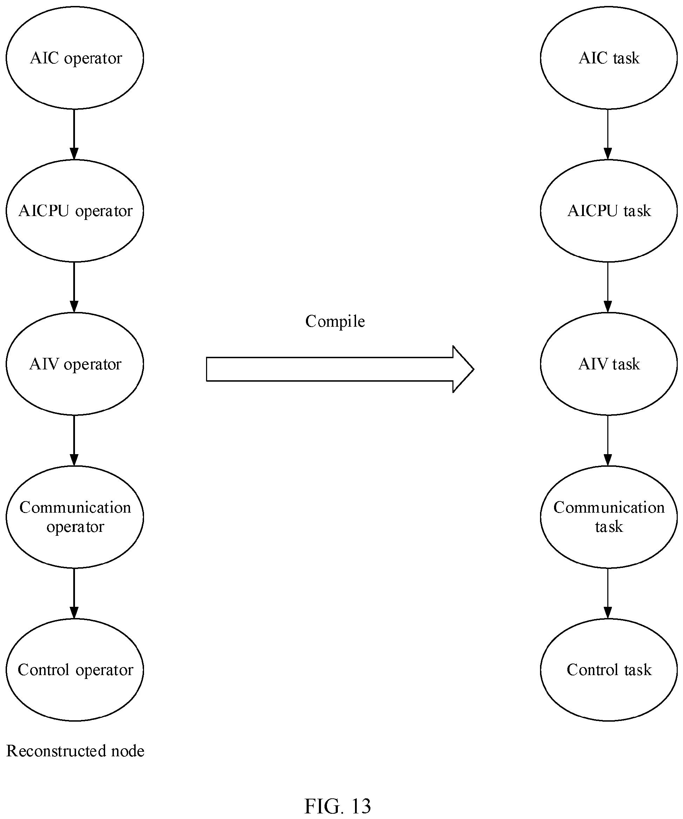

For example, FIG. 13 is a diagram of compiling the reconstructed node shown in FIG. 5. As shown in FIG. 13, the reconstructed node includes five nodes: the AIC operator node, the AICPU operator node, the AIV operator node, the communication operator node, and the control operator node; and the five nodes are separately compiled to generate a task corresponding to each of the five nodes. In addition, the reconstructed node includes directed edges between the five nodes; and therefore, a descriptor (not shown in FIG. 13) of each of the five nodes is further generated during compilation, where the descriptor of the node includes a dependency relationship of the node, so that hardware can be aware of an execution sequence of the five nodes during execution. In addition, the resource allocation unit 104 sets a corresponding cache management operation for each node; and therefore, the descriptor of the node further includes cache management operation indication information of input data and output data of the node.

Alternatively, the compilation unit 105 compiles each thread-level subgraph to obtain compiled data of the thread-level subgraph, where the compiled data of the thread-level subgraph is also compiled data of a reconstructed node in the thread-level subgraph obtained through division. Compiling each thread-level subgraph includes compiling each child node in the thread-level subgraph to obtain compiled data of the child node in the thread-level subgraph. Therefore, the compiled data of each thread-level subgraph includes compiled data of each child node in the thread-level subgraph, and the compiled data of the child node includes information such as a hardware-aware task generated for the child node and a descriptor of the child node. In this application, the hardware-aware task includes binary execution code of a computing operator that is executable by hardware during running, arguments (args) of the binary execution code, and the like; and therefore, a task corresponding to the child node includes the binary execution code of the computing operator represented by the child node and the arguments of the binary execution code. The descriptor includes a dependency relationship, cache management operation indication information, and the like; and therefore, the descriptor of the child node includes the dependency relationship of the child node and the cache management operation indication information of the child node, and the cache management operation indication information of the child node indicates to perform a corresponding cache management operation (such as prefetch, invalid, writeback, or flush) on input data and output data of the child node during execution.

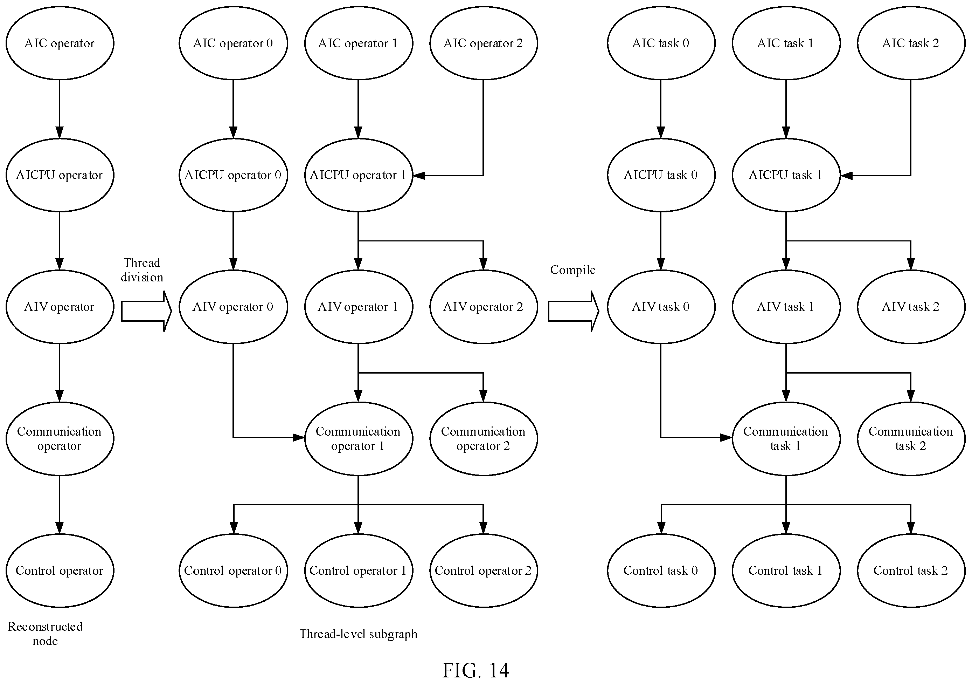

For example, FIG. 14 is a diagram of compiling the thread-level subgraph shown in FIG. 5. As shown in FIG. 14, the thread-level subgraph includes 13 child nodes, and the 13 child nodes are separately compiled to generate a task corresponding to each of the 13 child nodes. In addition, the thread-level subgraph further includes directed edges between the 13 child nodes; and therefore, during compilation, a descriptor (not shown in FIG. 14) of each of the 13 child nodes is further generated, where the descriptor of the child node includes a dependency relationship of the child node, so that hardware can be aware of an execution sequence of the 13 child nodes during execution. In addition, the resource allocation unit 104 sets a corresponding cache management operation for each child node; and therefore, the descriptor of the child node further includes cache management operation indication information of input data and output data of the child node.

In this application, compiled data of each node or child node includes a type of a computation apparatus for executing the node or child node. Specifically, types of heterogeneous processors are added to each node or child node task, so that during execution, the hardware is scheduled to a corresponding hardware acceleration unit for processing, thereby ensuring concurrent execution of the heterogeneous processors. In this way, during execution, heterogeneous operator nodes are scheduled to the heterogeneous processor, so that the heterogeneous operator nodes perform concurrent execution, for example, concurrent execution of a CPU operator node, a GPU operator node, and a chip-specific integrated circuit (Application Specific Integrated Circuit, ASIC) operator child node.

In this application, the threads in the thread-level subgraph may be concurrently executed, compiled data of each child node in the thread-level subgraph further includes another child node that is concurrently executed with the child node, and the another child node and the child node are obtained by dividing a same node. In this way, when a plurality of threads are executed, the threads can be concurrently executed.

In this application, a dependency relationship of a node may be represented as a quantity of other nodes on which the node depends and another node that depends on the node, and a dependency relationship of a child node may be represented as a quantity of other child nodes on which the child node depends and another child node that depends on the child node.

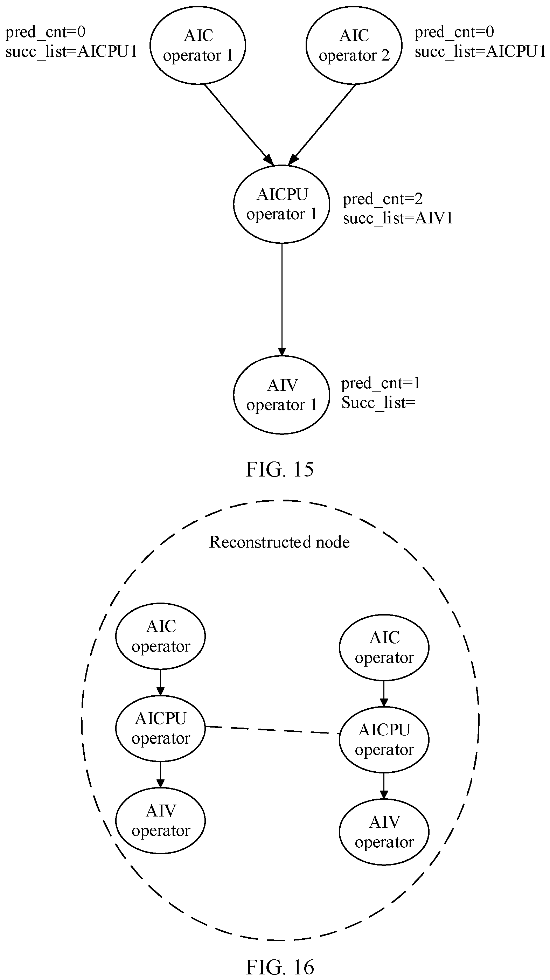

For example, FIG. 15 is a diagram of representing a dependency relationship between some child nodes in the thread-level subgraph shown in FIG. 5. As shown in FIG. 15, the dependency relationship may be represented via a previous (predecessor, pred) and a subsequent (successor, succ), where pred_cnt represents a quantity of previous nodes on which a node depends, and succ_list represents a subsequent node that depends on the node. For example, a quantity of previous nodes on which an AIC operator 1 child node depends is 0, and a child node that depends on the AIC operator 1 child node is an AICPU operator 1 child node; a quantity of previous nodes on which an AIC operator child node 2 depends is 0, and a child node that depends on the AIC operator child node 2 is the AICPU operator 1 child node; and a quantity of previous nodes on which the AICPU operator 1 child node depends is 2, and a child node that depends on the AICPU operator 1 child node is an AIV operator 1 child node.

In this application, representation of the dependency relationship includes but is not limited to the following cases:

(1) Representation of a directed edge

In a first manner, both data edges and control edges between nodes in a reconstructed node may be represented via a quantity of other nodes on which the node depends and another node that depends on the node, or both data edges and control edges between child nodes in a thread-level subgraph may be represented via a quantity of other child nodes on which the child node depends and another child node that depends on the child node. That is, both data edges and control edges between nodes in a reconstructed node or data edges and control edges between child nodes in a thread-level subgraph may be represented via the foregoing pred_cnt and succ_list, and are compiled in compiled data of the node or the child node.

For example, FIG. 16 is a diagram of directed edges according to an embodiment of this application. As shown in FIG. 16, a solid line between nodes represents a data edge. For example, a solid line between a left AIC operator node and a left AICPU operator node represents a data edge between the left AIC operator node and the left AICPU operator node. A quantity (pred_cnt) of other nodes on which the left AIC operator node depends is 0, another node (succ_list) that depends on the left AIC operator node is the left AICPU operator node, and both are compiled into compiled data of the left AIC operator node. A dashed line between nodes indicates a control edge. For example, a dashed line between the left AICPU operator node and a right AICPU operator node indicates a control edge between the left AICPU operator node and the right AICPU operator node. A quantity (pred_cnt) of other nodes on which the left AICPU operator node depends is 1, namely, the left AIC operator node, other nodes (succ_list) that depend on the left AICPU operator node are the right AICPU operator node and a left AIV operator node, and both are compiled into compiled data of the left AICPU operator node.

In a second manner, control edges between nodes in different reconstructed nodes in a same stream are converted into control edges between the different reconstructed nodes; and the control edges between the different reconstructed nodes may be represented via a quantity of other reconstructed nodes on which the reconstructed node depends and another reconstructed node that depends on the reconstructed node, that is, represented via the foregoing pred_cnt and succ_list. It should be noted that the different reconstructed nodes may be reconstructed nodes in a same reconstructed subgraph, or may be reconstructed nodes in different reconstructed subgraphs.

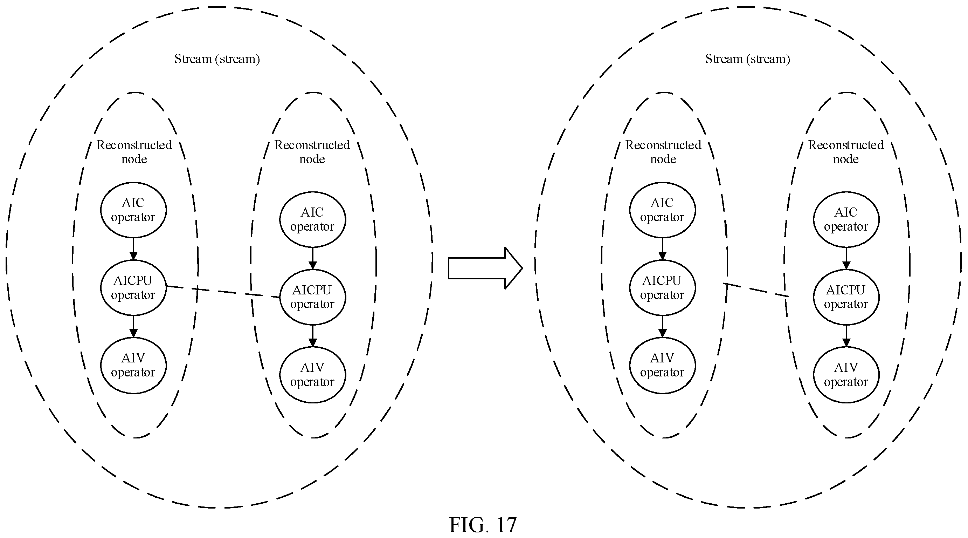

For example, FIG. 17 is a diagram of representation of a control edge according to an embodiment of this application. As shown in FIG. 17, two reconstructed nodes are in a same stream. A control edge between an AICPU operator node in one reconstructed node and an AICPU operator node in the other reconstructed node is converted into a control edge between the two reconstructed nodes, and the control edge between the two reconstructed nodes is represented as a dependency relationship between the two reconstructed nodes, and is compiled into compiled data of the two reconstructed nodes.

In a third manner, a sending (send) operator node and a receiving (recv) operator node are added to a control edge between nodes in different reconstructed nodes in different streams, to convert into representation of a control edge between the streams, and control a sequence between the streams. Specifically, the control edge between the nodes in the different reconstructed nodes in the different streams is converted into a control edge between the reconstructed node in a stream and the sending operator node, a control edge between the sending operator node and the receiving operator node, and a control edge between the receiving operator node and the reconstructed node in another stream. The sending operator node may send a synchronization signal to the receiving operator node, where the synchronization signal may indicate that execution of all nodes on which the sending operator node depends is completed. In this way, after the receiving operator node receives the synchronization signal sent by the sending operator node, the reconstructed node that has the control edge with the receiving operator node can be executed. It should be noted that the different reconstructed nodes may be reconstructed nodes in a same reconstructed subgraph, or may be reconstructed nodes in different reconstructed subgraphs.

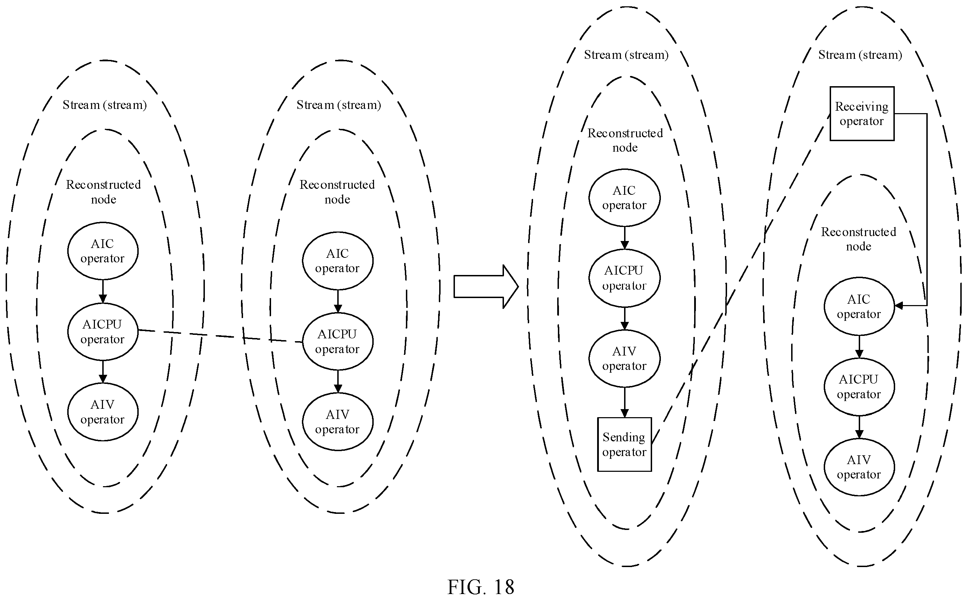

For example, FIG. 18 is a diagram of representation of another control edge according to an embodiment of this application. As shown in FIG. 18, two reconstructed nodes are respectively in two streams. There is a control edge between an AICPU operator node in one reconstructed node and an AICPU operator node in the other reconstructed node. A sending operator node is added to the reconstructed node or the stream including the reconstructed node; and the sending operator node depends on the reconstructed node, that is, a directed edge (for example, a data edge) is added between the sending operator node and a node that is last executed in the node, for example, a data edge is added between an AIV operator node that is last executed in the reconstructed node and the sending operator node. A receiving operator node is added to the stream including the other reconstructed node; and the other reconstructed node depends on the receiving operator node, that is, a directed edge (for example, a data edge) is added between the receiving operator node and a node that is first executed in the other node, for example, a data edge is added between an AIC operator node that is first executed in the other reconstructed node and the receiving operator node. There is also a control edge between the sending operator node and the receiving operator node. All these edges are converted into a control edge between the two streams for representation. The data edge added between the AIV operator node that is last executed in the reconstructed node and the sending operator node, and the control edge between the sending operator node and the receiving operator node may be represented as a dependency relationship of the sending operator node, and are compiled into compiled data of the reconstructed node. Similarly, the control edge between the sending operator node and the receiving operator node, and the data edge between the receiving operator node and the AIC operator node that is first executed in the other reconstructed node may be represented as a dependency relationship of the receiving operator node, and are compiled into compiled data of the other reconstructed node.

(2) Representation of distributed execution

Because distributed execution may be performed on a neural network model, distributed execution is also supported when a reconstructed node or a thread-level subgraph is used as a scheduling unit in this application. For example, different reconstructed nodes may be executed in different computation apparatuses, or different thread-level subgraphs may be executed in different computation apparatuses, thereby implementing distributed execution. It should be noted that the different reconstructed nodes may be reconstructed nodes in a same reconstructed subgraph, or may be reconstructed nodes in different reconstructed subgraphs. Different thread-level subgraphs may be obtained by performing thread division on reconstructed nodes in a same reconstructed subgraph, or may be obtained by performing thread division on reconstructed nodes in different reconstructed subgraphs.

During distributed execution of a neural network, data exchange is related between computation apparatuses. In this application, distributed execution is performed by using a reconstructed node or a thread-level subgraph as a scheduling unit, and data exchange between the computation apparatuses may also be implemented. The computation apparatus in this application may be a chip (die), a processor, or the like. In this application, some set communication operators implement data communication between a plurality of computation apparatuses and a plurality of services (servers). For example, the set communication operator transmits data from one computation apparatus to another computation apparatus. Therefore, in this application, there is a directed edge between a set communication operator node and a node in a reconstructed node, or there is a directed edge between a set communication operator node and a child node in a thread-level subgraph. The directed edge between the set communication operator node and the node in the reconstructed node, or the directed edge between the set communication operator node and the child node in the thread-level subgraph may be represented as a dependency relationship of the set communication operator node, a dependency relationship of the node in the reconstructed node, or a dependency relationship of the child node in the thread-level subgraph. The dependency relationship of the set communication operator node may be represented as a quantity of nodes or child nodes on which the set communication operator node depends and a node or child node that depends on the set communication operator node, that is, represented via pred_cnt and succ_list. It should be understood that the set communication operator node is also a node representing a set communication operator. Like those performed on a node in a computation graph, a subgraph, or a reconstructed node, operations such as thread division and compilation may be performed on the set communication operator node. When data that needs to be transferred by the set communication operator node is output data of a child node, thread division is optionally performed on the set communication operator node.

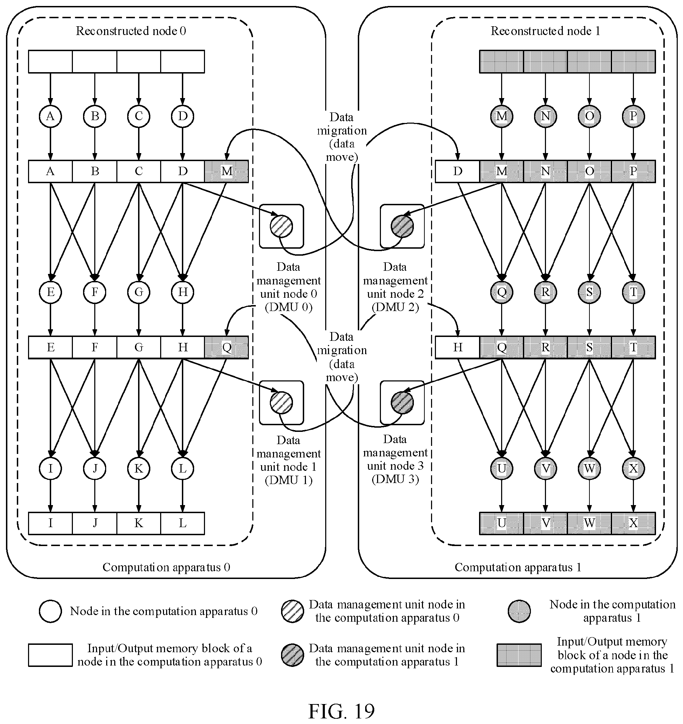

For example, FIG. 19 is a diagram of representation of distributed execution according to an embodiment of this application. As shown in FIG. 19, distributed execution is performed on a reconstructed node 0 and a reconstructed node 1. Output data (an output memory block D) of a node D in the reconstructed node 0 is input data of a node Q in the reconstructed node 1, and input data of a node H in the reconstructed node 0 includes output data (an output memory block M) of a node M in the reconstructed node 1. A computation apparatus 0 performs the reconstructed node 0, and therefore the computation apparatus 0 executes the node D and the node H. A computation apparatus 1 executes the reconstructed node 1, and therefore the computation apparatus 1 executes the node M and the node Q. The output memory block D is migrated by a data management unit (data management unit, DMU) node 0 from the computation apparatus 0 to the computation apparatus 1, to serve as the input data of the node Q. The output memory block M is migrated by a data management unit node 2 from the computation apparatus 1 to the computation apparatus 0, to serve as the input data of the node H. The data management unit node 0 and the data management unit node 2 are both set communication operator nodes. In this way, during compilation, a directed edge between the node D and the data management unit node 0 may be represented as a dependency relationship of the node D, and is compiled into compiled data of the node D, where compiled data of the reconstructed node 0 includes the compiled data of the node D. The directed edge between the node D and the data management unit node 0 and a directed edge between the data management unit node 0 and the node Q are represented as a dependency relationship of the data management unit node 0, and are compiled into compiled data of the data management unit node 0, where the compiled data of the reconstructed node 0 includes the compiled data of the data management unit node 0. The directed edge between the data management unit node 0 and the node Q is represented as a dependency relationship of the node Q, and is compiled into compiled data of the node Q, where compiled data of the reconstructed node 1 includes the compiled data of the node Q. Similarly, during compilation, a directed edge between the node M and the data management unit node 2 may be represented as a dependency relationship of the node M, and is compiled into compiled data of the node M, where compiled data of the reconstructed node 1 includes the compiled data of the node M. The directed edge between the node M and the data management unit node 2 and a directed edge between the data management unit node 2 and the node H are represented as a dependency relationship of the data management unit node 2, and are compiled into compiled data of the data management unit node 2, where the compiled data of the reconstructed node 1 includes the compiled data of the data management unit node 2. The directed edge between the data management unit node 2 and the node H is represented as a dependency relationship of the node H, and is compiled into compiled data of the node H, where compiled data of the reconstructed node 0 includes the compiled data of the node H. In addition, in FIG. 19, two set communication operator nodes: a data management unit node 1 and a data management unit node 3 are further included. A directed edge between the node H and the data management unit node 1, a directed edge between the data management unit node 1 and a node F, a directed edge between the node Q and the data management unit node 3, and a directed edge between the data management unit node 3 and a node E are also represented in a same manner. Details are not described herein again.

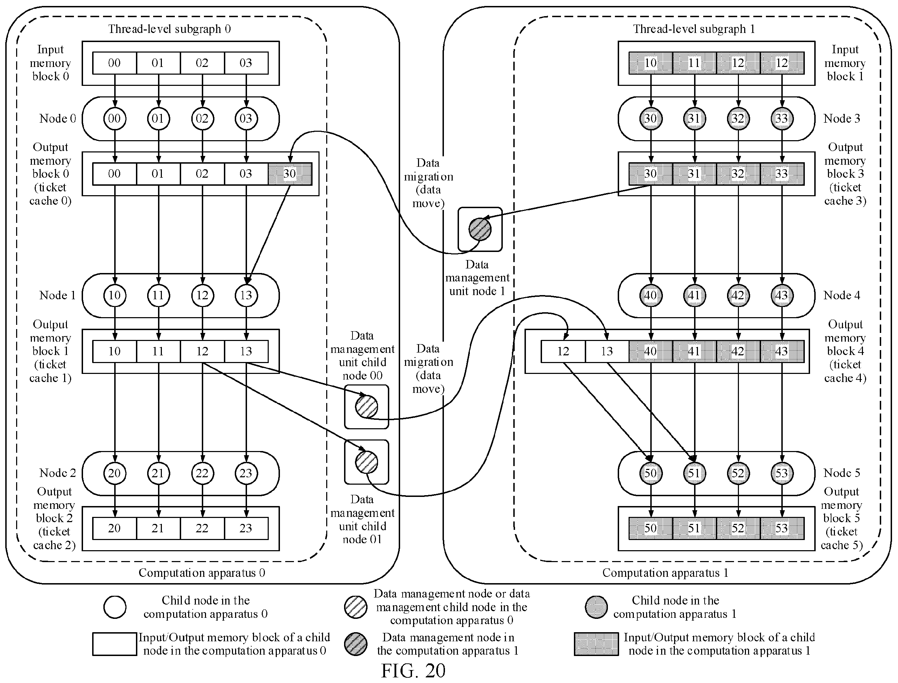

For another example, FIG. 20 is a diagram of representation of distributed execution according to an embodiment of this application. As shown in FIG. 20, distributed execution is performed on a thread-level subgraph 0 and a thread-level subgraph 1. Output data (an output memory block 30) of a child node 30 in the thread-level subgraph 1 is input data of a child node 13 in the thread-level subgraph 0. A computation apparatus 0 executes the thread-level subgraph 0, and therefore the computation apparatus 0 executes the child node 13. A computation apparatus 1 executes the thread-level subgraph 1, and therefore the computation apparatus 1 executes the child node 30. The output memory block 30 is migrated by a data management unit node 1 from the computation apparatus 1 to the computation apparatus 0, to serve as the input data of the child node 13. In this way, during compilation, a directed edge between the child node 30 and the data management unit node 1 may be represented as a dependency relationship of the child node 30, and is compiled into compiled data of the child node 30, where compiled data of the thread-level subgraph 1 includes the compiled data of the child node 30. The directed edge between the child node 30 and the data management unit node 1 and a directed edge between the data management unit node 1 and the child node 13 are represented as a dependency relationship of the data management unit node 1, and are compiled into compiled data of the data management unit node 1, where the compiled data of the thread-level subgraph 1 includes the compiled data of the data management unit node 1. The directed edge between the data management unit node 1 and the child node 13 is represented as a dependency relationship of the child node 13, and is compiled into compiled data of the child node 13, where compiled data of the thread-level subgraph 0 includes the compiled data of the child node 13. It should be understood that the data management unit node 1 may be considered as a child node of one thread divided from the data management unit node 1. In addition, in FIG. 20, a data management unit node 00 and a data management unit node 01 are further included. The data management unit node 00 and the data management unit node 01 are obtained by performing thread division on a data management unit node 0. Output data (an output memory block 12) of a child node 12 in the thread-level subgraph 0 is input data of a child node 50 in the thread-level subgraph 1, and output data (an output memory block 13) of a child node 13 in the thread-level subgraph 0 is input data of a child node 51 in the thread-level subgraph 1. The child node 12 and the child node 13 are executed by the computation apparatus 0, and the child node 50 and the child node 51 are executed by the computation apparatus 1. The output memory block 12 is migrated by the data management unit node 01 from the computation apparatus 0 to the computation apparatus 1, to serve as the input data of the child node 50. The output memory block 13 is migrated by the data management unit node 00 from the computation apparatus 0 to the computation apparatus 1, to serve as the input data of the child node 51. In this way, during compilation, a directed edge between the child node 12 and the data management unit node 01 may be represented as a dependency relationship of the child node 12, and is compiled into compiled data of the child node 12, where compiled data of the thread-level subgraph 0 includes the compiled data of the child node 12. The directed edge between the child node 12 and the data management unit node 01 and a directed edge between the data management unit node 01 and the child node 50 are represented as a dependency relationship of the data management unit node 01, and are compiled into compiled data of the data management unit node 01, where the compiled data of the thread-level subgraph 0 includes the compiled data of the data management unit node 01. The directed edge between the data management unit node 01 and the child node 50 is represented as a dependency relationship of the child node 50, and is compiled into compiled data of the child node 50, where compiled data of the thread-level subgraph 1 includes the compiled data of the child node 50. Similarly, during compilation, a directed edge between the child node 13 and the data management unit node 00 may be represented as a dependency relationship of the child node 13, and is compiled into compiled data of the child node 13, where compiled data of the thread-level subgraph 0 includes the compiled data of the child node 13. The directed edge between the child node 13 and the data management unit node 00 and a directed edge between the data management unit node 00 and the child node 51 are represented as a dependency relationship of the data management unit node 00, and are compiled into compiled data of the data management unit node 00, where the compiled data of the thread-level subgraph 0 includes the compiled data of the data management unit node 00. The directed edge between the data management unit node 00 and the child node 51 is represented as a dependency relationship of the child node 51, and is compiled into compiled data of the child node 51, where compiled data of the thread-level subgraph 1 includes the compiled data of the child node 51.

2. Graph execution apparatus 200

The graph execution apparatus 200 includes a scheduling unit 201 and an execution unit 202, which are specifically described below.

The scheduling unit 201 is configured to schedule, by using a reconstructed node or thread-level subgraph as a scheduling unit, compiled data of reconstructed nodes or thread-level subgraphs output by the graph compilation apparatus 100 to the execution unit 202.

The execution unit 202 is configured to execute, by using a reconstructed node or thread-level subgraph as a scheduling unit, compiled data of a reconstructed node or thread-level subgraph.

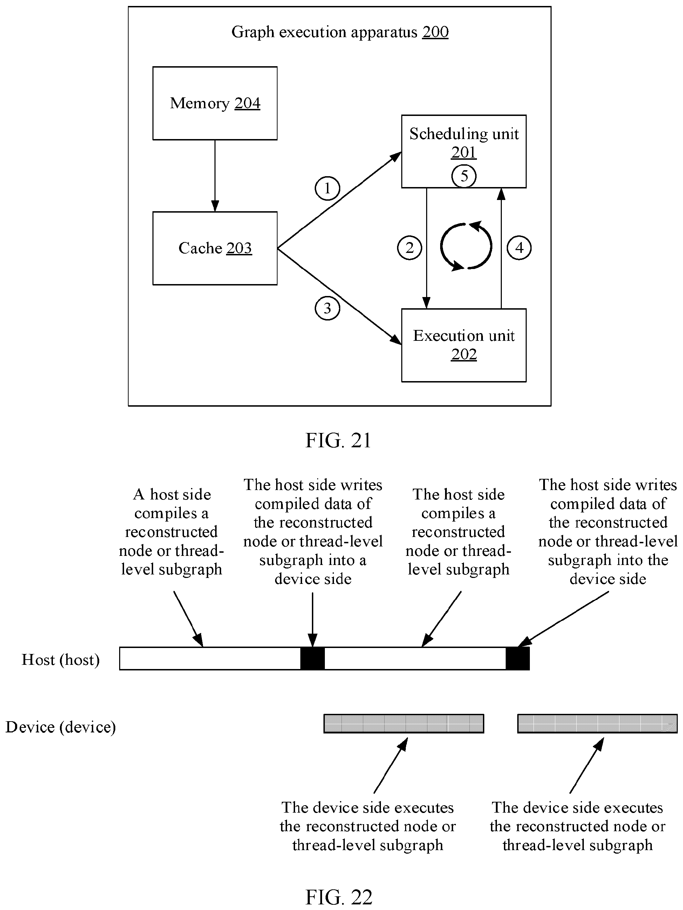

Specifically, FIG. 21 is a diagram of a structure of a graph execution apparatus 200 according to an embodiment of this application. As shown in FIG. 21, the graph execution apparatus 200 may further include a cache 203 and a memory 204. Compiled data of reconstructed nodes or thread-level subgraphs output by the graph compilation apparatus 100 is initially stored in the memory 204. The graph execution apparatus 200 needs to pre-load the compiled data of the reconstructed node or thread-level subgraph from the memory 204 to the cache 203 during execution of the reconstructed node or thread-level subgraph, thereby improving running performance. A scheduling unit 201 may be a software unit, for example, a micro controller (micro control unit, MCU) firmware (firmware), and an execution unit 202 is a hardware deceleration unit, to complete an execution process of the reconstructed node or thread-level subgraph through cooperation between software and hardware. The scheduling unit 201 is responsible for scheduling the compiled data of the reconstructed node or thread-level subgraph. The execution unit 202 executes the compiled data of the reconstructed node or thread-level subgraph. A specific procedure is as follows.

①. The graph execution apparatus 200 first preloads the compiled data of the reconstructed node or thread-level subgraph into the cache 203, and notifies the scheduling unit 201 of execution start. The scheduling unit 201 reads, from the cache 203, a task of an initially ready node or child node.

The reconstructed node includes compiled data of at least one node, and compiled data of each node includes a task corresponding to the node and a descriptor of the node, where the descriptor of the node includes a dependency relationship of the node. The dependency relationship of the node may be represented as a quantity of nodes on which the node depends and another node that depends on the node. If a quantity of nodes on which the node initially depends is 0 (that is, pred_cnt=0), the task corresponding to the node is an initially ready task. Similarly, the thread-level subgraph includes compiled data of at least one child node, and compiled data of each child node includes a task corresponding to the child node and a descriptor of the child node, where the descriptor of the child node includes a dependency relationship of the child node. The dependency relationship of the child node may be represented as a quantity of child nodes on which the child node depends and another child node that depends on the child node. If a quantity of child nodes on which the child node initially depends is 0, the task corresponding to the child node is an initially ready task.

②. The scheduling unit 201 pushes a task of a ready node or child node to the execution unit 202 for execution.

The ready node is a node whose quantity of dependent nodes is 0, and includes an initially ready node and a subsequently ready node. The subsequently ready node indicates that a quantity of nodes on which a node initially depends is not 0, but in a process of executing the reconstructed node, each time a node on which the node depends is executed, a quantity of nodes on which the node depends is decreased by 1 (that is, pred_cnt--), and after all the nodes on which the node depends are executed, that is, after the quantity of nodes on which the node depends is decreased to 0, the node is the ready node. Similarly, the ready child node is a child node whose quantity of dependent child nodes is 0, and includes an initially ready child node and a subsequently ready child node. The subsequently ready child node indicates that a quantity of child nodes on which a child node initially depends is not 0, but in a process of executing the reconstructed child node, each time a child node on which the child node depends is executed, a quantity of child nodes on which the child node depends is decreased by 1, and after all the child nodes on which the child node depends are executed, that is, after the quantity of child nodes on which the child node depends is decreased to 0, the child node is the ready child node.

③. The execution unit 202 reads a descriptor of the ready node or child node from the cache 203, and executes the task of the ready node or child node based on the descriptor of the ready node or child node.

The descriptor of the node includes at least one of the following: a storage location, a life cycle, and cache management operation indication information of input data of the node, a storage location, a life cycle, and cache management operation indication information of output data of the node, a dependency relationship of the node, and a type of a computation apparatus for executing the node. Therefore, the execution unit 202 executes the ready node based on the information included in the descriptor of the ready node. Similarly, the descriptor of the child node includes at least one of the following: a storage location, a life cycle, and cache management operation indication information of input data of the child node, a storage location, a life cycle, and cache management operation indication information of output data of the child node, a dependency relationship of the child node, a type of a computation apparatus for executing the child node, and another child node that is concurrently executed with the child node. Therefore, the execution unit 202 executes the ready child node based on the information included in the descriptor of the ready child node.

④. The execution unit 202 notifies the scheduling unit 201 after completing execution of the task of the ready node or child node.

⑤. The scheduling unit 201 reads a quantity of nodes on which another node depending on the node on which execution is currently completed depends, decreases the quantity of nodes on which the another node depends by 1, and when a quantity of nodes on which the another node depends is decreased to 0, pushes a task of the another node to the execution unit 202 for execution.

Steps ② to ⑤ are repeated, until execution of the reconstructed node or thread-level subgraph is completed.

In an implementation, the graph compilation apparatus 100 also includes a memory. After obtaining the compiled data of the reconstructed node or thread-level subgraph through compilation, the graph compilation apparatus 100 may store the compiled data in the memory in the graph compilation apparatus 100. Before the graph execution apparatus 200 executes the reconstructed node or thread-level subgraph, the graph compilation apparatus 100 writes the compiled data of the reconstructed node or thread-level subgraph into the cache 203 in advance. Alternatively, before executing the reconstructed node or thread-level subgraph, the graph execution apparatus 200 pre-loads the compiled data of the reconstructed node or thread-level subgraph to the cache 203 in advance. This can improve running performance, for example, reduce occupation on the memory 204 on a graph execution apparatus 200 side, fully use the memory on a graph compilation apparatus 100 side, reduce processing steps of the graph compilation apparatus 100, and adjust asynchronous pipelines of the graph compilation apparatus 100 and the graph execution apparatus 200, so that pipelines are more balanced. The graph compilation apparatus 100 may be disposed on a host side or is a host, and the graph execution apparatus 200 may be disposed on a device side or is a device side.

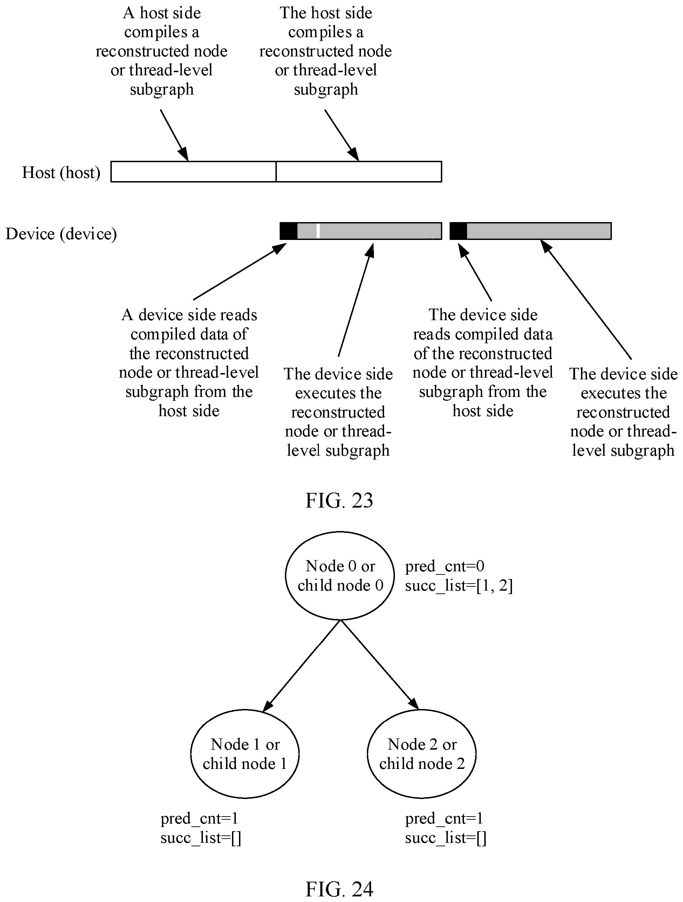

For example, FIG. 22 and FIG. 23 each is a diagram of asynchronous pipelines on a host side and a device side according to an embodiment of this application. As shown in FIG. 22, the host side and the device side may implement an asynchronous pipeline operation. The host side compiles a reconstructed node or thread-level subgraph to obtain compiled data of the reconstructed node or thread-level subgraph, and stores the compiled data of the reconstructed node or thread-level subgraph in a memory on the host side. Before the device side executes the reconstructed node or thread-level subgraph, the host side writes the compiled data of the reconstructed node or thread-level subgraph into the device side. The device side starts to execute the reconstructed node or thread-level subgraph, and the host side starts to compile another reconstructed node or thread-level subgraph to obtain compiled data of the another reconstructed node or thread-level subgraph, and stores the compiled data of the another reconstructed node or thread-level subgraph in the memory on the host side. After the device side completes execution of the reconstructed node or thread-level subgraph and before the device side executes the another reconstructed node or thread-level subgraph, the host side writes the compiled data of the another reconstructed node or thread-level subgraph into the device side. Therefore, the asynchronous pipelines are implemented through repeating the foregoing operations. As shown in FIG. 23, the host side and the device side may implement an asynchronous pipeline operation. The host side compiles a reconstructed node or thread-level subgraph to obtain compiled data of the reconstructed node or thread-level subgraph, and stores the compiled data of the reconstructed node or thread-level subgraph in a memory on the host side. Before executing the reconstructed node or the thread-level subgraph, the device side reads the compiled data of the reconstructed node or thread-level subgraph from the host side. The device side starts to execute the reconstructed node or thread-level subgraph, and the host side starts to compile another reconstructed node or thread-level subgraph to obtain compiled data of the another reconstructed node or thread-level subgraph, and stores the compiled data of the another reconstructed node or thread-level subgraph in the memory on the host side. After completing execution of the reconstructed node or thread-level subgraph and before executing the another reconstructed node or thread-level subgraph, the device side reads the compiled data of the another reconstructed node or thread-level subgraph from the host side. Therefore, the asynchronous pipelines are implemented through repeating the foregoing operations The host side and the device side pre-load the compiled data of the reconstructed node or thread-level subgraph to a cache on the device side through a high-speed serial computer extension bus standard channel (PCIe-through). This improves performance in the following aspects: reducing occupation on the memory on the device side, fully using the memory on the host side, reducing processing steps on the host side, and adjusting the asynchronous pipelines, so that the pipelines are more balanced.

In an implementation, an occasion for pre-loading compiled data of any node in the reconstructed node or compiled data of any child node in the thread-level subgraph to the cache 203 is described as follows:

(1) For the initially ready node, before the reconstructed node is executed, the compiled data of the initially ready node is pre-loaded to the cache 203. Similarly, for the initially ready child node, before the thread-level subgraph is executed, the compiled data of the initially ready child node is pre-loaded to the cache 203.

(2) For the subsequently ready node, after the scheduling unit 201 receives an indication indicating that execution of a node on which the subsequently ready node depends is completed, for example, after execution of a node that is first executed and on which the subsequently ready node depends is completed, and before a quantity of nodes on which the subsequently ready node depends is decreased by 1, the compiled data of the subsequently ready node is pre-loaded to the cache 203. In this way, when the quantity of nodes on which the subsequently ready node depends is decreased to 0, and the node is pushed to hardware for execution, the compiled data of the subsequently ready node is already in the cache 203.

For example, FIG. 24 is a diagram of a dependency relationship between nodes in a reconstructed node or a dependency relationship between child nodes in a thread-level subgraph according to an embodiment of this application. As shown in FIG. 24, the reconstructed node includes a node 0, a node 1, and a node 2, and both the node 1 and the node 2 depend on the node 0. Compiled data of the node 0 is pre-loaded to the cache 203 before the reconstructed node is executed. Compiled data of the node 1 is pre-loaded to the cache 203 after execution of the node 0 is completed and before a quantity of nodes on which the node 1 depends is decreased by 1. Compiled data of the node 2 is pre-loaded to the cache 203 after execution of the node 0 is completed and before a quantity of nodes on which the node 2 depends is decreased by 1. Similarly, the thread-level subgraph includes a child node 0, a child node 1, and a child node 2, and both the child node 1 and the child node 2 depend on the child node 0. Compiled data of the child node 0 is pre-loaded to the cache 203 before the thread-level subgraph is executed. Compiled data of the child node 1 is pre-loaded to the cache 203 after execution of the child node 0 is completed and before a quantity of child nodes on which the child node 1 depends is decreased by 1. Compiled data of the child node 2 is pre-loaded to the cache 203 after execution of the child node 0 is completed and before a quantity of child nodes on which the child node 2 depends is decreased by 1.

In an implementation, input data of the reconstructed node or thread-level subgraph may also be stored in the memory in the graph compilation apparatus 100, to further reduce occupation on the memory on the graph execution apparatus 200 side and adjust the asynchronous pipeline on the graph compilation apparatus 100 side to be more balanced. The input data of the reconstructed node is mainly output data of a node in a non-reconstructed node, namely, data coming from outside of the reconstructed node; and includes input data of the initially ready node in the reconstructed node. Similarly, the input data of the thread-level subgraph is mainly output data of a child node in a non-thread-level subgraph, namely, data coming from outside of the thread-level subgraph; and includes input data of the initially ready child node in the thread-level subgraph.

For example, the graph compilation apparatus 100 may be disposed on a host side or is a host, and the graph execution apparatus 200 may be disposed on a device side or is a device side. The input data of the reconstructed node or thread-level subgraph may also be stored in the memory on the host side. The device side pre-loads the input data of the reconstructed node or thread-level subgraph to the cache on the data device side in a direct memory access (Direct Memory Access, DMA) manner. This further reduces occupation on the memory on the device side and adjusts the asynchronous pipeline on the host side to be more balanced.

In an implementation, an occasion for a cache management operation on input and output data of a node or child node is described as follows.

(1) Initiate a cache management operation on the input data.

For the input data of the reconstructed node (namely, the data coming from outside of the reconstructed node) as input data of a node in the reconstructed node, a prefetch operation is performed on the input data based on a life cycle of the input data, that is, before the reconstructed node or the node is executed, the input data is written into the cache 203. In addition, an invalid operation is performed on the input data based on the life cycle of the input data, that is, after the input data is used as input data of another node in the reconstructed node for the last time, the input data in the cache 203 is deleted. For the input data of the thread-level subgraph (namely, the data coming from outside of the thread-level subgraph) as input data of a child node of the thread-level subgraph, a prefetch operation is performed on the input data based on a life cycle of the input data, that is, before the thread-level subgraph or the child node is executed, the input data is written into the cache 203. In addition, an invalid operation is performed on the input data based on the life cycle of the input data, that is, after the input data is used as input data of another child node in the thread-level subgraph for the last time, the input data in the cache 203 is deleted.

(2) Initiate a cache management operation on the output data.

For output data of a node in the reconstructed node, a writeback operation is performed on the output data based on a life cycle of the output data, that is, the output data of the node is written into the memory. In addition, a flush operation is performed on the output data based on the life cycle of the output data, that is, after the output data of the node is written into the memory, the output data of the node in the cache is deleted. Further, an invalid operation is performed on the output data based on the life cycle of the output data, that is, after the output data is used as input data of another node in the reconstructed node for the last time, the output data in the cache 203 is deleted. Similarly, for output data of a child node in the thread-level subgraph, a writeback operation is performed on the output data based on a life cycle of the output data, that is, the output data of the child node is written into the memory. In addition, a flush operation is performed on the output data based on the life cycle of the output data, that is, after the output data of the child node is written into the memory, the output data of the child node in the cache is deleted. Further, an invalid operation is performed on the output data based on the life cycle of the output data, that is, after the output data is used as input data of another child node in the thread-level subgraph for the last time, the output data in the cache 203 is deleted.

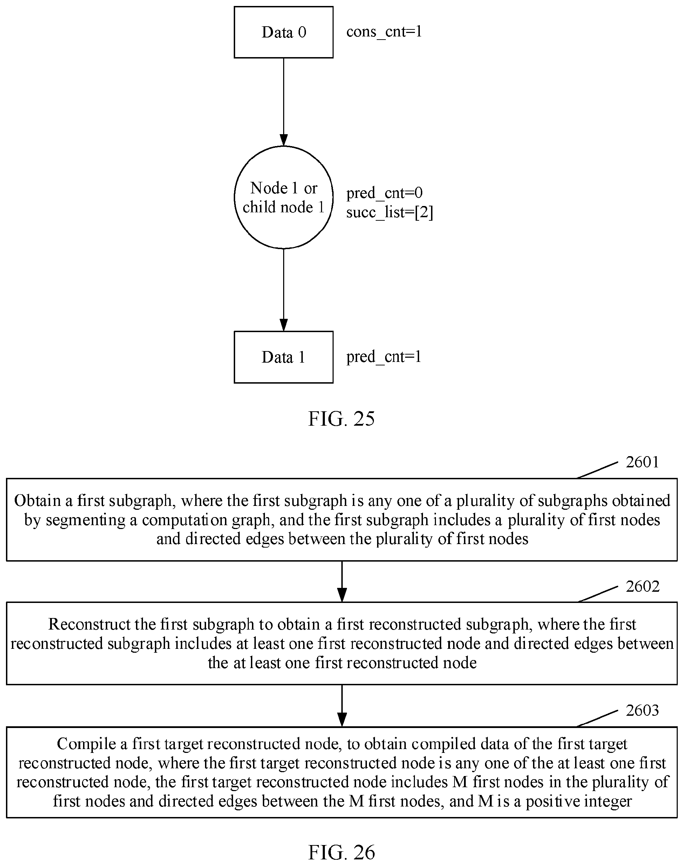

For example, FIG. 25 is a diagram of a cache management operation on input data and output data of a node or child node according to an embodiment of this application. As shown in FIG. 25, a node 1 is one of nodes in a reconstructed node. A task corresponding to the ready (pred_cnt=0) node 1 is pushed to a ready running queue (readyq), a completion response of the task corresponding to the node 1 is received from a completion queue (cq), and a task corresponding to a subsequent node that depends on the node 1 is queried. For input data of the node 1, namely, data 0, if the data 0 is data coming from outside of the reconstructed node or thread-level subgraph, a prefetch operation needs to be performed on the data 0. After the completion response of the task corresponding to the node 1 is received, a quantity of consumption times (cons_cnt) of the data 0 is decreased by 1. When the quantity of consumption times of the data 0 is decreased to 0, an invalid operation is initiated on the data 0. For output data of the node 1, namely, data 2, for a quantity of production times (prod_cnt) of the data 2, when the quantity of production times of the data 2 is decreased to 0, a writeback operation is initiated on the data 2. For example, if the quantity of production times of the data 2 is 1, the writeback operation is initiated after the quantity of production times of the data 2 is decreased once. Similarly, a child node 1 is one of child nodes in a thread-level subgraph. A task corresponding to the ready (pred_cnt=0) child node 1 is pushed to a ready running queue (readyq), a completion response of the task corresponding to the child node 1 is received from a completion queue (cq), and a task corresponding to a subsequent child node that depends on the child node 1 is queried. For input data of the child node 1, namely, data 0, if the data 0 is data coming from outside of the thread-level subgraph, a prefetch operation needs to be performed on the data 0. After the completion response of the task corresponding to the child node 1 is received, a quantity of consumption times (cons_cnt) of the data 0 is decreased by 1. When the quantity of consumption times of the data 0 is decreased to 0, an invalid operation is initiated on the data 0. For output data of the child node 1, namely, data 2, for a quantity of production times (prod_cnt) of the data 2, when the quantity of production times of the data 2 is decreased to 0, a writeback operation is initiated on the data 2. For example, if the quantity of production times of the data 2 is 1, the writeback operation is initiated after the quantity of production times of the data 2 is decreased once. The scheduling unit 201 specifies, based on a descriptor of the node 1 or child node 1, hardware to initiate the prefetch operation on the data 0. When the data 0 needs to be prefetched, the scheduling unit 201 pushes the descriptor of the node 1 or child node 1 to the ready running queue. Then the hardware selects a machine to initiate prefetching.

The following describes in detail, from a method side with reference to a specific implementation, a graph compilation procedure and a graph execution procedure that are provided in this application and that use a graph as a scheduling unit.

1. Graph compilation phase

FIG. 26 is a schematic flowchart of a subgraph compilation method according to an embodiment of this application. The subgraph compilation method is applied to the graph compilation apparatus 100. The subgraph compilation method includes but is not limited to the following operations or steps.

Step 2601: Obtain a first subgraph, where the first subgraph is any one of a plurality of subgraphs obtained by segmenting a computation graph, and the first subgraph includes a plurality of first nodes and directed edges between the plurality of first nodes.

The computation graph in this application is a computation graph of a neural network model, and one computation graph represents an operation of one neural network model.

It should be understood that a directed edge in a computation graph includes a data edge and a control edge. The directed edge described in this application also includes a data edge and a control edge. For example, the directed edges between the plurality of first nodes include data edges between the plurality of first nodes and control edges between the plurality of first nodes.

Step 2602: Reconstruct the first subgraph to obtain a first reconstructed subgraph, where the first reconstructed subgraph includes at least one first reconstructed node and directed edges between the at least one first reconstructed node.

It should be understood that the first reconstructed subgraph is also obtained by reconstructing the first subgraph based on the reconstruction principle described in FIG. 3.

Step 2603: Compile a first target reconstructed node, to obtain compiled data of the first target reconstructed node, where the first target reconstructed node is any one of the at least one first reconstructed node, the first target reconstructed node includes M first nodes in the plurality of first nodes and directed edges between the M first nodes, and M is a positive integer.

The compiled data of the first target reconstructed node includes compiled data of the M first nodes.

The first reconstructed node includes the M first nodes and the directed edges between the M first nodes, that is, the first reconstructed node is essentially a subgraph whose size is smaller than that of the first subgraph; the first reconstructed node is scheduled for compilation, that is, the subgraph whose size is smaller than that of the first subgraph is scheduled for compilation; and therefore a process of scheduling the first target reconstructed node for compilation is a compilation process of a graph scheduling mechanism.

In this embodiment of this application, the computation graph is segmented into the plurality of subgraphs, any subgraph in the plurality of subgraphs is reconstructed to obtain a reconstructed subgraph, and then any reconstructed node in the reconstructed subgraph is compiled by using a reconstructed node in the reconstructed subgraph as a scheduling unit. It should be noted that the reconstructed subgraph obtained in this application includes at least one reconstructed node and directed edges between the at least one reconstructed node. Therefore, the reconstructed subgraph obtained in this application is essentially a subgraph. In addition, because any reconstructed node in the reconstructed subgraph includes one or more nodes in the any subgraph and directed edges between the one or more nodes, the reconstructed node is essentially a subgraph whose size is smaller than that of the any subgraph. During subgraph compilation, using a reconstructed node as a scheduling unit essentially indicates a graph scheduling mechanism, and scheduling one reconstructed node for compilation at a time is equivalent to scheduling one or more nodes in the any subgraph for compilation at a time. Compared with a manner of using a node (for example, a computing node) in the any subgraph as a scheduling unit and scheduling one node in the any subgraph at a time, a manner of using the reconstructed node as the scheduling unit during subgraph compilation can reduce scheduling time. Further, compiled data of the any reconstructed node obtained by compiling the any reconstructed node is used to execute the one or more nodes in the any subgraph. When the subgraph is executed, scheduling the compiled data of the reconstructed node at a time for execution is equivalent to scheduling the compiled data of the one or more nodes in the any subgraph at a time for execution, that is, in this application, a reconstructed node is used as a scheduling unit. Scheduling one reconstructed node at a time to execute the reconstructed node is equivalent to scheduling one or more nodes in the any subgraph at a time to execute the one or more nodes. Compared with a manner of using a node (for example, a computing node) in the any subgraph as a scheduling unit and scheduling one node in the any subgraph at a time to execute the node, a manner of using the reconstructed node as the scheduling unit during subgraph execution can reduce scheduling time. For example, for the first subgraph in the plurality of subgraphs obtained by segmenting the computation graph, the first subgraph includes the plurality of first nodes and the directed edges between the plurality of first nodes. The first reconstructed subgraph obtained by reconstructing the first subgraph includes the at least one first reconstructed node and the directed edges between the at least one first reconstructed node. The first target reconstructed node includes the M first nodes in the first subgraph and the directed edges between the M first nodes, and M is a positive integer. Compiling the first target reconstructed node is equal to compiling the M first nodes, and the compiled data of the first target reconstructed node is used to execute the M first nodes, that is, executing the first target reconstructed node is equal to executing the M first nodes. In conclusion, this embodiment of this application provides a graph scheduling mechanism, where a reconstructed node in a graph structure is used as a scheduling unit, to reduce scheduling time.

In a possible implementation, compiling the first target reconstructed node, to obtain the compiled data of the first target reconstructed node includes: dividing each of the M first nodes into at least one first child node, to obtain a first thread-level subgraph, where the first thread-level subgraph includes N first child nodes and directed edges between the N first child nodes, and N is a positive integer greater than or equal to M; and compiling the first thread-level subgraph, to obtain the compiled data of the first target reconstructed node. The compiled data of the first target reconstructed node includes compiled data of the N first child nodes. It should be noted that the child node described in this application is obtained by performing thread division on a node. One node is divided into at least one child node, each of the at least one child node is one thread, and the at least one child node may be concurrently executed.

It should be understood that the first thread-level subgraph is also obtained by performing thread division on the first target reconstructed node based on the thread division principle described in FIG. 4A and FIG. 4B or FIG. 5.

In this implementation, any reconstructed node includes M first nodes and directed edges between the M first nodes. When the any reconstructed node is compiled, each of the M first nodes is divided into at least one first child node, that is, an operator operation represented by each of the M first nodes is divided into at least one thread, and each of the at least one thread is represented by one child node. The N first child nodes are obtained after thread division is performed on the M first nodes, where N is a positive integer greater than or equal to M, and the N first child nodes and directed edges between the N first child nodes form a first thread-level subgraph. The first thread-level subgraph can be compiled to obtain compiled data of the first target reconstructed node, where the compiled data of the first target reconstructed node includes compiled data of the N first child nodes. Executing the N first child nodes is equal to executing the M first nodes, and at least one first child node obtained by dividing a same first node may be concurrently executed. In this way, when the compiled data of the N first child nodes is scheduled to execute the N first child nodes, first child nodes obtained by dividing a same first node in the N first child nodes can be concurrently executed. This reduces execution time of each of the M first nodes, that is, reduces total execution time of the M first nodes, and improves performance.

In a possible implementation, the compiled data of the first target reconstructed node includes compiled data of a first object, the first object is one of the M first nodes or one of the N first child nodes, and the compiled data of the first object includes at least one of the following: a storage location, a life cycle, and cache management operation (cache management operation, CMO) indication information of input data of the first object, a storage location, a life cycle, and cache management operation indication information of output data of the first object, a dependency relationship of the first object, and a type of a computation apparatus for executing the first object. It should be noted that, for ease of description, the term "object" in this application indicates a node or child node.

The storage locations of the input data and the output data include storage locations in a memory. The cache management operation indication information includes indication information such as a prefetch operation, an invalid operation, a writeback operation, and a flush operation. Specific processes of the prefetch operation, the invalid operation, the writeback operation, and the flush operation are shown in FIG. 10 to FIG. 12.

In this implementation, one or more pieces of information such as a data storage location, a life cycle and cache management operation indication information of input data of any node or child node or output data of any node or child node, a dependency relationship of the any node or child node, and a type of a computation apparatus for executing the any node or child node can be compiled into compiled data of the any node or child node. This facilitates execution of the any node or child node, and improves performance.

In a possible implementation, the first object is one of the N first child nodes, the compiled data of the first object further includes a second object that is concurrently executed with the first object, the second object is one of the N first child nodes, and the second object and the first object are obtained by dividing a same first node.

In this implementation, information about another child node that is concurrently executed with any child node can be compiled into compiled data of the any child node. In this way, the any child node and the another child node are concurrently executed.

In a possible implementation, the cache management operation indication information of the input data of the first object indicates at least one of the following: before the first object is executed, writing target input data from a memory to a cache, where the input data of the first object includes the target input data, the target input data is not output data of a first node in the first target reconstructed node, or the target input data is not output data of a first child node in the first thread-level subgraph; and after the target input data is input into the first node in the first target reconstructed node for a first preset quantity of times, or after the target input data is input into the first child node in the first thread-level subgraph for the first preset quantity of times, deleting the target input data in the cache, that is, after the target input data is used as the input data of the first node in the first target reconstructed node in the any first reconstructed node for the last time, or after the target input data is used as the input data of the first child node in the first thread-level subgraph for the last time, deleting the target input data in the cache.

It should be understood that the first preset quantity of times is a quantity of times that the target input data is consumed on the first target reconstructed node or in the first thread-level subgraph.

In this implementation, if input data of any node in a reconstructed node includes target input data coming from outside of the reconstructed node, cache management operation indication information of the input data of the node needs to indicate, before the node is executed, to write the target input data from a memory to a cache, so that the node can be executed. Optionally, the cache management operation indication information of the input data of the node may further indicate, after the target input data does not need to be used as input data of another node in the reconstructed node, to delete the target input data in the cache, so as to appropriately release cache space. Similarly, if input data of any child node in a thread-level subgraph includes target input data coming from outside of the thread-level subgraph, cache management operation indication information of the input data of the child node needs to indicate, before the child node is executed, to write the target input data from a memory to the cache, so that the child node can be executed. Optionally, the cache management operation indication information of the input data of the child node may further indicate, after the target input data does not need to be used as input data of another child node in the thread-level subgraph, to delete the target input data in the cache, so as to appropriately release cache space.

In a possible implementation, the cache management operation indication information of the output data of the first object indicates at least one of the following: writing the output data of the first object into a memory; after the output data of the first object is written into the memory, deleting the output data of the first object in a cache; and after the output data of the first object is input into the first node in the first target reconstructed node for a second preset quantity of times, or after the output data of the first object is input into the first child node in the first thread-level subgraph for the second preset quantity of times, deleting the output data of the first object in the cache, that is, after the output data of the first object is used as the input data of the first node in the first target reconstructed node for the last time, or after the output data of the first object is used as the input data of the first child node in the first thread-level subgraph for the last time, deleting the output data of the first object in the cache.

It should be understood that the second preset quantity of times is a quantity of times that the output data of the first object is consumed on the first target reconstructed node or in the first thread-level subgraph.

In this implementation, cache management operation indication information of output data of any node in a reconstructed node optionally indicates: to write the output data of the node into a memory, so that the output data of the node is used for other purposes; and after the output data of the node is written into the memory or after the output data of the node does not need to be used as input data of another node in the reconstructed node, to delete the output data of the node from a cache, so as to appropriately release cache space. Similarly, cache management operation indication information of output data of any child node in a thread-level subgraph optionally indicates: to write the output data of the child node into a memory, so that the output data of the child node is used for other purposes; and after the output data of the child node is written into the memory or after the output data of the child node does not need to be used as input data of another child node in the thread-level subgraph, to delete the output data of the child node in the cache, so as to appropriately release cache space.

In a possible implementation, the dependency relationship of the first object includes a quantity of nodes on which the first object depends and a node that depends on the first object, or a quantity of child nodes on which the first object depends and a child node that depends on the first object.

In this implementation, a dependency relationship of any node in a reconstructed node includes a quantity of nodes on which the node depends. When the node is executed, when the quantity of nodes on which the node depends is decreased to 0, the node may be executed. In addition, the dependency relationship of the node further includes another node that depends on the node. In this way, an execution sequence of nodes in the reconstructed node can be controlled. Similarly, a dependency relationship of any child node in a thread-level subgraph includes a quantity of child nodes on which the child node depends. When the child node is executed, when the quantity of child nodes on which the child node depends is decreased to 0, the child node may be executed. In addition, the dependency relationship of the child node further includes another child node that depends on the child node. In this way, an execution sequence of child nodes in the thread-level subgraph can be controlled.

In a possible implementation, the dependency relationship of the first object includes a first dependency relationship of the first object, and the first dependency relationship of the first object represents a directed edge between the first object and a third object; and if the first object is one of the M first nodes, the third object is one of the M first nodes; or if the first object is one of the N first child nodes, the third object is one of the N first child nodes, and the third object and the first object are obtained by dividing different first nodes.

In this implementation, directed edges between nodes in a reconstructed node may be represented as dependency relationships of the nodes during compilation, for example, represented as first dependency relationships of the nodes. This implements representation of the directed edges between the nodes in the reconstructed node. Similarly, directed edges between child nodes in a thread-level subgraph may be represented as dependency relationships between the child nodes during compilation, for example, represented as first dependency relationships between the child nodes. This implements representation of the directed edges between the child nodes in the thread-level subgraph. The directed edges between the child nodes in the thread-level subgraph mainly are directed edges between child nodes obtained by dividing different nodes.

In a possible implementation, the output data of the first object is input data of a fourth object, the first object is executed by a first computation apparatus, the fourth object is executed by a second computation apparatus, the dependency relationship of the first object further includes a second dependency relationship of the first object, the second dependency relationship of the first object represents a directed edge between the first object and a first communication operator node, and the output data of the first object is transmitted by the first communication operator node from the first computation apparatus to the second computation apparatus. If the first object is one of the M first nodes, the fourth object is a first target node in a second target reconstructed node, where the second target reconstructed node is a first reconstructed node other than the first target reconstructed node in the at least one first reconstructed node, and the first target node is a first node other than the M first nodes in the plurality of first nodes; or the second target reconstructed node is any second reconstructed node in a second reconstructed subgraph, the second reconstructed subgraph is obtained by reconstructing a second subgraph, the second subgraph is a subgraph other than the first subgraph in the plurality of subgraphs, and the first target node is a second node in the second subgraph. Alternatively, if the first object is one of the N first child nodes, the fourth object is any second child node in a second thread-level subgraph, where the second thread-level subgraph is obtained by dividing each first target node in the second target reconstructed node into at least one second child node, the second thread-level subgraph includes P second child nodes and directed edges between the P second child nodes, and P is a positive integer. It should be noted that in this application, some set communication operators, for example, set communication operators, are used to implement data communication between a plurality of computation apparatuses (for example, a plurality of chips or a plurality of processors) and a plurality of servers (servers). In this application, data can be transmitted from the first computation apparatus to the second computation apparatus via a first set communication operator, that is, the first communication operator node is a node representing the first set communication operator. A set communication operator may be represented as a set communication operator node, and therefore the first communication operator node is a first set communication operator node. In addition, the set communication operator node may be divided into threads like a node in a computation graph, a subgraph, or a reconstructed node. It should be further noted that a manner of obtaining the second reconstructed subgraph is the same as a manner of obtaining the first reconstructed subgraph in this application. The first reconstructed subgraph is obtained by reconstructing the first subgraph. The first reconstructed subgraph includes at least one first reconstructed node and directed edges between the at least one first reconstructed node. Because the first subgraph includes a plurality of first nodes and directed edges between the plurality of first nodes, the first target reconstructed node in the first reconstructed subgraph includes at least one first node in the plurality of first nodes in the first subgraph and directed edges between the at least one first node. Similarly, the second reconstructed subgraph is obtained by reconstructing the second subgraph. The second reconstructed subgraph includes at least one second reconstructed node and directed edges between the at least one second reconstructed node. Because the second subgraph includes a plurality of second nodes and directed edges between the plurality of second nodes, any second reconstructed node in the second reconstructed subgraph includes at least one second node in the plurality of second nodes in the second subgraph and directed edges between the at least one second node.

It should be understood that the second reconstructed subgraph is also based on the reconstruction principle described in FIG. 3, and the second thread-level subgraph is also obtained based on the thread division principle described in FIG. 4A and FIG. 4B or FIG. 5.

In this implementation, distributed execution can be performed on a plurality of reconstructed nodes. Two reconstructed nodes and two computation apparatuses are used as an example. One reconstructed node is executed by one computation apparatus, and the other reconstructed node is executed by the other computation apparatus. The two reconstructed nodes may be reconstructed nodes in a same reconstructed subgraph, or may be reconstructed nodes in different reconstructed subgraphs. If output data of a node in one reconstructed node is input data of a node in the other reconstructed node, the output data of the node in the one reconstructed node needs to be transmitted from one computation apparatus to the other computation apparatus. In this application, the set communication operator node can be used to transmit the output data of the node in the reconstructed node from the computation apparatus to the other computation apparatus. Because the set communication operator node can transmit the output data of the node in the reconstructed node from the computation apparatus to the other computation apparatus as the input data of the node in the other reconstructed node, there is a directed edge between the node in the reconstructed node and the set communication operator node, and there is a directed edge between the set communication operator node and the node in the other reconstructed node. The directed edge between the node in the reconstructed node and the set communication operator node may be represented as a dependency relationship of the node in the reconstructed node, and the directed edge between the set communication operator node and the node in the other reconstructed node may be represented as a dependency relationship of the node in the other reconstructed node, for example, represented as a second dependency relationship of the node in the reconstructed node and a second dependency relationship of the node in the other reconstructed node. In this way, representation of a directed edge between a node in a reconstructed node and the set communication operator node can be used to implement representation of distributed execution of the plurality of reconstructed nodes. Similarly, distributed execution can be performed on a plurality of thread-level subgraphs. Two thread-level subgraphs and two computation apparatuses are used as an example. One thread-level subgraph is executed by one computation apparatus, and the other thread-level subgraph is executed by the other computation apparatus. The two thread-level subgraphs may be obtained by performing thread division on different reconstructed nodes in a same reconstructed subgraph, or may be obtained by performing sub-thread division on reconstructed nodes in different reconstructed subgraphs. If output data of a child node in one thread-level subgraph is input data of a child node in the other thread-level subgraph, the output data of the child node in the thread-level subgraph needs to be transmitted from one computation apparatus to the other computation apparatus. In this application, the set communication operator node can be used to transmit the output data of the child node in the thread-level subgraph from the computation apparatus to the other computation apparatus. Because the set communication operator node can transmit the output data of the child node in the thread-level subgraph from the computation apparatus to the other computation apparatus as the input data of the child node in the other thread-level subgraph, there is a directed edge between the child node in the thread-level subgraph and the set communication operator node, and there is a directed edge between the set communication operator node and the child node in the other thread-level subgraph. The directed edge between the child node in the thread-level subgraph and the set communication operator node may be represented as a dependency relationship of the child node in the thread-level subgraph, and the directed edge between the set communication operator node and the child node in the other thread-level subgraph may be represented as a dependency relationship of the child node in the other thread-level subgraph, for example, represented as a second dependency relationship of the child node in the thread-level subgraph and a second dependency relationship of the child node in the other thread-level subgraph. In this way, representation of a directed edge between a child node in a thread-level subgraph and the set communication operator node can be used to implement representation of distributed execution of the plurality of thread-level subgraphs.

In a possible implementation, the input data of the first object includes output data of a fifth object, the first object is executed by a first computation apparatus, the fifth object is executed by a third computation apparatus, the dependency relationship of the first object further includes a third dependency relationship of the first object, the third dependency relationship of the first object represents a directed edge between the first object and a second communication operator node, and the output data of the fifth object is transmitted by the second communication operator node from the third computation apparatus to the first computation apparatus. If the first object is one of the M first nodes, the fifth object is a second target node in a third target reconstructed node, where the third target reconstructed node is a first reconstructed node other than the first target reconstructed node in the at least one first reconstructed node, and the second target node is a first node other than the M first nodes in the plurality of first nodes; or the third target reconstructed node is any third reconstructed node in a third reconstructed subgraph, the third reconstructed subgraph is obtained by performing reconstruction on a third subgraph, the third subgraph is a subgraph other than the first subgraph in the plurality of subgraphs, and the second target node is a third node in the third subgraph. Alternatively, if the first object is one of the N first child nodes, the fifth object is any third child node in a third thread-level subgraph, where the third thread-level subgraph is obtained by dividing each second target node in the third target reconstructed node into at least one third child node, the third thread-level subgraph includes Q third child nodes and directed edges between the Q third child nodes, and Q is a positive integer. It should be noted that in this application, some set communication operators, for example, set communication operators, are used to implement data communication between a plurality of computation apparatuses (for example, a plurality of chips or a plurality of processors) and a plurality of servers (servers). In this application, data is transmitted from the third computation apparatus to the second computation apparatus via a second set communication operator. Therefore, the second communication operator node is a node representing the second set communication operator, that is, the second communication operator node is a second set communication operator node. It should be further noted that a manner of obtaining the third reconstructed subgraph is the same as a manner of obtaining the first reconstructed subgraph in this application. The first reconstructed subgraph is obtained by reconstructing the first subgraph. The first reconstructed subgraph includes at least one first reconstructed node and directed edges between the at least one first reconstructed node. Because the first subgraph includes a plurality of first nodes and directed edges between the plurality of first nodes, the first target reconstructed node in the first reconstructed subgraph includes at least one first node in the plurality of first nodes in the first subgraph and directed edges between the at least one first node. Similarly, the third reconstructed subgraph is obtained by reconstructing a third subgraph. The third reconstructed subgraph includes at least one third reconstructed node and directed edges between the at least one third reconstructed node. Because the third subgraph includes a plurality of third nodes and directed edges between the plurality of third nodes, any third reconstructed node in the third reconstructed subgraph includes at least one third node in the plurality of third nodes in the third subgraph and directed edges between the at least one third node.

It should be understood that the third reconstructed subgraph is also based on the reconstruction principle described in FIG. 3, and the third thread-level subgraph is also obtained based on the thread division principle described in FIG. 4A and FIG. 4B or FIG. 5.

In this implementation, distributed execution can be performed on a plurality of reconstructed nodes. Two reconstructed nodes and two computation apparatuses are used as an example. One reconstructed node is executed by one computation apparatus, and the other reconstructed node is executed by the other computation apparatus. The two reconstructed nodes may be reconstructed nodes in a same reconstructed subgraph, or may be reconstructed nodes in different reconstructed subgraphs. If output data of a node in one reconstructed node is input data of a node in the other reconstructed node, the output data of the node in the one reconstructed node needs to be transmitted from one computation apparatus to the other computation apparatus. In this application, the set communication operator node can be used to transmit the output data of the node in the reconstructed node from the computation apparatus to the other computation apparatus. Because the set communication operator node can transmit the output data of the node in the reconstructed node from the computation apparatus to the other computation apparatus as the input data of the node in the other reconstructed node, there is a directed edge between the node in the reconstructed node and the set communication operator node, and there is a directed edge between the set communication operator node and the node in the other reconstructed node. The directed edge between the node in the reconstructed node and the set communication operator node may be represented as a dependency relationship of the node in the reconstructed node, and the directed edge between the set communication operator node and the node in the other reconstructed node may be represented as a dependency relationship of the node in the other reconstructed node, for example, represented as a second dependency relationship of the node in the reconstructed node and a second dependency relationship of the node in the other reconstructed node. In this way, representation of a directed edge between a node in a reconstructed node and the set communication operator node can be used to implement representation of distributed execution of the plurality of reconstructed nodes. Similarly, distributed execution can be performed on a plurality of thread-level subgraphs. Two thread-level subgraphs and two computation apparatuses are used as an example. One thread-level subgraph is executed by one computation apparatus, and the other thread-level subgraph is executed by the other computation apparatus. The two thread-level subgraphs may be obtained by performing thread division on different reconstructed nodes in a same reconstructed subgraph, or may be obtained by performing sub-thread division on reconstructed nodes in different reconstructed subgraphs. If output data of a child node in one thread-level subgraph is input data of a child node in the other thread-level subgraph, the output data of the child node in the thread-level subgraph needs to be transmitted from one computation apparatus to the other computation apparatus. In this application, the set communication operator node can be used to transmit the output data of the child node in the thread-level subgraph from the computation apparatus to the other computation apparatus. Because the set communication operator node can transmit the output data of the child node in the thread-level subgraph from the computation apparatus to the other computation apparatus as the input data of the child node in the other thread-level subgraph, there is a directed edge between the child node in the thread-level subgraph and the set communication operator node, and there is a directed edge between the set communication operator node and the child node in the other thread-level subgraph. The directed edge between the child node in the thread-level subgraph and the set communication operator node may be represented as a dependency relationship of the child node in the thread-level subgraph, and the directed edge between the set communication operator node and the child node in the other thread-level subgraph may be represented as a dependency relationship of the child node in the other thread-level subgraph, for example, represented as a second dependency relationship of the child node in the thread-level subgraph and a second dependency relationship of the child node in the other thread-level subgraph. In this way, representation of a directed edge between a child node in a thread-level subgraph and the set communication operator node can be used to implement representation of distributed execution of the plurality of thread-level subgraphs.

In a possible implementation, there is a directed edge between the first node in the first target reconstructed node and a third target node in a fourth target reconstructed node, where the fourth target reconstructed node is a first reconstructed node in the at least one first reconstructed node other than the first target reconstructed node, and the third target node is a first node in the plurality of first nodes other than the M first nodes; or the fourth target reconstructed node is any fourth reconstructed node in a fourth reconstructed subgraph, the fourth reconstructed subgraph is obtained by reconstructing a fourth subgraph, the fourth subgraph is a subgraph other than the first subgraph in the plurality of subgraphs, and the third target node is a fourth node in the fourth subgraph. The first target reconstructed node and the fourth target reconstructed node are in a same stream (stream), the compiled data of the first target reconstructed node further includes a dependency relationship of the first target reconstructed node, and the dependency relationship of the first target reconstructed node represents a directed edge between the first target reconstructed node and the fourth target reconstructed node. It should be noted that a manner of obtaining the fourth reconstructed subgraph is the same as a manner of obtaining the first reconstructed subgraph in this application. The first reconstructed subgraph is obtained by reconstructing the first subgraph. The first reconstructed subgraph includes at least one first reconstructed node and directed edges between the at least one first reconstructed node. Because the first subgraph includes a plurality of first nodes and directed edges between the plurality of first nodes, the first target reconstructed node in the first reconstructed subgraph includes at least one first node in the plurality of first nodes in the first subgraph and directed edges between the at least one first node. Similarly, the fourth reconstructed subgraph is obtained by reconstructing a fourth subgraph. The fourth reconstructed subgraph includes at least one fourth reconstructed node and directed edges between the at least one fourth reconstructed node. Because the fourth subgraph includes a plurality of fourth nodes and directed edges between the plurality of fourth nodes, any fourth reconstructed node in the fourth reconstructed subgraph includes at least one fourth node in the plurality of fourth nodes in the fourth subgraph and directed edges between the at least one fourth node.

It should be understood that the fourth reconstructed subgraph is also based on the reconstruction principle described in FIG. 3.

In this implementation, for two reconstructed nodes in a same stream, the two reconstructed nodes may be reconstructed nodes in a same reconstructed subgraph, or may be reconstructed nodes in different reconstructed subgraphs. If there is a directed edge between a node in one reconstructed node and a node in the other reconstructed node, the directed edge between the node in the reconstructed node and the node in the other reconstructed node may be converted into a directed edge between the reconstructed node and the other reconstructed node for representation, and the directed edge between the reconstructed node and the other reconstructed node may be represented as a dependency relationship of the reconstructed node. Therefore, a sequence of the two reconstructed nodes in the same stream can be controlled. For example, the first target reconstructed node and the fourth target reconstructed node are in the same stream, and there is the directed edge between the first node in the first target reconstructed node and the third target node in the fourth target reconstructed node. The directed edge between the first node in the first target reconstructed node and the third target node in the fourth target reconstructed node may be converted into the directed edge between the first target reconstructed node and the fourth target reconstructed node, and then the directed edge between the first target reconstructed node and the fourth target reconstructed node is represented as the dependency relationship of the first target reconstructed node, and is compiled into the compiled data of the first target reconstructed node. Therefore, a sequence of the first target reconstructed node and the fourth target reconstructed node is controlled. It should be understood that the first target reconstructed node and the fourth target reconstructed node may be reconstructed nodes in a same reconstructed subgraph, or may be reconstructed nodes in different reconstructed subgraphs.

In a possible implementation, there is a directed edge between the first node in the first target reconstructed node and a fourth target node in a fifth target reconstructed node, where the fifth target reconstructed node is a first reconstructed node in the at least one first reconstructed node other than the first target reconstructed node, and the fourth target node is a first node in the plurality of first nodes other than the M first nodes; or the fifth target reconstructed node is any fifth reconstructed node in a fifth reconstructed subgraph, the fifth reconstructed subgraph is obtained by reconstructing a fifth subgraph, the fifth subgraph is a subgraph other than the first subgraph in the plurality of subgraphs, and the fourth target node is a fifth node in the fifth subgraph. The first target reconstructed node and the fifth target reconstructed node are in different streams, the compiled data of the first target reconstructed node further includes a first dependency relationship and a second dependency relationship of a first sending operator node, the first dependency relationship of the first sending operator node represents a directed edge between the first sending operator node and the first target reconstructed node, the second dependency relationship of the first sending operator node represents a directed edge between the first sending operator node and a first receiving operator node, and there is a directed edge between the first receiving operator node and the fifth target reconstructed node. It should be noted that a manner of obtaining the fifth reconstructed subgraph is the same as a manner of obtaining the first reconstructed subgraph in this application. The first reconstructed subgraph is obtained by reconstructing the first subgraph. The first reconstructed subgraph includes at least one first reconstructed node and directed edges between the at least one first reconstructed node. Because the first subgraph includes a plurality of first nodes and directed edges between the plurality of first nodes, the first target reconstructed node in the first reconstructed subgraph includes at least one first node in the plurality of first nodes in the first subgraph and directed edges between the at least one first node. Similarly, the fifth reconstructed subgraph is obtained by reconstructing a fifth subgraph. The fifth reconstructed subgraph includes at least one fifth reconstructed node and directed edges between the at least one fifth reconstructed node. Because the fifth subgraph includes a plurality of fifth nodes and directed edges between the plurality of fifth nodes, any fifth reconstructed node in the fifth reconstructed subgraph includes at least one fifth node in the plurality of fifth nodes in the fifth subgraph and directed edges between the at least one fifth node.

It should be understood that the fifth reconstructed subgraph is also based on the reconstruction principle described in FIG. 3.

In this implementation, for two reconstructed nodes in different streams, the two reconstructed nodes may be reconstructed nodes in a same reconstructed subgraph, or may be reconstructed nodes in different reconstructed subgraphs. If there is a directed edge between a node in one reconstructed node and a node in the other reconstructed node, the directed edge between the node in the reconstructed node and the node in the other reconstructed node may be converted into a directed edge between the reconstructed node and a sending operator node, a directed edge between the sending operator node and a receiving operator node, and a directed edge between the receiving operator node and the other reconstructed node for representation. The directed edge between the reconstructed node and the sending operator node and the directed edge between the sending operator node and the receiving operator node may be represented as a dependency relationship of the sending operator node, and the directed edge between the sending operator node and the receiving operator node, and the directed edge between the receiving operator node and the other reconstructed node may be represented as a dependency relationship of the receiving operator node. Therefore, a sequence of the two reconstructed nodes in the different streams is controlled. For example, the first target reconstructed node and the fifth target reconstructed node are in the different streams, and there is the directed edge between the first node in the first target reconstructed node and the fourth target node in the fifth target reconstructed node. The directed edge between the first node in the first target reconstructed node and the fourth target node in the fifth target reconstructed node may be converted into the directed edge between the first sending operator node and the first target reconstructed node, the directed edge between the first sending operator node and the first receiving operator node, and the directed edge between the first receiving operator node and the fifth target reconstructed node. Then, the directed edge between the first sending operator node and the first target reconstructed node is represented as the first dependency relationship of the first sending operator node; the directed edge between the first sending operator node and the first receiving operator node is represented as the second dependency relationship of the first sending operator node; and the first dependency relationship and the second dependency relationship of the first sending operator node are compiled into the compiled data of the first target reconstructed node. In addition, the directed edge between the first receiving operator node and the fifth target reconstructed node may be represented as a first dependency relationship of the first receiving operator node; the directed edge between the first sending operator node and the first receiving operator node is represented as a second dependency relationship of the first receiving operator node; and the first dependency relationship and the second dependency relationship of the first receiving operator node are compiled into compiled data of the fifth target reconstructed node. Therefore, a sequence of the first target reconstructed node and the fifth target reconstructed node is controlled. It should be understood that the first target reconstructed node and the fifth target reconstructed node may be reconstructed nodes in a same reconstructed subgraph, or may be reconstructed nodes in different reconstructed subgraphs.

In a possible implementation, there is a directed edge between the first node in the first target reconstructed node and a fifth target node in a sixth target reconstructed node, where the sixth target reconstructed node is a first reconstructed node in the at least one first reconstructed node other than the first target reconstructed node, and the fifth target node is a first node in the plurality of first nodes other than the M first nodes; or the sixth target reconstructed node is any sixth reconstructed node in a sixth reconstructed subgraph, the sixth reconstructed subgraph is obtained by reconstructing a sixth subgraph, the sixth subgraph is a subgraph other than the first subgraph in the plurality of subgraphs, and the fifth target node is a sixth node in the sixth subgraph. The first target reconstructed node and the sixth target reconstructed node are in different streams, the compiled data of the first target reconstructed node further includes a first dependency relationship and a second dependency relationship of a second receiving operator node, the first dependency relationship of the second receiving operator node represents a directed edge between the second receiving operator node and the first target reconstructed node, the second dependency relationship of the second receiving operator node represents a directed edge between the second receiving operator node and a second sending operator node, and there is a directed edge between the second sending operator node and the sixth target reconstructed node. It should be noted that a manner of obtaining the sixth reconstructed subgraph is the same as a manner of obtaining the first reconstructed subgraph in this application. The first reconstructed subgraph is obtained by reconstructing the first subgraph. The first reconstructed subgraph includes at least one first reconstructed node and directed edges between the at least one first reconstructed node. Because the first subgraph includes a plurality of first nodes and directed edges between the plurality of first nodes, the first target reconstructed node in the first reconstructed subgraph includes at least one first node in the plurality of first nodes in the first subgraph and directed edges between the at least one first node. Similarly, the sixth reconstructed subgraph is obtained by reconstructing a sixth subgraph. The sixth reconstructed subgraph includes at least one sixth reconstructed node and directed edges between the at least one sixth reconstructed node. Because the sixth subgraph includes a plurality of sixth nodes and directed edges between the plurality of sixth nodes, any sixth reconstructed node in the sixth reconstructed subgraph includes at least one sixth node in the plurality of sixth nodes in the sixth subgraph and directed edges between the at least one sixth node.

It should be understood that the sixth reconstructed subgraph is also based on the reconstruction principle described in FIG. 3.

In this implementation, for two reconstructed nodes in different streams, the two reconstructed nodes may be reconstructed nodes in a same reconstructed subgraph, or may be reconstructed nodes in different reconstructed subgraphs. If there is a directed edge between a node in one reconstructed node and a node in the other reconstructed node, the directed edge between the node in the reconstructed node and the node in the other reconstructed node may be converted into a directed edge between the reconstructed node and a sending operator node, a directed edge between the sending operator node and a receiving operator node, and a directed edge between the receiving operator node and the other reconstructed node for representation. The directed edge between the reconstructed node and the sending operator node and the directed edge between the sending operator node and the receiving operator node may be represented as a dependency relationship of the sending operator node, and the directed edge between the sending operator node and the receiving operator node, and the directed edge between the receiving operator node and the other reconstructed node may be represented as a dependency relationship of the receiving operator node. Therefore, a sequence of the two reconstructed nodes in the different streams is controlled. For example, the first target reconstructed node and the sixth target reconstructed node are in the different streams, and there is the directed edge between the first node in the first target reconstructed node and the fifth target node in the sixth target reconstructed node. The directed edge between the first node in the first target reconstructed node and the fifth target node in the sixth target reconstructed node may be converted into the directed edge between the sixth target reconstructed node and the second sending operator node, the directed edge between the second sending operator node and the second receiving operator node, and the directed edge between the second receiving operator node and the first target reconstructed node. Then, the directed edge between the sixth target reconstructed node and the second sending operator node is represented as a first dependency relationship of the second sending operator node; the directed edge between the second sending operator node and the second receiving operator node is represented as a second dependency relationship of the second sending operator node; and the first dependency relationship and the second dependency relationship of the second sending operator node are compiled into compiled data of the sixth target reconstructed node. In addition, the directed edge between the second receiving operator node and the first target reconstructed node may be represented as the first dependency relationship of the second receiving operator node; the directed edge between the second sending operator node and the second receiving operator node is represented as the second dependency relationship of the second receiving operator node; and the first dependency relationship and the second dependency relationship of the second receiving operator node are compiled into the compiled data of the first target reconstructed node. Therefore, a sequence of the first target reconstructed node and the sixth target reconstructed node is controlled. It should be understood that the first target reconstructed node and the sixth target reconstructed node may be reconstructed nodes in a same reconstructed subgraph, or may be reconstructed nodes in different reconstructed subgraphs.

It should be noted that, for explanations and descriptions of related steps or operations of the subgraph compilation method described in FIG. 26, refer to content described in FIG. 2 to FIG. 25.

2. Graph execution phase

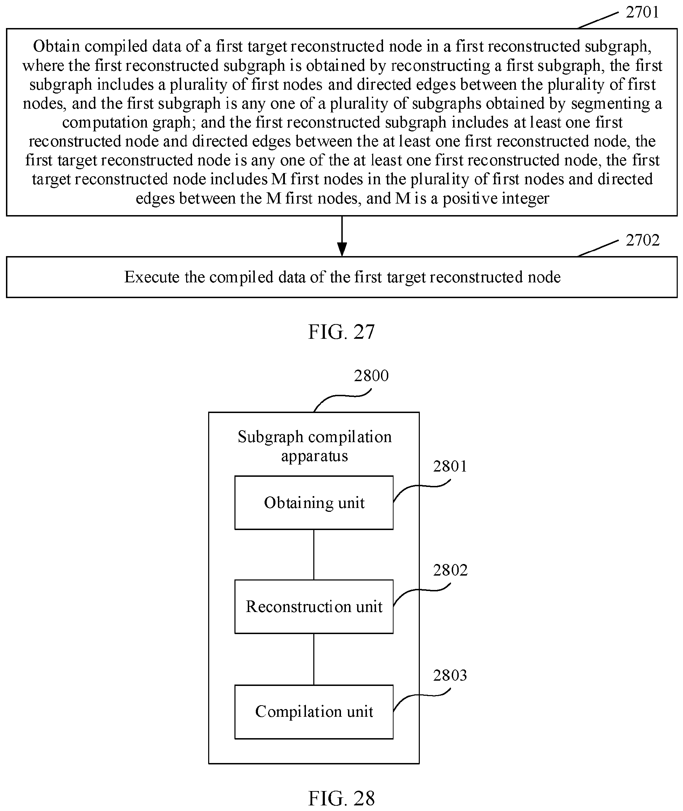

FIG. 27 is a schematic flowchart of a subgraph execution method according to an embodiment of this application. The subgraph execution method is applied to the graph execution apparatus 200. The subgraph execution method includes but is not limited to the following operations or steps.

Step 2701: Obtain compiled data of a first target reconstructed node in a first reconstructed subgraph, where the first reconstructed subgraph is obtained by reconstructing a first subgraph, the first subgraph includes a plurality of first nodes and directed edges between the plurality of first nodes, and the first subgraph is any one of a plurality of subgraphs obtained by segmenting a computation graph; and the first reconstructed subgraph includes at least one first reconstructed node and directed edges between the at least one first reconstructed node, the first target reconstructed node is any one of the at least one first reconstructed node, the first target reconstructed node includes M first nodes in the plurality of first nodes and directed edges between the M first nodes, and M is a positive integer.

Step 2702: Execute the compiled data of the first target reconstructed node.

In this embodiment of this application, the computation graph is segmented into the plurality of subgraphs, any subgraph in the plurality of subgraphs is reconstructed to obtain a reconstructed subgraph, and then any reconstructed node in the reconstructed subgraph is compiled by using a reconstructed node in the reconstructed subgraph as a scheduling unit. It should be noted that the reconstructed subgraph obtained in this application includes at least one reconstructed node and directed edges between the at least one reconstructed node. Therefore, the reconstructed subgraph obtained in this application is essentially a subgraph. In addition, because any reconstructed node in the reconstructed subgraph includes one or more nodes in the any subgraph and directed edges between the one or more nodes, the reconstructed node is essentially a subgraph whose size is smaller than that of the any subgraph. During subgraph compilation, using a reconstructed node as a scheduling unit essentially indicates a graph scheduling mechanism, and scheduling one reconstructed node for compilation at a time is equivalent to scheduling one or more nodes in the any subgraph for compilation at a time. Compared with a manner of using a node (for example, a computing node) in the any subgraph as a scheduling unit and scheduling one node in the any subgraph at a time, a manner of using the reconstructed node as the scheduling unit during subgraph compilation can reduce scheduling time. Further, compiled data of the any reconstructed node obtained by compiling the any reconstructed node is used to execute the one or more nodes in the any subgraph. When the subgraph is executed, scheduling the compiled data of the reconstructed node at a time for execution is equivalent to scheduling the compiled data of the one or more nodes in the any subgraph at a time for execution, that is, in this application, a reconstructed node is a scheduling unit. Scheduling one reconstructed node at a time to execute the reconstructed node is equivalent to scheduling one or more nodes in the any subgraph at a time to execute the one or more nodes. Compared with a manner of using a node (for example, a computing node) in the any subgraph as a scheduling unit and scheduling one node in the any subgraph at a time for executing the node, a manner of using the reconstructed node as the scheduling unit during subgraph execution can reduce scheduling time. For example, for the first subgraph in the plurality of subgraphs obtained by segmenting the computation graph, the first subgraph includes the plurality of first nodes and the directed edges between the plurality of first nodes. The first reconstructed subgraph obtained by reconstructing the first subgraph includes the at least one first reconstructed node and the directed edges between the at least one first reconstructed node. The first target reconstructed node includes the M first nodes in the first subgraph and the directed edges between the M first nodes, and M is a positive integer. Compiling the first target reconstructed node is equal to compiling the M first nodes, and the compiled data of the first target reconstructed node is used to execute the M first nodes, that is, executing the first target reconstructed node is equal to executing the M first nodes. In conclusion, this embodiment of this application provides a graph scheduling mechanism, where a reconstructed node in a graph structure is used as a scheduling unit, to reduce scheduling time.

In a possible implementation, the compiled data of the first target reconstructed node is obtained by compiling a first thread-level subgraph, the first thread-level subgraph is obtained by dividing each of the M first nodes into at least one first child node, the first thread-level subgraph includes N first child nodes and directed edges between the N first child nodes, and N is a positive integer greater than or equal to M.

In this implementation, any reconstructed node includes M first nodes and directed edges between the M first nodes. When the any reconstructed node is compiled, each of the M first nodes is divided into at least one first child node, that is, an operator operation represented by each of the M first nodes is divided into at least one thread, and each of the at least one thread is represented by one child node. After thread division is performed on the M first nodes, N first child nodes are obtained, where N is a positive integer greater than or equal to M, and the N first child nodes and directed edges between the N first child nodes form a first thread-level subgraph. The first thread-level subgraph can be compiled to obtain compiled data of a first target reconstructed node, where the compiled data of the first target reconstructed node includes compiled data of the N first child nodes. Executing the N first child nodes is equal to executing the M first nodes, and at least one first child node obtained by dividing a same first node may be concurrently executed. In this way, when the compiled data of the N first child nodes is scheduled to execute the N first child nodes, first child nodes obtained by dividing a same first node in the N first child nodes can be concurrently executed. This reduces execution time of each of the M first nodes, that is, reduces total execution time of the M first nodes, and improves performance.

In a possible implementation, the compiled data of the first target reconstructed node includes compiled data of the M first nodes or compiled data of the N first child nodes; and the executing the compiled data of the first target reconstructed node includes: writing compiled data of R sixth objects into a cache; and performing the following operations for each of the R sixth objects, to execute the compiled data of the first target reconstructed node: when a quantity of eighth objects on which a seventh object depends is 0, reading compiled data of the seventh object from the cache, and executing the seventh object based on the compiled data of the seventh object, where the seventh object is any one of the R sixth objects; and if the R sixth objects are the M first nodes, the eighth object is a node; or if the R sixth objects are the N first child nodes, the eighth object is a child node.

It should be noted that, when the R sixth objects are the M first nodes, the eighth object is a node, and the node includes various types of nodes such as a computing operator node, a communication operator node, a control operator node, and a heterogeneous computing operator node. When the R sixth objects are the N first child nodes, the eighth object is a child node, and the child node includes a child node obtained by dividing various types of nodes such as a computing operator node, a communication operator node, a control operator node, and a heterogeneous computing operator node.

In this implementation, for any node in a reconstructed node, when a quantity of nodes on which the any node depends is 0, the any node is executed; or for any child node in a thread-level subgraph, when a quantity of child nodes on which the any child node depends is 0, the any child node is executed. This sets an occasion for executing the any node or any child node, and helps improve execution efficiency.

In a possible implementation, the compiled data of the seventh object includes an initial quantity of eighth objects on which the seventh object depends; and if the initial quantity of eighth objects on which the seventh object depends is not 0, after each time a ninth object is executed, a quantity of eighth objects on which the seventh object depends is decreased by 1, and the ninth object is the eighth object on which the seventh object depends.

In this implementation, for any node in a reconstructed node, an occasion for pushing the node to a computing resource for execution is after a quantity of nodes on which the node depends is 0. In this application, an initial quantity of nodes on which the any node depends can be compiled into compiled data of the any node. During execution, this can determine, based on the quantity of nodes on which the any node depends, the occasion for pushing the node to the computing resource for execution. If the initial quantity of nodes on which the any node depends is 0, when the compiled data of the any node is written into a cache, the node may be pushed to the computing resource for execution. Alternatively, if the initial quantity of nodes on which the any node depends is not 0, only after all the nodes on which the any node depends are executed, the compiled data of the any node can be pushed to the computing resource for execution. In this case, each time a node on which the any node depends is executed, the quantity of nodes on which the any node depends is decreased by 1, until the quantity of nodes on which the any node depends is decreased to 0 and there is the occasion for pushing the any node to the computing resource for execution, so that the any node is pushed to the computing resource for execution. Similarly, for any child node in a thread-level subgraph, an occasion for pushing the child node to a computing resource for execution is after a quantity of child nodes on which the child node depends is 0. In this application, an initial quantity of child nodes on which the any child node depends can be compiled into compiled data of the any child node. During execution, this can determine, based on the quantity of child nodes on which the any child node depends, the occasion for pushing the child node to the computing resource for execution. If the initial quantity of child nodes on which the any child node depends is 0, when the compiled data of the any child node is written into a cache, the child node may be pushed to the computing resource for execution. Alternatively, if the initial quantity of child nodes on which the any child node depends is not 0, only after all the child nodes on which the any child node depends are executed, the compiled data of the any child node can be pushed to the computing resource for execution. In this case, each time a child node on which the any child node depends is executed, the quantity of child nodes on which the any child node depends is decreased by 1, until the quantity of child nodes on which the any child node depends is decreased to 0 and there is the occasion for pushing the any child node to the computing resource for execution, so that the any child node is pushed to the computing resource for execution.

In a possible implementation, when the initial quantity of eighth objects on which the seventh object depends is 0, the compiled data of the seventh object is written into the cache before the seventh object is executed; or when the initial quantity of eighth objects on which the seventh object depends is not 0, the compiled data of the seventh object is written into the cache during execution of the ninth object.

In this implementation, if an initial quantity of nodes on which any node in a reconstructed node depends is 0, the any node can be executed without waiting for execution of all other nodes. In this case, compiled data of the any node may be written into a cache before the any node is executed, to ensure smooth execution of the reconstructed node. Alternatively, if an initial quantity of nodes on which any node depends is not 0, the any node can be executed only after all the nodes on which the any node depends are executed. In this case, during execution of a node on which the any node depends, compiled data of the any node may be written into a cache, so that the any node can be executed immediately after all the nodes on which the any node depends are executed, thereby ensuring smooth execution of a reconstructed node. In addition, because the compiled data of the any node is not written into the cache very early, the compiled data of the any node does not occupy the cache for a long time, thereby implementing appropriate use of the cache. Similarly, if an initial quantity of child nodes on which any child node in a thread-level subgraph depends is 0, the any child node can be executed without waiting for execution of all other child nodes. In this case, compiled data of the any child node may be written into a cache before the any child node is executed, to ensure smooth execution of the thread-level subgraph. Alternatively, if an initial quantity of child nodes on which any child node depends is not 0, the any child node can be executed only after all the child nodes on which the any child node depends are executed. In this case, during execution of a child node on which the any child node depends, compiled data of the any child node may be written into a cache, so that the any child node can be executed immediately after all the child node on which the any child node depends are executed, thereby ensuring smooth execution of a thread-level subgraph. In addition, because the compiled data of the any child node is not written into the cache very early, the compiled data of the any child node does not occupy the cache for a long time, thereby implementing appropriate use of the cache.

It should be noted that, for explanations and descriptions of related steps or operations and terms of the subgraph execution method described in FIG. 27, refer to content described in FIG. 2 to FIG. 26. Details are not described herein again.

FIG. 28 is a diagram of a structure of a subgraph compilation apparatus according to an embodiment of this application. The subgraph compilation apparatus 2800 is used in the graph compilation apparatus 100. The subgraph compilation apparatus 2800 includes:

an obtaining unit 2801, configured to obtain a first subgraph, where the first subgraph is any one of a plurality of subgraphs obtained by segmenting a computation graph, and the first subgraph includes a plurality of first nodes and directed edges between the plurality of first nodes;

a reconstruction unit 2802, configured to reconstruct the first subgraph to obtain a first reconstructed subgraph, where the first reconstructed subgraph includes at least one first reconstructed node and directed edges between the at least one first reconstructed node; and

a compilation unit 2803, configured to compile a first target reconstructed node, to obtain compiled data of the first target reconstructed node, where the first target reconstructed node is any one of the at least one first reconstructed node, the first target reconstructed node includes M first nodes in the plurality of first nodes and directed edges between the M first nodes, and M is a positive integer.

In a possible implementation, the compilation unit 2803 is specifically configured to: divide each of the M first nodes into at least one first child node, to obtain a first thread-level subgraph, where the first thread-level subgraph includes N first child nodes and directed edges between the N first child nodes, and N is a positive integer greater than or equal to M; and compile the first thread-level subgraph, to obtain the compiled data of the first target reconstructed node.

In a possible implementation, the compiled data of the first target reconstructed node includes compiled data of a first object, the first object is one of the M first nodes or one of the N first child nodes, and the compiled data of the first object includes at least one of the following: a storage location, a life cycle, and cache management operation indication information of input data of the first object, a storage location, a life cycle, and cache management operation indication information of output data of the first object, a dependency relationship of the first object, and a type of a computation apparatus for executing the first object.

In a possible implementation, the first object is one of the N first child nodes, the compiled data of the first object further includes a second object that is concurrently executed with the first object, the second object is one of the N first child nodes, and the second object and the first object are obtained by dividing a same first node.

In a possible implementation, the cache management operation indication information of the input data of the first object indicates at least one of the following: before the first object is executed, writing target input data from a memory to a cache, where the input data of the first object includes the target input data, the target input data is not output data of a first node in the first target reconstructed node, or the target input data is not output data of a first child node in the first thread-level subgraph; and after the target input data is input into a first node in the first target reconstructed node for a first preset quantity of times, or after the target input data is input into a first child node in the first thread-level subgraph for the first preset quantity of times, deleting the target input data in the cache.

In a possible implementation, the cache management operation indication information of the output data of the first object indicates at least one of the following: writing the output data of the first object into a memory; after the output data of the first object is written into the memory, deleting the output data of the first object in a cache; and after the output data of the first object is input into the first node in the first target reconstructed node for a second preset quantity of times, or after the output data of the first object is input into the first child node in the first thread-level subgraph for the second preset quantity of times, deleting the output data of the first object in the cache.

In a possible implementation, the dependency relationship of the first object includes a first dependency relationship of the first object, and the first dependency relationship of the first object represents a directed edge between the first object and a third object; and if the first object is one of the M first nodes, the third object is one of the M first nodes; or if the first object is one of the N first child nodes, the third object is one of the N first child nodes, and the third object and the first object are obtained by dividing different first nodes.

In a possible implementation, the output data of the first object is input data of a fourth object, the first object is executed by a first computation apparatus, the fourth object is executed by a second computation apparatus, the dependency relationship of the first object further includes a second dependency relationship of the first object, the second dependency relationship of the first object represents a directed edge between the first object and a first communication operator node, and the output data of the first object is transmitted by the first communication operator node from the first computation apparatus to the second computation apparatus. If the first object is one of the M first nodes, the fourth object is a first target node in a second target reconstructed node, where the second target reconstructed node is a first reconstructed node other than the first target reconstructed node in the at least one first reconstructed node, and the first target node is a first node other than the M first nodes in the plurality of first nodes; or the second target reconstructed node is any second reconstructed node in a second reconstructed subgraph, the second reconstructed subgraph is obtained by performing reconstruction on a second subgraph, the second subgraph is a subgraph other than the first subgraph in the plurality of subgraphs, and the first target node is a second node in the second subgraph. Alternatively, if the first object is one of the N first child nodes, the fourth object is any second child node in a second thread-level subgraph, where the second thread-level subgraph is obtained by dividing each first target node in the second target reconstructed node into at least one second child node, the second thread-level subgraph includes P second child nodes and directed edges between the P second child nodes, and P is a positive integer.

In a possible implementation, the input data of the first object includes output data of a fifth object, the first object is executed by a first computation apparatus, the fifth object is executed by a third computation apparatus, the dependency relationship of the first object further includes a third dependency relationship of the first object, the third dependency relationship of the first object represents a directed edge between the first object and a second communication operator node, and the output data of the fifth object is transmitted by the second communication operator node from the third computation apparatus to the first computation apparatus. If the first object is one of the M first nodes, the fifth object is a second target node in a third target reconstructed node, where the third target reconstructed node is a first reconstructed node other than the first target reconstructed node in the at least one first reconstructed node, and the second target node is a first node other than the M first nodes in the plurality of first nodes; or the third target reconstructed node is any third reconstructed node in a third reconstructed subgraph, the third reconstructed subgraph is obtained by performing reconstruction on a third subgraph, the third subgraph is a subgraph other than the first subgraph in the plurality of subgraphs, and the second target node is a third node in the third subgraph. Alternatively, if the first object is one of the N first child nodes, the fifth object is a third child node in a third thread-level subgraph, where the third thread-level subgraph is obtained by dividing each second target node in the third target reconstructed node into at least one third child node, the third thread-level subgraph includes Q third child nodes and directed edges between the Q third child nodes, and Q is a positive integer.

In a possible implementation, there is a directed edge between the first node in the first target reconstructed node and a third target node in a fourth target reconstructed node, where the fourth target reconstructed node is a first reconstructed node in the at least one first reconstructed node other than the first target reconstructed node, and the third target node is a first node in the plurality of first nodes other than the M first nodes; or the fourth target reconstructed node is any fourth reconstructed node in a fourth reconstructed subgraph, the fourth reconstructed subgraph is obtained by reconstructing a fourth subgraph, the fourth subgraph is a subgraph other than the first subgraph in the plurality of subgraphs, and the third target node is a fourth node in the fourth subgraph. The first target reconstructed node and the fourth target reconstructed node are in a same stream (stream), the compiled data of the first target reconstructed node further includes a dependency relationship of the first target reconstructed node, and the dependency relationship of the first target reconstructed node represents a directed edge between the first target reconstructed node and the fourth target reconstructed node.

In a possible implementation, there is a directed edge between the first node in the first target reconstructed node and a fourth target node in a fifth target reconstructed node, where the fifth target reconstructed node is a first reconstructed node in the at least one first reconstructed node other than the first target reconstructed node, and the fourth target node is a first node in the plurality of first nodes other than the M first nodes; or the fifth target reconstructed node is any fifth reconstructed node in a fifth reconstructed subgraph, the fifth reconstructed subgraph is obtained by reconstructing a fifth subgraph, the fifth subgraph is a subgraph other than the first subgraph in the plurality of subgraphs, and the fourth target node is a fifth node in the fifth subgraph. The first target reconstructed node and the fifth target reconstructed node are in different streams, the compiled data of the first target reconstructed node further includes a first dependency relationship and a second dependency relationship of a first sending operator node, the first dependency relationship of the first sending operator node represents a directed edge between the first sending operator node and the first target reconstructed node, the second dependency relationship of the first sending operator node represents a directed edge between the first sending operator node and a first receiving operator node, and there is a directed edge between the first receiving operator node and the fifth target reconstructed node.

In a possible implementation, there is a directed edge between the first node in the first target reconstructed node and a fifth target node in a sixth target reconstructed node, where the sixth target reconstructed node is a first reconstructed node in the at least one first reconstructed node other than the first target reconstructed node, and the fifth target node is a first node in the plurality of first nodes other than the M first nodes; or the sixth target reconstructed node is any sixth reconstructed node in a sixth reconstructed subgraph, the sixth reconstructed subgraph is obtained by reconstructing a sixth subgraph, the sixth subgraph is a subgraph other than the first subgraph in the plurality of subgraphs, and the fifth target node is a sixth node in the sixth subgraph. The first target reconstructed node and the sixth target reconstructed node are in different streams, the compiled data of the first target reconstructed node further includes a first dependency relationship and a second dependency relationship of a second receiving operator node, the first dependency relationship of the second receiving operator node represents a directed edge between the second receiving operator node and the first target reconstructed node, the second dependency relationship of the second receiving operator node represents a directed edge between the second receiving operator node and a second sending operator node, and there is a directed edge between the second sending operator node and the sixth target reconstructed node.

It should be noted that, for implementation of each unit in the subgraph compilation apparatus 2800, refer to corresponding descriptions in the method embodiment shown in FIG. 26, and for beneficial effect brought by the subgraph compilation apparatus 2800, refer to corresponding descriptions in the method embodiment shown in FIG. 26. Details are not described herein again.

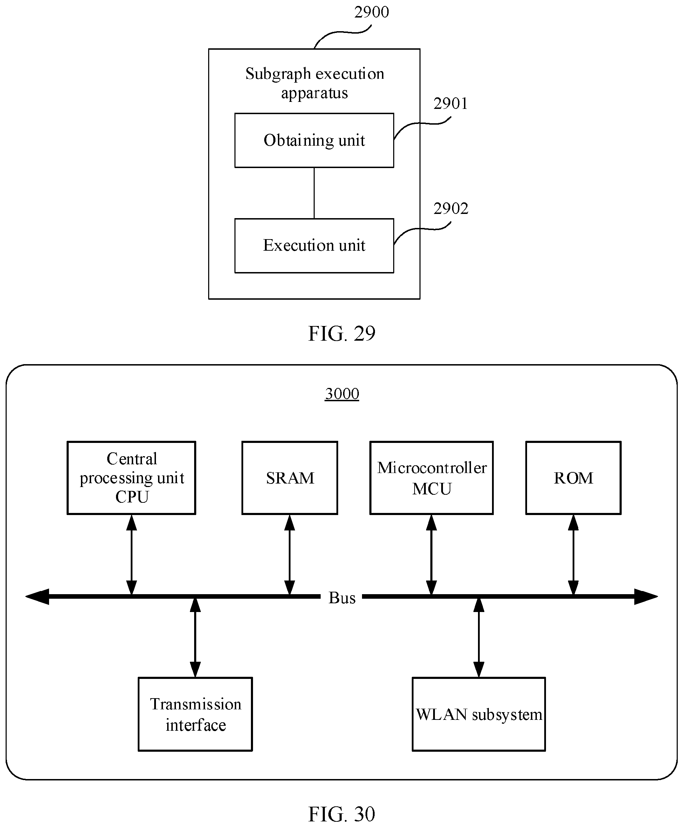

FIG. 29 is a diagram of a structure of a subgraph execution apparatus according to an embodiment of this application. The subgraph execution apparatus 2900 is used in the graph execution apparatus 200. The subgraph execution apparatus 2900 includes:

an obtaining unit 2901, configured to obtain compiled data of a first target reconstructed node in a first reconstructed subgraph, where the first reconstructed subgraph is obtained by reconstructing a first subgraph, the first subgraph includes a plurality of first nodes and directed edges between the plurality of first nodes, and the first subgraph is any one of a plurality of subgraphs obtained by segmenting a computation graph; and the first reconstructed subgraph includes at least one first reconstructed node and directed edges between the at least one first reconstructed node, the first target reconstructed node is any one of the at least one first reconstructed node, the first target reconstructed node includes M first nodes in the plurality of first nodes and directed edges between the M first nodes, and M is a positive integer; and

an execution unit 2902, configured to execute the compiled data of the first target reconstructed node.

In a possible implementation, the compiled data of the first target reconstructed node is obtained by compiling a first thread-level subgraph, the first thread-level subgraph is obtained by dividing each of the M first nodes into at least one first child node, the first thread-level subgraph includes N first child nodes and directed edges between the N first child nodes, and N is a positive integer greater than or equal to M.

In a possible implementation, the compiled data of the first target reconstructed node includes compiled data of the M first nodes or compiled data of the N first child nodes; and the execution unit 2902 is specifically configured to: write compiled data of R sixth objects into a cache; and perform the following operations for each of the R sixth objects, to execute the compiled data of the first target reconstructed node: when a quantity of eighth objects on which a seventh object depends is 0, reading compiled data of the seventh object in the cache, and executing the seventh object based on the compiled data of the seventh object, where the seventh object is any one of the R sixth objects; and if the R sixth objects are the M first nodes, the eighth object is a node; or if the R sixth objects are the N first child nodes, the eighth object is a child node.

In a possible implementation, the compiled data of the seventh object includes an initial quantity of eighth objects on which the seventh object depends; and if the initial quantity of eighth objects on which the seventh object depends is not 0, after each time a ninth object is executed, a quantity of eighth objects on which the seventh object depends is decreased by 1, and the ninth object is the eighth object on which the seventh object depends.

In a possible implementation, when the initial quantity of eighth objects on which the seventh object depends is 0, the compiled data of the seventh object is written into the cache before the seventh object is executed; or when the initial quantity of eighth objects on which the seventh object depends is not 0, the compiled data of the seventh object is written into the cache during execution of the ninth object.

In a possible implementation, the compiled data of the first target reconstructed node includes compiled data of a first object, the first object is one of the M first nodes or one of the N first child nodes, and the compiled data of the first object includes at least one of the following: a storage location, a life cycle, and cache management operation indication information of input data of the first object, a storage location, a life cycle, and cache management operation indication information of output data of the first object, a dependency relationship of the first object, and a type of a computation apparatus for executing the first object.

In a possible implementation, the first object is one of the N first child nodes, the compiled data of the first object further includes a second object that is concurrently executed with the first object, the second object is one of the N first child nodes, and the second object and the first object are obtained by dividing a same first node.

In a possible implementation, the cache management operation indication information of the input data of the first object indicates at least one of the following: before the first object is executed, writing target input data from a memory to a cache, where the input data of the first object includes the target input data, the target input data is not output data of a first node in the first target reconstructed node, or the target input data is not output data of a first child node in the first thread-level subgraph; and after the target input data is input into a first node in the first target reconstructed node for a first preset quantity of times, or after the target input data is input into a first child node in the first thread-level subgraph for the first preset quantity of times, deleting the target input data in the cache.

In a possible implementation, the cache management operation indication information of the output data of the first object indicates at least one of the following: writing the output data of the first object into a memory; after the output data of the first object is written into the memory, deleting the output data of the first object in a cache; and after the output data of the first object is input into the first node in the first target reconstructed node for a second preset quantity of times, or after the output data of the first object is input into the first child node in the first thread-level subgraph for the second preset quantity of times, deleting the output data of the first object in the cache.

In a possible implementation, the dependency relationship of the first object includes a first dependency relationship of the first object, and the first dependency relationship of the first object represents a directed edge between the first object and a third object; and if the first object is one of the M first nodes, the third object is one of the M first nodes; or if the first object is one of the N first child nodes, the third object is one of the N first child nodes, and the third object and the first object are obtained by dividing different first nodes.

In a possible implementation, the output data of the first object is input data of a fourth object, the first object is executed by a first computation apparatus, the fourth object is executed by a second computation apparatus, the dependency relationship of the first object further includes a second dependency relationship of the first object, the second dependency relationship of the first object represents a directed edge between the first object and a first communication operator node, and the output data of the first object is transmitted by the first communication operator node from the first computation apparatus to the second computation apparatus. If the first object is one of the M first nodes, the fourth object is a first target node in a second target reconstructed node, where the second target reconstructed node is a first reconstructed node other than the first target reconstructed node in the at least one first reconstructed node, and the first target node is a first node other than the M first nodes in the plurality of first nodes; or the second target reconstructed node is any second reconstructed node in a second reconstructed subgraph, the second reconstructed subgraph is obtained by performing reconstruction on a second subgraph, the second subgraph is a subgraph other than the first subgraph in the plurality of subgraphs, and the first target node is a second node in the second subgraph. Alternatively, if the first object is one of the N first child nodes, the fourth object is any second child node in a second thread-level subgraph, where the second thread-level subgraph is obtained by dividing each first target node in the second target reconstructed node into at least one second child node, the second thread-level subgraph includes P second child nodes and directed edges between the P second child nodes, and P is a positive integer.

In a possible implementation, the input data of the first object includes output data of a fifth object, the first object is executed by a first computation apparatus, the fifth object is executed by a third computation apparatus, the dependency relationship of the first object further includes a third dependency relationship of the first object, the third dependency relationship of the first object represents a directed edge between the first object and a second communication operator node, and the output data of the fifth object is transmitted by the second communication operator node from the third computation apparatus to the first computation apparatus. If the first object is one of the M first nodes, the fifth object is a second target node in a third target reconstructed node, where the third target reconstructed node is a first reconstructed node other than the first target reconstructed node in the at least one first reconstructed node, and the second target node is a first node other than the M first nodes in the plurality of first nodes; or the third target reconstructed node is any third reconstructed node in a third reconstructed subgraph, the third reconstructed subgraph is obtained by performing reconstruction on a third subgraph, the third subgraph is a subgraph other than the first subgraph in the plurality of subgraphs, and the second target node is a third node in the third subgraph. Alternatively, if the first object is one of the N first child nodes, the fifth object is a third child node in a third thread-level subgraph, where the third thread-level subgraph is obtained by dividing each second target node in the third target reconstructed node into at least one third child node, the third thread-level subgraph includes Q third child nodes and directed edges between the Q third child nodes, and Q is a positive integer.

In a possible implementation, there is a directed edge between the first node in the first target reconstructed node and a third target node in a fourth target reconstructed node, where the fourth target reconstructed node is a first reconstructed node in the at least one first reconstructed node other than the first target reconstructed node, and the third target node is a first node in the plurality of first nodes other than the M first nodes; or the fourth target reconstructed node is any fourth reconstructed node in a fourth reconstructed subgraph, the fourth reconstructed subgraph is obtained by reconstructing a fourth subgraph, the fourth subgraph is a subgraph other than the first subgraph in the plurality of subgraphs, and the third target node is a fourth node in the fourth subgraph. The first target reconstructed node and the fourth target reconstructed node are in a same stream (stream), the compiled data of the first target reconstructed node further includes a dependency relationship of the first target reconstructed node, and the dependency relationship of the first target reconstructed node represents a directed edge between the first target reconstructed node and the fourth target reconstructed node.

In a possible implementation, there is a directed edge between the first node in the first target reconstructed node and a fourth target node in a fifth target reconstructed node, where the fifth target reconstructed node is a first reconstructed node in the at least one first reconstructed node other than the first target reconstructed node, and the fourth target node is a first node in the plurality of first nodes other than the M first nodes; or the fifth target reconstructed node is any fifth reconstructed node in a fifth reconstructed subgraph, the fifth reconstructed subgraph is obtained by reconstructing a fifth subgraph, the fifth subgraph is a subgraph other than the first subgraph in the plurality of subgraphs, and the fourth target node is a fifth node in the fifth subgraph. The first target reconstructed node and the fifth target reconstructed node are in different streams, the compiled data of the first target reconstructed node further includes a first dependency relationship and a second dependency relationship of a first sending operator node, the first dependency relationship of the first sending operator node represents a directed edge between the first sending operator node and the first target reconstructed node, the second dependency relationship of the first sending operator node represents a directed edge between the first sending operator node and a first receiving operator node, and there is a directed edge between the first receiving operator node and the fifth target reconstructed node.

In a possible implementation, there is a directed edge between the first node in the first target reconstructed node and a fifth target node in a sixth target reconstructed node, where the sixth target reconstructed node is a first reconstructed node in the at least one first reconstructed node other than the first target reconstructed node, and the fifth target node is a first node in the plurality of first nodes other than the M first nodes; or the sixth target reconstructed node is any sixth reconstructed node in a sixth reconstructed subgraph, the sixth reconstructed subgraph is obtained by reconstructing a sixth subgraph, the sixth subgraph is a subgraph other than the first subgraph in the plurality of subgraphs, and the fifth target node is a sixth node in the sixth subgraph. The first target reconstructed node and the sixth target reconstructed node are in different streams, the compiled data of the first target reconstructed node further includes a first dependency relationship and a second dependency relationship of a second receiving operator node, the first dependency relationship of the second receiving operator node represents a directed edge between the second receiving operator node and the first target reconstructed node, the second dependency relationship of the second receiving operator node represents a directed edge between the second receiving operator node and a second sending operator node, and there is a directed edge between the second sending operator node and the sixth target reconstructed node.

It should be noted that, for implementation of each unit in the subgraph execution apparatus 2900, refer to corresponding descriptions in the method embodiment shown in FIG. 27, and for beneficial effect brought by the subgraph execution apparatus 2900, refer to corresponding descriptions in the method embodiment shown in FIG. 27. Details are not described herein again.

FIG. 30 is a diagram of a structure of a computer device according to an embodiment of this application. The computer device may be the foregoing graph compilation apparatus 100 or graph execution apparatus 200. The computer device 3000 includes at least one CPU, a memory, a micro controller (Micro controller Unit, MCU), a WLAN subsystem, a bus, a transmission interface, and the like, where a type of the memory may include, for example, an SRAM and a ROM. Although not shown in FIG. 30, the computer device 3000 may further include other dedicated processors such as an application processor (Application Processor, AP) and an NPU, and other subsystems such as a power management subsystem, a clock management subsystem, and a power consumption management subsystem.

The foregoing parts of the computer device 3000 are coupled by using a connector. For example, the connector includes various types of interfaces, transmission lines, buses, and the like. These interfaces are usually electrical communication interfaces, but may also be mechanical interfaces or interfaces in other forms. This is not limited in this embodiment.

Optionally, the CPU may be a single-core (single-CPU) processor or a multi-core (multi-CPU) processor. Optionally, the CPU may be a processor group including a plurality of processors, and the plurality of processors are coupled to each other through one or more buses. In an optional case, the CPU implements any link training method in the foregoing method embodiments by invoking a program instruction stored in the on-chip memory or an off-chip memory. In an optional case, the CPU and the MCU jointly implement any link training method in the foregoing method embodiments. For example, the CPU completes some steps in the link training method, and the MCU completes other steps in the link training method. In an optional case, the AP or another dedicated processor implements any link training method in the foregoing method embodiments by invoking the program instruction stored in the on-chip memory or the off-chip memory.

The transmission interface may be an interface that is of the processor chip and that is for receiving and sending data. The transmission interface usually includes a plurality of interfaces. In an optional case, the transmission interface may include an inter-integrated circuit (Inter-Integrated Circuit, I2C) interface, a serial peripheral interface (Serial Peripheral Interface, SPI), a universal asynchronous receiver-transmitter (Universal asynchronous receiver-transmitter, UART) interface, a general-purpose input/output (General-purpose input/output, GPIO) interface, and the like. It should be understood that these interfaces may implement different functions through reusing a same physical interface.

In an optional case, the transmission interface may further include a high definition multimedia interface (High Definition Multimedia Interface, HDMI), a V-By-One interface, an embedded display port (Embedded Display Port, eDP), and a mobile industry processor interface (Mobile Industry Processor Interface, MIPI), a Display Port (DP), or the like.

In an optional case, the foregoing parts are integrated on a same chip. In another optional case, the memory may be an independent chip.

For example, the WLAN subsystem may include a radio frequency circuit and a baseband.

A chip in this embodiment of this application is a system manufactured on a same semiconductor substrate in an integrated circuit process, and is also referred to as a semiconductor chip. The semiconductor chip may be a set of integrated circuits formed by manufacturing on a substrate (which is usually, for example, a semiconductor material of silicon) in the integrated circuit process. An external layer of the semiconductor chip is usually encapsulated by a semiconductor encapsulation material. The integrated circuit may include various types of functional devices. Each type of functional device includes a logic gate circuit, a metal-oxide-semiconductor (Metal-Oxide-Semiconductor, MOS) transistor, or a transistor such as a bipolar transistor or a diode, or may include another component such as a capacitor, a resistor, or an inductor. Each functional device may operate independently or operate under an action of necessary drive software, and may implement various functions such as communication, operation, and storage.

An embodiment of this application further provides a computer-readable storage medium. The computer-readable storage medium includes a computer program. When the computer program is run on a computer or a processor, the computer or the processor is enabled to perform the method in FIG. 26 or FIG. 27.

An embodiment of this application further provides a computer program product. The computer program product includes a computer program. When the computer program is run on a computer or a processor, the computer or the processor is enabled to perform the method in FIG. 26 or FIG. 27.

An embodiment of this application further provides a chip, including a processor, configured to invoke a computer program from a memory and run the computer program, so that a device on which the chip is installed performs the method FIG. 26 or FIG. 27.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Persons of ordinary skill in the art may be aware that, in combination with the examples described in embodiments provided in this specification, units and algorithm steps may be implemented by using electronic hardware or a combination of computer software and the electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application.

A sequence of the steps of the method in embodiments of this application may be adjusted, combined, or removed based on an actual requirement. In addition, for terms and descriptions in embodiments of this application, refer to corresponding descriptions in other embodiments.

The modules in the apparatus in embodiments of this application may be combined, divided, and deleted based on an actual requirement.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof. In addition, the modifications and replacements do not make the essence of the corresponding technical solutions depart from the scope of the technical solutions of embodiments of this application.

**Claims**

1. A subgraph compilation method, comprising:

   obtaining (2601) a first subgraph, wherein the first subgraph is any one of a plurality of subgraphs obtained by segmenting a computation graph using a segmentation strategy, and the first subgraph comprises a plurality of first nodes and directed edges between the plurality of first nodes, wherein the segmentation strategy comprises: a strategy based on differential information of tensor arrangement shape on the subgraph, or a strategy that uses an automatic tuning tool automatic search algorithm, or a strategy generation neural network model;
   reconstructing (2602) the first subgraph to obtain a first reconstructed subgraph, wherein the first reconstructed subgraph comprises at least one first reconstructed node and directed edges between the at least one first reconstructed node, wherein the reconstructing the first subgraph refers to using at least one first node and directed edges between the at least one first node in the first subgraph as a reconstructed node; and
   compiling (2603) a first target reconstructed node, to obtain compiled data of the first target reconstructed node, wherein the first target reconstructed node is any one of the at least one first reconstructed node, the first target reconstructed node comprises M first nodes in the plurality of first nodes and directed edges between the M first nodes, and M is a positive integer and M>1;
   wherein the compiled data of the first target reconstructed node comprises compiled data of a first object, the first object is one of the M first nodes or one of the N first child nodes, and the compiled data of the first object comprises at least one of the following:

a storage location, life cycle, and cache management operation indication information of input data of the first object,
a storage location, life cycle, and cache management operation indication information of output data of the first object,
a dependency relationship of the first object, and
a type of a computation apparatus for executing the first object; and
wherein the cache management operation indication information of the input data of the first object indicates at least one of the following:

before the first object is executed, writing target input data from a memory to a cache, wherein the input data of the first object comprises the target input data, and wherein the target input data is not output data of a first node in the first target reconstructed node, or the target input data is not output data of a first child node in the first thread-level subgraph; and
after the target input data is input into a first node in the first target reconstructed node for a first preset quantity of times, or after the target input data is input into a first child node in the first thread-level subgraph for the first preset quantity of times, deleting the target input data in the cache.

2. The method according to claim 1, wherein the compiling a first target reconstructed node, to obtain compiled data of the first target reconstructed node comprises:

dividing each of the M first nodes into at least one first child node, to obtain a first thread-level subgraph, wherein the first thread-level subgraph comprises N first child nodes and directed edges between the N first child nodes, and N is a positive integer greater than or equal to M, wherein the division of each first node into the plurality of child nodes is determined based on whether input data of the first node can be divided into a plurality of pieces of input subdata; and
compiling the first thread-level subgraph, to obtain the compiled data of the first target reconstructed node.

3. The method according to claim 1 or 2, wherein the first object is one of the N first child nodes, the compiled data of the first object further comprises a second object that is concurrently executed with the first object, the second object is one of the N first child nodes, and the second object and the first object are obtained by dividing a same first node.

4. The method according to claim 1, wherein the cache management operation indication information of the output data of the first object indicates at least one of the following:

writing the output data of the first object into a memory;
after the output data of the first object is written into the memory, deleting the output data of the first object in a cache; and
after the output data of the first object is input into the first node in the first target reconstructed node for a second preset quantity of times, or after the output data of the first object is input into the first child node in the first thread-level subgraph for the second preset quantity of times, deleting the output data of the first object in the cache.

5. The method according to any one of claims 1 to 4, wherein the dependency relationship of the first object comprises a first dependency relationship of the first object, and the first dependency relationship of the first object represents a directed edge between the first object and a third object; and

if the first object is one of the M first nodes, the third object is one of the M first nodes; or
if the first object is one of the N first child nodes, the third object is one of the N first child nodes, and the third object and the first object are obtained by dividing different first nodes.

6. The method according to any one of claims 1 to 5, wherein the output data of the first object is input data of a fourth object, the first object is executed by a first computation apparatus, the fourth object is executed by a second computation apparatus, the dependency relationship of the first object further comprises a second dependency relationship of the first object, the second dependency relationship of the first object represents a directed edge between the first object and a first communication operator node, and the output data of the first object is transmitted by the first communication operator node from the first computation apparatus to the second computation apparatus; and

if the first object is one of the M first nodes, the fourth object is a first target node in a second target reconstructed node; or

if the first object is one of the N first child nodes, the fourth object is a second child node in a second thread-level subgraph.

7. A subgraph execution method, comprising:

obtaining (2701) compiled data of a first target reconstructed node in a first reconstructed subgraph, wherein the first reconstructed subgraph is obtained by reconstructing a first subgraph, the first subgraph comprises a plurality of first nodes and directed edges between the plurality of first nodes, wherein reconstructing the first subgraph refers to using at least one first node and directed edges between the at least one first node in the first subgraph as a reconstructed node, and the first subgraph is any one of a plurality of subgraphs obtained by segmenting a computation graph using a segmentation strategy, wherein the segmentation strategy comprises: a strategy based on differential information of tensor arrangement shape on the subgraph, or a strategy that uses an automatic tuning tool automatic search algorithm, or a strategy generation neural network model; and the first reconstructed subgraph comprises at least one first reconstructed node and directed edges between the at least one first reconstructed node, the first target reconstructed node is any one of the at least one first reconstructed node, the first target reconstructed node comprises M first nodes in the plurality of first nodes and directed edges between the M first nodes, and M is a positive integer and M>1; and
executing (2702) the compiled data of the first target reconstructed node;
wherein the compiled data of the first target reconstructed node comprises compiled data of the M first nodes or compiled data of the N first child nodes; and the executing the compiled data of the first target reconstructed node comprises:

writing compiled data of R sixth objects into a cache; and
performing the following operations for each of the R sixth objects, to execute the compiled data of the first target reconstructed node:

when a quantity of eighth objects on which a seventh object depends is 0, reading compiled data of the seventh object from the cache, and executing the seventh object based on the compiled data of the seventh object, wherein the seventh object is any one of the R sixth objects; and
if the R sixth objects are the M first nodes, the eighth object is a node; or if the R sixth objects are the N first child nodes, the eighth object is a child node.

8. The method according to claim 7, wherein the compiled data of the first target reconstructed node is obtained by compiling a first thread-level subgraph, the first thread-level subgraph is obtained by dividing each of the M first nodes into at least one first child node, the first thread-level subgraph comprises N first child nodes and directed edges between the N first child nodes, and N is a positive integer greater than or equal to M.

9. A graph compilation apparatus, comprising a processor, a memory, and one or more programs, wherein the one or more programs are stored in the memory and are configured to be performed by the processor, and the programs comprise instructions for performing steps in the method according to any one of claims 1 to 6.

10. A graph execution apparatus, comprising a processor, a memory, and one or more programs, wherein the one or more programs are stored in the memory and are configured to be performed by the processor, and the programs comprise instructions for performing steps in the method according to any one of claims 7 to 8.

11. A computer-readable storage medium, wherein the computer-readable storage medium comprises a computer program, and when the computer program is run on a computer or a processor, the computer or the processor is enabled to perform the method according to any one of claims 1 to 6 or claims 7 to 8.

12. A computer program product, wherein the computer program product comprises a computer program, and when the computer program is run on a computer or a processor, the computer or the processor is enabled to perform the method according to any one of claims 1 to 6 or claims 7 to 8.

**Patentansprüche**

1. Subgraphenkompilierungsverfahren, umfassend:

Erlangen (2601) eines ersten Subgraphen, wobei der erste Subgraph einer von einer Vielzahl von Subgraphen ist, die durch Segmentieren eines Berechnungsgraphen unter Verwendung einer Segmentierungsstrategie erlangt wird, und der erste Subgraph eine Vielzahl von ersten Knoten und gerichtete Kanten zwischen der Vielzahl von ersten Knoten umfasst, wobei die Segmentierungsstrategie Folgendes umfasst: eine Strategie, die auf Differenzinformationen über eine Tensoranordnungsform auf dem Subgraphen basiert, oder eine Strategie, die einen automatischen Suchalgorithmus eines automatischen Einstellwerkzeugs verwendet, oder ein neuronales Netzwerkmodell zur Strategieerzeugung;

Rekonstruieren (2602) des ersten Subgraphen, um einen ersten rekonstruierten Subgraphen zu erlangen, wobei der erste rekonstruierte Subgraph mindestens einen ersten rekonstruierten Knoten und gerichtete Kanten zwischen dem mindestens einen ersten rekonstruierten Knoten umfasst, wobei sich das Rekonstruieren des ersten Subgraphen auf Verwenden von mindestens einem ersten Knoten und gerichteten Kanten zwischen dem mindestens einen ersten Knoten in dem ersten Subgraphen als einen rekonstruierten Knoten bezieht; und

Kompilieren (2603) eines ersten rekonstruierten Zielknotens, um kompilierte Daten des ersten rekonstruierten Zielknotens zu erlangen, wobei der erste rekonstruierte Zielknoten einer des mindestens einen ersten rekonstruierten Knotens ist, der erste rekonstruierte Zielknoten M erste Knoten aus der Vielzahl von ersten Knoten und gerichtete Kanten zwischen den M ersten Knoten umfasst und M eine positive ganze Zahl und M>1 ist;

wobei die kompilierten Daten des ersten rekonstruierten Zielknotens kompilierte Daten eines ersten Objekts umfassen, das erste Objekt einer der M ersten Knoten oder einer der N ersten Kindknoten ist und die kompilierten Daten des ersten Objekts mindestens eines der Folgenden umfassen:

Angabeinformationen zu Speicherort, Lebenszyklus und Cache-Verwaltungsvorgängen von Eingabedaten des ersten Objekts, Angabeinformationen zu Speicherort, Lebenszyklus und Cache-Verwaltungsvorgängen von Ausgabedaten des ersten Objekts, eine Abhängigkeitsbeziehung des ersten Objekts und

eine Art von einer Berechnungsvorrichtung zum Ausführen des ersten Objekts; und

wobei die Angabeinformationen zu Cache-Verwaltungsvorgängen der Eingabedaten des ersten Objekts mindestens eines der Folgenden angeben:

bevor das erste Objekt ausgeführt wird, Schreiben von Zieleingabedaten von einem Speicher in einen Cache, wobei die Eingabedaten des ersten Objekts die Zieleingabedaten umfassen und wobei die Zieleingabedaten keine Ausgabedaten eines ersten Knotens in dem ersten rekonstruierten Zielknoten oder die Zieleingabedaten keine Ausgabedaten eines ersten Kindknotens in dem ersten Subgraphen auf Thread-Ebene sind; und, nachdem die Zieleingabedaten eine erste voreingestellte Anzahl von Malen in einen ersten Knoten in dem ersten rekonstruierten Zielknoten eingegeben worden sind oder nachdem die Zieleingabedaten die erste voreingestellte Anzahl von Malen in einen ersten Kindknoten in dem ersten Subgraphen auf Thread-Ebene eingegeben worden sind, Löschen der Zieleingabedaten in dem Cache.

2. Verfahren nach Anspruch 1, wobei das Kompilieren eines ersten rekonstruierten Zielknotens zum Erlangen von kompilierten Daten des ersten rekonstruierten Zielknotens Folgendes umfasst:

Aufteilen jedes der M ersten Knoten in mindestens einen ersten Kindknoten, um einen ersten Subgraphen auf Thread-Ebene zu erlangen, wobei der erste Subgraph auf Thread-Ebene N erste Kindknoten und gerichtete Kanten zwischen den N ersten Kindknoten umfasst und N eine positive ganze Zahl größer als oder gleich M ist, wobei die Aufteilung jedes ersten Knotens in die Vielzahl von Kindknoten basierend darauf bestimmt wird, ob Eingabedaten des ersten Knotens in eine Vielzahl von Eingabe-Subdaten aufgeteilt werden können; und

Kompilieren des ersten Subgraphen auf Thread-Ebene, um die kompilierten Daten des ersten rekonstruierten Zielknotens zu erlangen.

3. Verfahren nach Anspruch 1 oder 2, wobei das erste Objekt einer der N ersten Kindknoten ist, die kompilierten Daten des ersten Objekts ferner ein zweites Objekt umfassen, das gleichzeitig mit dem ersten Objekt ausgeführt wird, das zweite Objekt einer der N ersten Kindknoten ist und das zweite Objekt und das erste Objekt durch Aufteilen eines gemeinsamen ersten Knotens erlangt werden.

4. Verfahren nach Anspruch 1, wobei die Angabeinformationen zu Cache-Verwaltungsvorgängen der Ausgabedaten des ersten Objekts mindestens eines der Folgenden angeben:

Schreiben der Ausgabedaten des ersten Objekts in einen Speicher; nachdem die Ausgabedaten des ersten Objekts in den Speicher geschrieben worden sind, Löschen der Ausgabedaten des ersten Objekts in einem Cache; und, nachdem die Ausgabedaten des ersten Objekts eine zweite voreingestellte Anzahl von Malen in den ersten Knoten in dem ersten rekonstruierten Zielknoten eingegeben worden sind oder nachdem die Ausgabedaten des ersten Objekts die zweite voreingestellte Anzahl von Malen in den ersten Kindknoten in dem ersten Subgraphen auf Thread-Ebene eingegeben worden sind, Löschen der Ausgabedaten des ersten Objekts in dem Cache.

5. Verfahren nach einem der Ansprüche 1 bis 4, wobei die Abhängigkeitsbeziehung des ersten Objekts eine erste Abhängigkeitsbeziehung des ersten Objekts umfasst und die erste Abhängigkeitsbeziehung des ersten Objekts eine gerichtete Kante zwischen dem ersten Objekt und einem dritten Objekt darstellt; und,

> wenn das erste Objekt einer der M ersten Knoten ist, das dritte Objekt einer der M ersten Knoten ist; oder,
> wenn das erste Objekt einer der N ersten Kindknoten ist, das dritte Objekt einer der N ersten Kindknoten ist und das dritte Objekt und das erste Objekt durch Aufteilen von verschiedenen ersten Knoten erlangt werden.

6. Verfahren nach einem der Ansprüche 1 bis 5, wobei die Ausgabedaten des ersten Objekts Eingabedaten eines vierten Objekts sind, das erste Objekt durch eine erste Berechnungsvorrichtung ausgeführt wird, das vierte Objekt durch eine zweite Berechnungsvorrichtung ausgeführt wird, die Abhängigkeitsbeziehung des ersten Objekts ferner eine zweite Abhängigkeitsbeziehung des ersten Objekts umfasst, die zweite Abhängigkeitsbeziehung des ersten Objekts eine gerichtete Kante zwischen dem ersten Objekt und einem ersten Kommunikationsoperatorknoten darstellt und die Ausgabedaten des ersten Objekts von dem ersten Kommunikationsoperatorknoten von der ersten Berechnungsvorrichtung zu der zweiten Berechnungsvorrichtung übertragen werden; und,

> wenn das erste Objekt einer der M ersten Knoten ist, das vierte Objekt ein erster Zielknoten in einem zweiten rekonstruierten Zielknoten ist; oder,
> wenn das erste Objekt einer der N ersten Kindknoten ist, das vierte Objekt ein zweiter Kindknoten in einem zweiten Subgraphen auf Thread-Ebene ist.

7. Subgraphenausführungsverfahren, umfassend:

Erlangen (2701) von kompilierten Daten eines ersten rekonstruierten Zielknotens in einem ersten rekonstruierten Subgraphen, wobei der erste rekonstruierte Subgraph durch Rekonstruieren eines ersten Subgraphen erlangt wird, der erste Subgraph eine Vielzahl von ersten Knoten und gerichteten Kanten zwischen der Vielzahl von ersten Knoten umfasst, wobei sich das Rekonstruieren des ersten Subgraphen auf Verwenden von mindestens einem ersten Knoten und gerichteten Kanten zwischen dem mindestens einen ersten Knoten in dem ersten Subgraphen als einen rekonstruierten Knoten bezieht und der erste Subgraph einer von einer Vielzahl von Subgraphen ist, die durch Segmentieren eines Berechnungsgraphen unter Verwendung einer Segmentierungsstrategie erlangt werden, wobei die Segmentierungsstrategie Folgendes umfasst: eine Strategie, die auf Differenzinformationen der Tensoranordnungsform auf dem Subgraphen basiert, oder eine Strategie, die einen automatischen Suchalgorithmus eines automatischen Einstellwerkzeugs verwendet, oder ein neuronales Netzwerkmodell zur Strategieerzeugung; und der erste rekonstruierte Subgraph mindestens einen ersten rekonstruierten Knoten und gerichtete Kanten zwischen dem mindestens einen ersten rekonstruierten Knoten umfasst, der erste rekonstruierte Zielknoten einer des mindestens einen ersten rekonstruierten Knotens ist, der erste rekonstruierte Zielknoten M erste Knoten in der Vielzahl von ersten Knoten und gerichteten Kanten zwischen den M ersten Knoten umfasst und M eine positive ganze Zahl und M>1 ist; und Ausführen (2702) der kompilierten Daten des ersten rekonstruierten Zielknotens; wobei die kompilierten Daten des ersten rekonstruierten Zielknotens entweder die kompilierten Daten der M ersten Knoten oder die kompilierten Daten der N ersten Kindknoten umfassen; und das Ausführen der kompilierten Daten des ersten rekonstruierten Zielknotens Folgendes umfasst:

> Schreiben von kompilierten Daten von R sechsten Objekten in einen Cache; und Durchführen der folgenden Vorgänge für jedes der R sechsten Objekte, um die kompilierten Daten des ersten rekonstruierten Zielknotens auszuführen:
>
> > wenn eine Anzahl von achten Objekten, von denen ein siebtes Objekt abhängt, 0 ist, Lesen der kompilierten Daten des siebten Objekts aus dem Cache und Ausführen des siebten Objekts basierend auf den kompilierten Daten des siebten Objekts, wobei das siebte Objekt eines der R sechsten Objekte ist; und, wenn die R sechsten Objekte die M ersten Knoten sind, das achte Objekt ein Knoten ist; oder, wenn die R sechsten Objekte die N ersten Kindknoten sind, das achte Objekt ein Kindknoten ist.

8. Verfahren nach Anspruch 7, wobei die kompilierten Daten des ersten rekonstruierten Zielknotens durch Kompilieren eines ersten Subgraphen auf Thread-Ebene erlangt werden, der erste Subgraph auf Thread-Ebene durch Aufteilen jedes der M ersten Knoten in mindestens einen ersten Kindknoten erlangt wird, der erste Subgraph auf Thread-Ebene N erste Kindknoten und gerichtete Kanten zwischen den N ersten Kindknoten umfasst und N eine positive ganze Zahl größer als oder gleich M ist.

9. Graphenkompilierungsvorrichtung, umfassend einen Prozessor, einen Speicher und ein oder mehrere Programme, wobei das eine oder die mehreren Programme in dem Speicher gespeichert sind und dazu konfiguriert sind, durch den Prozessor durchgeführt zu werden, und die Programme Anweisungen zum Durchführen von Schritten des Verfahrens nach einem der Ansprüche 1 bis 6 umfassen.

10. Graphenausführungsvorrichtung, umfassend einen Prozessor, einen Speicher und ein oder mehrere Programme, wobei das eine oder die mehreren Programme in dem Speicher gespeichert sind und dazu konfiguriert sind, durch den Prozessor durchgeführt zu werden, und die Programme Anweisungen zum Durchführen von Schritten des Verfahrens nach einem der Ansprüche 7 bis 8 umfassen.

11. Computerlesbares Speichermedium, wobei das computerlesbare Speichermedium ein Computerprogramm umfasst und, wenn das Computerprogramm auf einem Computer oder einem Prozessor ausgeführt wird, der Computer oder der Prozessor in die Lage versetzt wird, das Verfahren nach einem der Ansprüche 1 bis 6 oder der Ansprüche 7 bis 8 durchzuführen.

12. Computerprogrammprodukt, wobei das Computerprogrammprodukt ein Computerprogramm umfasst und, wenn des Computerprogramm auf einem Computer oder einem Prozessor ausgeführt wird, der Computer oder der Prozessor dazu in die Lage versetzt wird, das Verfahren nach einem der Ansprüche 1 bis 6 oder der Ansprüche 7 bis 8 durchzuführen.

**Revendications**

1. Procédé de compilation de sous-graphe, comprenant :

l'obtention (2601) d'un premier sous-graphe, dans lequel le premier sous-graphe est l'un quelconque d'une pluralité de sous-graphes obtenus en segmentant un graphe de calcul à l'aide d'une stratégie de segmentation, et le premier sous-graphe comprend une pluralité de premiers nœuds et des arêtes orientées entre la pluralité de premiers nœuds, dans lequel la stratégie de segmentation comprend : une stratégie basée sur des informations différentielles de forme d'arrangement de tenseur sur le sous-graphe, ou une stratégie qui utilise un algorithme de recherche automatique de réglage d'outil automatique, ou un modèle de réseau neuronal de génération de stratégie ; la reconstruction (2602) du premier sous-graphe pour obtenir un premier sous-graphe reconstruit, dans lequel le premier sous-graphe reconstruit comprend au moins un premier nœud reconstruit et des arêtes orientées entre l'au moins un premier nœud reconstruit, dans lequel la reconstruction du premier sous-graphe fait référence à l'utilisation d'au moins un premier nœud et des arêtes orientées entre l'au moins un premier nœud dans le premier sous-graphe comme nœud reconstruit ; et la compilation (2603) d'un premier nœud reconstruit cible, pour obtenir les données compilées du premier nœud reconstruit cible, dans lequel le premier nœud reconstruit cible est l'un quelconque de l'au moins un premier nœud reconstruit, le premier nœud reconstruit cible comprend M premiers nœuds dans la pluralité de premiers nœuds et des arêtes dirigées entre les M premiers nœuds, et M est un entier positif et M > 1 ; dans lequel les données compilées du premier nœud reconstruit cible comprennent les données compilées d'un premier objet, le premier objet est l'un des M premiers nœuds ou l'un des N premiers nœuds enfants, et les données compilées du premier objet comprennent au moins l'un des éléments suivants :

un emplacement de stockage, un cycle de vie, et des informations d'indication d'opération de gestion de cache de données d'entrée du premier objet, un emplacement de stockage, un cycle de vie, et des informations d'indication d'opération de gestion de cache de données de sortie du premier objet, une relation de dépendance du premier objet, et

un type d'un appareil de calcul destiné à exécuter le premier objet ; et

dans lequel les informations d'indication d'opération de gestion de cache des données d'entrée du premier objet indiquent au moins l'un des éléments suivants :

avant que le premier objet ne soit exécuté, l'écriture de données d'entrée cibles d'une mémoire vers un cache, dans lequel les données d'entrée du premier objet comprennent les données d'entrée cibles, et dans lequel les données d'entrée cibles ne sont pas des données de sortie d'un premier nœud dans le premier nœud reconstruit cible, ou les données d'entrée cible ne sont pas des données de sortie d'un premier nœud enfant dans le premier sous-graphe au niveau du fil ; et après que les données d'entrée cibles sont entrées dans un premier nœud dans le premier nœud reconstruit cible pour un premier nombre de fois prédéfini, ou après que les données d'entrée cibles sont entrées dans un premier nœud enfant dans le premier sousgraphe au niveau du fil pour le premier nombre de fois prédéfini, la suppression des données d'entrée cibles dans le cache.

2. Procédé selon la revendication 1, dans lequel la compilation d'un premier nœud reconstruit cible, pour obtenir les données compilées du premier nœud reconstruit cible, comprend :

la division de chacun des M premiers nœuds en au moins un premier nœud enfant, pour obtenir un premier sous-graphe au niveau du fil, dans lequel le premier sous-graphe au niveau du fil comprend N premiers nœuds enfants et des arêtes orientées entre les N premiers nœuds enfants, et N est un entier positif supérieur ou égal à M, dans lequel la division de chaque premier nœud en la pluralité de nœuds enfants est déterminée sur la base du fait de savoir si les données d'entrée du premier nœud peuvent être divisées en une pluralité d'éléments de sous-données d'entrée ; et

la compilation du premier sous-graphe au niveau du fil, pour obtenir les données compilées du premier nœud reconstruit cible.

3. Procédé selon la revendication 1 ou 2, dans lequel le premier objet est l'un des N premiers nœuds enfants, les données compilées du premier objet comprennent également un deuxième objet qui est exécuté simultanément avec le premier objet, le deuxième objet est l'un des N premiers nœuds enfants, et le deuxième objet et le premier objet sont obtenus en divisant un même premier nœud.

4. Procédé selon la revendication 1, dans lequel les informations d'indication d'opération de gestion de cache des données de sortie du premier objet indiquent au moins l'un des éléments suivants :

l'écriture des données de sortie du premier objet dans une mémoire ; après que les données de sortie du premier objet sont écrites dans la mémoire, la suppression des données de sortie du premier objet dans un cache ; et après que les données de sortie du premier objet sont entrées dans le premier nœud dans le premier nœud reconstruit cible pour un second nombre de fois prédéfini, ou après que les données de sortie du premier objet sont entrées dans le premier nœud enfant dans le premier sous-graphe au niveau du fil pour le second nombre de fois prédéfini, la suppression des données de sortie du premier objet dans le cache.

5. Procédé selon l'une quelconque des revendications 1 à 4, dans lequel la relation de dépendance du premier objet comprend une première relation de dépendance du premier objet, et la première relation de dépendance du premier objet représente une arête orientée entre le premier objet et un troisième objet ; et

si le premier objet est l'un des M premiers nœuds, le troisième objet est l'un des M premiers nœuds ; ou si le premier objet est l'un des N premiers nœuds enfants, le troisième objet est l'un des N premiers nœuds enfants, et le troisième objet et le premier objet sont obtenus en divisant différents premiers nœuds.

6. Procédé selon l'une quelconque des revendications 1 à 5, dans lequel les données de sortie du premier objet sont des données d'entrée d'un quatrième objet, le premier objet est exécuté par un premier appareil de calcul, le quatrième objet est exécuté par un second appareil de calcul, la relation de dépendance du premier objet comprend également une seconde relation de dépendance du premier objet, la seconde relation de dépendance du premier objet représente une arête orientée entre le premier objet et un premier nœud opérateur de communication, et les données de sortie du premier objet sont transmises par le premier nœud opérateur de communication du premier appareil de calcul au second appareil de calcul ; et

si le premier objet est l'un des M premiers nœuds, le quatrième objet est un premier nœud cible dans un second nœud reconstruit cible ; ou si le premier objet est l'un des N premiers nœuds enfants, le quatrième objet est un second nœud enfant dans un second sous-graphe au niveau du fil.

7. Procédé d'exécution de sous-graphe, comprenant :

l'obtention (2701) de données compilées d'un premier nœud reconstruit cible dans un premier sous-graphe reconstruit, dans lequel le premier sous-graphe reconstruit est obtenu en reconstruisant un premier sous-graphe, le premier sous-graphe comprend une pluralité de premiers nœuds et des arêtes orientées entre la pluralité de premiers nœuds, dans lequel la reconstruction du premier sous-graphe - fait référence à l'utilisation d'au moins un premier nœud et des arêtes orientées entre l'au moins un premier nœud dans le premier sous-graphe comme nœud reconstruit, et le premier sous-graphe est l'un quelconque d'une pluralité de sous-graphes obtenus en segmentant un graphe de calcul à l'aide d'une stratégie de segmentation,
dans lequel la stratégie de segmentation comprend : une stratégie basée sur des informations différentielles de forme d'arrangement de tenseur sur le sous-graphe, ou une stratégie qui utilise un algorithme de recherche automatique de réglage d'outil automatique, ou un modèle de réseau neuronal de génération de stratégie ; et le premier sous-graphe reconstruit comprend au moins un premier nœud reconstruit et des arêtes orientées entre l'au moins un premier nœud reconstruit, le premier nœud reconstruit cible est l'un quelconque de l'au moins un premier nœud reconstruit, le premier nœud reconstruit cible comprend M premiers nœuds dans la pluralité de premiers nœuds et des arêtes orientées entre les M premiers nœuds, et M est un entier positif et M > 1 ; et
l'exécution (2702) des données compilées du premier nœud reconstruit cible ;
dans lequel les données compilées du premier nœud reconstruit cible comprennent les données compilées des M premiers nœuds ou les données compilées des N premiers nœuds enfants ; et l'exécution des données compilées du premier nœud reconstruit cible comprend :

l'écriture de données compilées de R sixièmes objets dans un cache ; et

la réalisation des opérations suivantes pour chacun des R sixièmes objets, pour exécuter les données compilées du premier nœud reconstruit cible :

lorsqu'un nombre de huitièmes objets dont dépend un septième objet est de 0, la lecture de données compilées du septième objet à partir du cache, et l'exécution du septième objet sur la base des données compilées du septième objet, dans lequel le septième objet est l'un quelconque des R sixièmes objets ; et
si les R sixièmes objets sont les M premiers nœuds, le huitième objet est un nœud ; ou si les R sixièmes objets sont les N premiers nœuds enfants, le huitième objet est un nœud enfant.

8. Procédé selon la revendication 7, dans lequel les données compilées du premier nœud reconstruit cible sont obtenues en compilant un premier sous-graphe au niveau du fil, le premier sous-graphe au niveau du fil est obtenu en divisant chacun des M premiers nœuds en au moins un premier nœud enfant, le premier sous-graphe au niveau du fil comprend N premiers nœuds enfants et des arêtes orientées entre les N premiers nœuds enfants, et N est un entier positif supérieur ou égal à M.

9. Appareil de compilation de graphe, comprenant un processeur, une mémoire, et un ou plusieurs programmes, dans lequel les un ou plusieurs programmes sont stockés dans la mémoire et sont configurés pour être réalisés par le processeur, et les programmes comprennent des instructions pour la réalisation d'étapes dans le procédé selon l'une quelconque des revendications 1 à 6.

10. Appareil d'exécution de graphe, comprenant un processeur, une mémoire, et un ou plusieurs programmes, dans lequel les un ou plusieurs programmes sont stockés dans la mémoire et sont configurés pour être réalisés par le processeur, et les programmes comprennent des instructions pour la réalisation d'étapes dans le procédé selon l'une quelconque des revendications 7 et 8.

11. Support de stockage lisible par ordinateur, dans lequel le support de stockage lisible par ordinateur comprend un programme informatique, et lorsque le programme informatique fonctionne sur un ordinateur ou un processeur, l'ordinateur ou le processeur est activé pour réaliser le procédé selon l'une quelconque des revendications 1 à 6 ou des revendications 7 et 8.

**12.** Produit de programme informatique, dans lequel le produit de programme informatique comprend un programme informatique, et lorsque le programme informatique fonctionne sur un ordinateur ou un processeur, l'ordinateur ou le processeur est activé pour réaliser le procédé selon l'une quelconque des revendications 1 à 6 ou des revendications 7 et 8.

FIG. 1

Neural network model output by tensorflow/ pytorch/ onnx/or the like

**Graph compilation apparatus 100**

Parsing and conversion unit 101 → Graph optimization unit 102 → Subgraph segmentation unit 103 → Resource allocation unit 104 → Compilation unit 105

**Graph execution apparatus 200**

Scheduling unit 201 → Execution unit 202

FIG. 2

Subgraph        Reconstructed subgraph        Reconstructed subgraph

FIG. 3

TO FIG. 4B

FIG. 4A

FIG. 4B

EP 4 439 391 B1

AIC operator

AICPU operator

AIV operator

Communication operator

Control operator

Reconstructed node

Thread division

AIC operator 0

AICPU operator 0

AIV operator 0

Control operator 0

AIC operator 1

AICPU operator 1

AIV operator 1

Communication operator 1

Control operator 1

AIC operator 2

AIV operator 2

Communication operator 2

Control operator 2

Thread-level subgraph

FIG. 5

FIG. 6

FIG. 7

Optimization problem (optimization problems) → Space definition (space definition) → 

Expertise (expertise) ↓

Offline training phase (offline training phase)

Initial generative model (initial generative model) → Training (training) →

Training dataset (training dataset) ↓

Trained generative model (trained generative model) →

Online inference phase (online inference phase)

Strategy search inference (inference with beam search) → Optimal strategy (optimal strategy)

FIG. 8

Optimization on a reconstructed node or thread-level subgraph → Memory allocation on the reconstructed node or thread-level subgraph → Data life cycle identification on the reconstructed node or thread-level subgraph → Cache management operation setting

FIG. 9

Node 1 or child node 1

Prefetch (prefetch)

Reconstructed node or thread-level subgraph

Data 1

Node 2 or child node 2

Node 3 or child node 3

FIG. 10

FIG. 11

Reconstructed node or thread-level subgraph

Node 1 or child node 1

Data 1

Writeback (writeback)

Node 2 or child node 2

Node 3 or child node 3

FIG. 12

AIC operator

AICPU operator

AIV operator

Communication operator

Control operator

Reconstructed node

Compile

AIC task

AICPU task

AIV task

Communication task

Control task

FIG. 13

FIG. 14

EP 4 439 391 B1

pred_cnt=0
succ_list=AICPU1

AIC
operator 1

AIC
operator 2

pred_cnt=0
succ_list=AICPU1

AICPU
operator 1

pred_cnt=2
succ_list=AIV1

AIV
operator 1

pred_cnt=1
Succ_list=

FIG. 15

Reconstructed node

AIC
operator

AICPU
operator

AIV
operator

AIC
operator

AICPU
operator

AIV
operator

FIG. 16

FIG. 17

FIG. 18

EP 4 439 391 B1

FIG. 19

FIG. 20

Graph execution apparatus 200

Memory 204

Cache 203

Scheduling unit 201
⑤

Execution unit 202

①

②　　　　④

③

FIG. 21

A host side compiles a reconstructed node or thread-level subgraph

The host side writes compiled data of the reconstructed node or thread-level subgraph into a device side

The host side compiles a reconstructed node or thread-level subgraph

The host side writes compiled data of the reconstructed node or thread-level subgraph into the device side

Host (host)

Device (device)

The device side executes the reconstructed node or thread-level subgraph

The device side executes the reconstructed node or thread-level subgraph

FIG. 22

A host side
compiles a
reconstructed node
or thread-level
subgraph

The host side
compiles a
reconstructed node
or thread-level
subgraph

Host (host)

Device (device)

A device side reads
compiled data of
the reconstructed
node or thread-level
subgraph from the
host side

The device side
executes the
reconstructed
node or thread-
level subgraph

The device side
reads compiled data
of the reconstructed
node or thread-level
subgraph from the
host side

The device side
executes the
reconstructed
node or thread-
level subgraph

FIG. 23

Node 0 or
child node 0

pred_cnt=0
succ_list=[1, 2]

Node 1 or
child node 1

Node 2 or
child node 2

pred_cnt=1
succ_list=[]

pred_cnt=1
succ_list=[]

FIG. 24

```
┌─────────────┐
│   Data 0    │  cons_cnt=1
└─────────────┘
       │
       ▼
    ╱─────╲
   ╱ Node 1 ╲   pred_cnt=0
  │   or     │  succ_list=[2]
   ╲child node 1╱
    ╲─────╱
       │
       ▼
┌─────────────┐
│   Data 1    │  pred_cnt=1
└─────────────┘
```

FIG. 25

2601

Obtain a first subgraph, where the first subgraph is any one of a plurality of subgraphs obtained by segmenting a computation graph, and the first subgraph includes a plurality of first nodes and directed edges between the plurality of first nodes

2602

Reconstruct the first subgraph to obtain a first reconstructed subgraph, where the first reconstructed subgraph includes at least one first reconstructed node and directed edges between the at least one first reconstructed node

2603

Compile a first target reconstructed node, to obtain compiled data of the first target reconstructed node, where the first target reconstructed node is any one of the at least one first reconstructed node, the first target reconstructed node includes M first nodes in the plurality of first nodes and directed edges between the M first nodes, and M is a positive integer

FIG. 26

2701

Obtain compiled data of a first target reconstructed node in a first reconstructed subgraph, where the first reconstructed subgraph is obtained by reconstructing a first subgraph, the first subgraph includes a plurality of first nodes and directed edges between the plurality of first nodes, and the first subgraph is any one of a plurality of subgraphs obtained by segmenting a computation graph; and the first reconstructed subgraph includes at least one first reconstructed node and directed edges between the at least one first reconstructed node, the first target reconstructed node is any one of the at least one first reconstructed node, the first target reconstructed node includes M first nodes in the plurality of first nodes and directed edges between the M first nodes, and M is a positive integer

2702

Execute the compiled data of the first target reconstructed node

FIG. 27

2800

Subgraph compilation apparatus

Obtaining unit — 2801

Reconstruction unit — 2802

Compilation unit — 2803

FIG. 28

FIG. 29

FIG. 30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- DUET: A Compiler-Runtime Subgraph Scheduling Approach for Tensor Programs on a Coupled CPUGPU Architecture. **ZHANG MINJIA et al.** 2021 IEEE INTERNATIONAL PARALLEL AND DISTRIBUTED PROCESSING SYMPOSIUM (IPDPS). IEEE, 151-161

- **TIANQI CHEN et al.** *TVM: An Automated End-to-End Optimizing Compiler for Deep Learning*